(19) Europäisches Patentamt

European Patent Office

Office européen des brevets

(11) **EP 3 291 559 A1**

(12) **EUROPEAN PATENT APPLICATION**

(43) Date of publication:
07.03.2018 Bulletin 2018/10

(51) Int Cl.:
*H04N 19/593* $^{(2014.01)}$       *H04N 19/463* $^{(2014.01)}$
*H04N 19/132* $^{(2014.01)}$       *H04N 19/18* $^{(2014.01)}$
*H04N 19/645* $^{(2014.01)}$       *H04N 19/124* $^{(2014.01)}$
*H04N 19/194* $^{(2014.01)}$       *H04N 19/146* $^{(2014.01)}$
*H04N 19/184* $^{(2014.01)}$

(21) Application number: 16193869.1

(22) Date of filing: 14.10.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 29.08.2016  EP 16186193
08.09.2016  EP 16187941
23.09.2016  EP 16190496

(71) Applicant: **Fraunhofer-Gesellschaft zur Förderung
der
angewandten Forschung e.V.
80686 München (DE)**

(72) Inventors:
• **Keinert, Joachim**
**90425 Nürnberg (DE)**
• **Richter, Thomas**
**12209 Berlin (DE)**

• **Thoma, Herbert**
**91058 Erlangen (DE)**
• **Scherl, Christian**
**91080 Uttenreuth (DE)**
• **de Frutos López, Manuel**
**90409 Nürnberg (DE)**
• **Fößel, Siegfried**
**91054 Erlangen (DE)**
• **Heppner, Wolfgang**
**90402 Nürnberg (DE)**
• **Martinez Del Amor, Miguel Angel**
**90439 Nürnberg (DE)**
• **Wtjurin, Sergej**
**90762 Fürth (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(54) **ENCODER FOR ENCODING, AND DECODER FOR DECODING, A 2-DIMENSIONAL DIGITAL IMAGE REPRESENTATION INTO A DATA STREAM USING FURTHER ENCODING OF ONE OR MORE REMAINING BITS BELOW THE QUANTIZATION FACTOR**

(57)    An encoder for at least partially encoding a 2-dimensional digital image representation into a compressed data stream is shown. The encoder comprises a rate control unit configured to determine a difference between a bit budget used for differentially encoding groups of coefficients representing spatial components of the digital image representation and a maximum available bit budget to determine a remaining bit budget. Furthermore, a processor may be configured to generate, by encoding, the compressed data stream comprising differentially encoded groups of coefficients representing spatial components of the digital image representation. The processor may encode the compressed data stream above (or greater than) a quantization factor used to compress the groups of coefficients and, further, to encode one or more remaining bit below (or less than) the quantization factor according to the remaining bit budget and to reduce the remaining bit budget respectively.

EP 3 291 559 A1

40

2-dimensional
digital image

66

| spatial
transform
unit | 2-dimensional digital
image representation | processor | data stream |

44

42

46

50
(optional)

Fig. 8

**Description**

Specification

This disclosure relates to an encoder for at least partially encoding, and a decoder for at least partially decoding a 2-dimensional digital image representation into a data stream by signaling a stop of encoding/decoding if a predefined relevance threshold is reached. Further embodiments relate to a low complexity entropy coder for image/video coding.

Entropy coding for image or video coding can be performed efficiently by grouping a couple of coefficients, signaling their number of significant bit planes and transmitting these significant bit planes in a raw fashion. The efficiency for signaling the significant bit planes can be improved by predicting it from previous groups and encoding the resulting delta value with a variable length code. This disclosure describes several improvements to a (vertical) entropy coding scheme.

Compression of an image or a video sequence typically consists of a frequency transform, followed by quantization and entropy coding. In embedded entropy coding, quantization is performed during entropy coding. The chosen quantization level determines the generated file size and the visual image quality.

Traditional codecs like H264 or HEVC achieve very good compression ratios while preserving high image quality. However, they suffer from high computation complexity.

Low complexity image video coding is the challenge of achieving good compression efficiency while limiting the computation effort. Typically targeted compression ratios range between 1:2 and 1:6. Key requirements are:

- Simple implementation on FPGA, SW and GPU
- High throughput capability

As shown in multiple instances [1][2][3][4][5], entropy coding can be performed efficiently by grouping a couple of coefficients, signaling their number of significant bit planes, and transmit these significant bit planes in a raw fashion. The efficiency for signaling the significant bit planes can be improved by predicting it from previous groups, and encode the resulting delta value with a variable length code. In accordance with [1][2][3], this is called GCLI (Greatest Common Line Index) coding in the following.

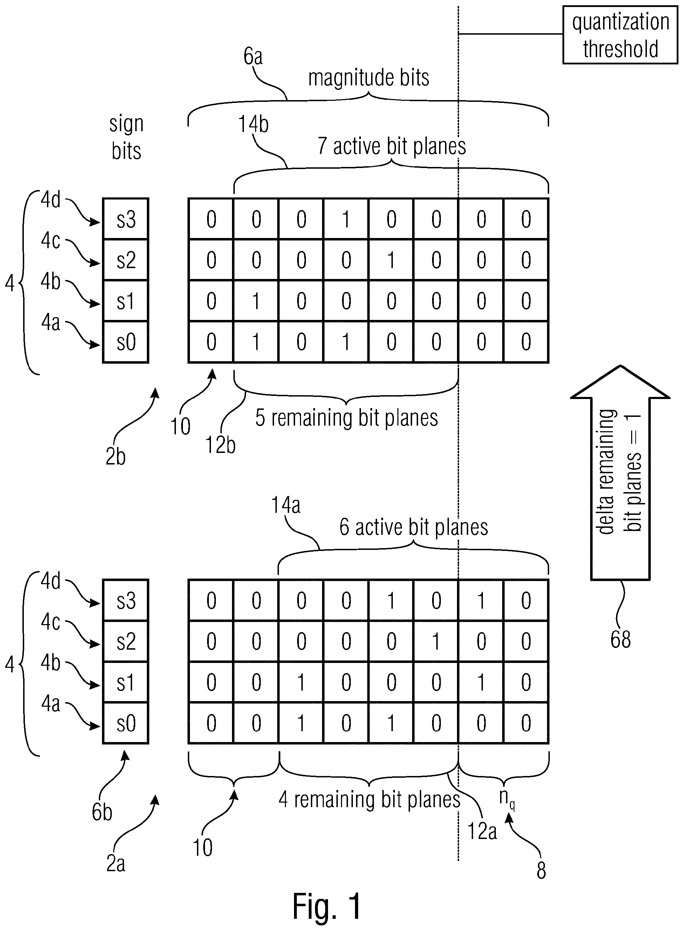

Fig. 1 illustrates the principle of the GCLI coding. A number of coefficients (being larger than one), belonging typically to the same subband of a frequency transform, are combined as a group. These coefficients are represented in sign-magnitude representation. The largest coefficient in the group determines the number of active bit planes.

For lossy encoding, some of the bit planes might be truncated. This corresponds to a quantization with a factor being a power of two. Once the quantization factor is known, the number of remaining bit planes can be computed.

These remaining bit planes are then transmitted as raw bits to the decoder. In order to enable correct decoding, the decoder needs to know the number of remaining/transmitted bit planes for every group of coefficients. Consequently, they need to be signaled to the decoder as well. This is done by a variable length code that represents the difference to the number of remaining bit planes of a previous coefficient group. This previous coefficient group can in principle be any coefficient group that the encoder has already encoded before. Hence, it can, for instance, be a horizontal or a vertical neighbor group.

However, this coding principle still uses a comparably high bandwidth due to a non-optimal signaling of the remaining bit planes.

Therefore, there is a need for an improved approach.

It is an object of the present invention to provide an improved concept for encoding and decoding a 2-dimensional digital image representation. This object is solved by the subject matter of the independent claims.

In the following, seven different concepts for improving the encoding and decoding of 2-dimensional digital image representations using GCLI coding are shown. Even though these concepts are described as distinct embodiments for improving the encoding and decoding principle, these concepts may individually improve the GCLI coding. Alternatively, any combination of the seven described concepts may be applied to GCLI coding to further improve the encoding/decoding efficiency, for example, in terms of a reduced bandwidth. A first concept shows an encoder for at least partially encoding a 2-dimensional digital image representation into a data stream. The 2-dimensional digital image representation comprises groups of coefficients representing spatial components of the digital image representation, each group comprising at least two coefficients of spatial components, wherein the groups are arranged in a 2-dimensional array. The encoder comprises a processor configured to generate the data stream using differential encoding in accordance with a relevance order of the groups. The processor may signal a stop of encoding if a predefined relevance threshold in the relevance order is reached.

A corresponding decoder is configured for at least partially decoding a data stream of a 2-dimensional digital image representation. The 2-dimensional digital image representation comprises groups of coefficients representing spatial components of the digital image representation, each group comprising at least two coefficients of spatial components, wherein the groups are arranged in a 2-dimensional array. The data stream may further comprise encoded values representing the respective groups. Moreover, the decoder may comprise a processor configured to decode the encoded values in accordance with a relevance order of the groups, wherein the decoder may apply zeroes until a predetermined size of the encoded 2-dimensional array is reached if a stop signal is obtained from the data stream.

The first concept is based on the finding that an improved coding order of groups of coefficients enables the encoder to differentiate between groups of coefficients and how to encode the groups efficiently. This may be transmitting raw bits for the coefficient values and further transmitting a difference between remaining bit planes of two consecutive groups of coefficients as in GCLI. However, the groups may comprise a relevance order. This is, for example, an order where coefficients (typically) comprise decreasing values or where an importance for recovering the actual encoded image decreases. This enables e.g. a priority encoding such that higher ranked coefficients (i.e. coefficients having a higher relevance) may be encoded e.g. with a higher precision. However, the relevance order may be an order that is derived from the actual image or an order that is obtained from general or typical relevance orders of coefficients within images.

Moreover, when encoding the groups of coefficients, at a certain threshold value, all remaining coefficient values may be equal to (or below) this threshold (e.g. zero) and thus become less important for the image quality after decoding and may be therefore omitted from explicit encoding. However, this threshold might also be zero, such that if all remaining groups of coefficients only comprise zero coefficients, i.e. coefficients having a value of zero, the encoder may signal the stop of encoding and actually stop encoding the respective groups of coefficients. Thus, by omitting transmission of raw bits for these zero coefficients, a bandwidth or a file size of the encoded 2-dimensional digital image representation is reduced. This may be performed independently from an encoding of the groups of coefficients in relevance order. However, combining both approaches increases the probability that many groups comprising only zero coefficients are encoded/decoded at the end of a block of coefficients and thus that many bit planes can be omitted from explicit encoding.

According to the second concept, a respective encoder is configured for at least partially encoding a digital image representation into a data stream. The encoder comprises a processor configured for processing groups of coefficients representing spatial components of the digital image representation. The processing performed by the processor may comprise a differential encoding of consecutive groups using an absolute difference of bits representing the coefficients of a first group of the consecutive groups and a second group of the consecutive groups, and a respective sign of the difference. Moreover, the encoder may be configured to form the data stream using the absolute difference of bits and configured to use, depending on the bits representing the coefficients of a first group of the consecutive groups at an absolute difference, the sign of the difference or to emit using the sign of the difference.

A respective decoder is configured for at least partially decoding a data stream of a digital image representation. The decoder may decode the data stream comprising encoded values representing differentially encoded groups of coefficients representing spatial components of the digital image representation, the encoded values comprising an absolute difference of consecutive groups of coefficients. The decoder may further comprise a processor configured to decode the encoded values and to obtain, depending on the number of bits representing the coefficients of a first group of the consecutive groups and the absolute difference, a sign of the difference from the data stream or to calculate the sign of the difference.

The second concept is based on the finding that in certain sequences of remaining bit planes of subsequent groups of coefficients, the remaining bit planes may be described only using the absolute difference and thus omitting to encode the sign of the difference.

As one example among multiple examples, it should be pointed out the case where the first of two consecutive groups comprises only zero coefficients, such that it is obvious for the decoder that a difference between the first and the second of the consecutive groups should be positive if the number of remaining bit planes changes from zero to a non-zero value. In this case, the encoder does not need (or omits) to encode the respective sign of the absolute difference which additionally saves space/bandwidth in the resulting data stream.

The third concept shows an encoder for at least partially encoding a digital image representation into a data stream of data words. The encoder comprises a processor configured for processing groups of coefficients representing spatial components of the digital image representation. The processing of the processor may comprise a differential encoding of consecutive groups using an absolute difference of bit planes representing the number of informative bit planes of the coefficients of a first group to a second group of the consecutive groups. The encoder may further be configured to form the data stream using the processed groups of coefficients using a first encoding algorithm if a value of respective absolute difference is below a predetermined threshold value and, if the value is above the predetermined threshold value, to perform a different encoding with a second encoding algorithm different from the first encoding algorithm to reduce the number of bits of a data word used to represent the absolute difference of the first group and the second group.

A respective decoder may be configured for at least partially decoding a data stream of data words of a digital image representation. The data stream may comprise values representing groups of coefficients representing spatial components of the digital image representation, wherein consecutive groups are differentially encoded using an absolute difference of bit planes representing the number of remaining bit planes of coefficients of a first group to a second group of the consecutive groups. Moreover, the decoder may comprise a processor configured for decoding the data stream using a first decoding algorithm if a value of a respective absolute difference is below a predetermined threshold value and, if the value is above the predetermined threshold value, to perform a different decoding with a second decoding algorithm different from the first decoding algorithm.

The third concept is based on the finding that a bandwidth/a size of an encoded delta value i.e. differentially encoded number of remaining bit planes may be reduced by applying different coding algorithms to encode the delta value and thus. Due to the different encoding schemes, a size of a code word of the encoded difference may be reduced and, more specifically, limited to a maximum code word size. Thus, at least an average size of a code word that is below a typical average code word size may be obtained. Possible encoding algorithms may be clipping, a non-linear quantization of the delta value or a special encoding algorithm such as Golomb codes or Huffman codes limiting the code word size of the difference of remaining bit planes between two consecutive groups.

According to a fourth concept, an encoder may be configured for at least partially encoding a digital image representation into a data stream. The encoder may comprise a processor configured for processing groups of coefficients representing spatial components of the digital image representation, each group comprising at least two coefficients of spatial components, wherein the processing comprises quantizing the groups. The encoder may be configured to form the data stream using, for at least one group, a number of uncompressed bit planes different from the zero bit planes and a quantization threshold. Furthermore, the data stream comprises for each group a value indicating a number of leading zero bit planes. The quantization threshold may be applied once for multiple groups, for example in a sequence header or a workgroup header or, the quantization threshold may be signaled and applied independently for each group, such that each group comprises the quantization threshold.

A respective decoder may be configured for at least partially decoding a data stream of a digital image representation. The data stream may comprise encoded values representing the processed groups, an encoded quantization level and at least one group comprising a number of uncompressed bit planes different from the zero bit planes. Furthermore, the data stream may comprise, for each group, a number of differently encoded leading zero bit planes. Therefore, the decoder may comprise a processor configured to decode the encoded values of the number of leading zero bit planes and the encoded quantization threshold to obtain the digital image representation.

The fourth concept is based on the finding that it is possible to use an alternative signaling principle when compared to the use of remaining bit planes between consecutive groups of coefficients. Instead of signaling the remaining bit planes, the difference of zero bit planes may be differentially encoded between two consecutive groups. The zero bit planes may be counted starting from the position of the most significant bit of the respective coefficients of a group. Thus, these zero bit planes may also be referred to as leading zero bit planes. This approach refers to an alternative signaling of an actual size (or length or a number of bits) of the coefficients to be decoded when compared to the signaling of remaining bit planes. Due to this alternative signaling principle, the delta values, i.e. the difference of the number of leading zero bit planes from on one group to a consecutively encoded/decoded group of coefficients show a reduced influence to a change of the quantization threshold when compared to signaling a delta value of remaining bit planes. In other words, the number of leading zero bit planes (and therefore the number of remaining bit planes if the quantization is constant) show a moderate variation within an encoded video data stream such that it is likely that there is no change in the number of leading zero bit planes in consecutive groups of coefficients. However, if the quantization factor changes, the number or remaining bit planes is changed wherein the number of leading zero bit planes remains constant. Thus, the delta values are less strongly influenced by a change of the quantization factor if the difference of the number of leading zero bit planes is encoded when compared to the encoding of the number of remaining bit planes. This simplifies the rate control of the data stream.

The fifth concept proposes an encoder for at least partially encoding a digital image representation into a data stream. The encoder comprises a rate control unit configured to determine an available bit budget in the data stream. Moreover, the encoder may comprise a processor configured for processing groups of coefficients representing spatial components of the digital image representation depending on the available bit budget. Thus, each group may comprise at least two coefficients of spatial components, wherein the processing comprises identifying a first predefined bit pattern and a second predefined bit pattern within the groups of coefficients. The processor may be configured to process the first and the second predetermined bit pattern using replacing one bit in the first predefined bit pattern and in the second predefined bit pattern. The encoder may be configured to generate the data stream using the processed groups, wherein this usage comprises including the second bit pattern to the data stream to indicate additional information and wherein the encoder is configured to reduce the available bit budget if the first bit pattern or the second bit pattern is included.

Moreover, a respective decoder for at least partially decoding a data stream of a digital image representation is shown. Herein, the data stream may comprise encoded values of groups of coefficients representing spatial components of the digital image representation, each group comprising at least two coefficients of spatial components. A first predefined bit pattern and a second predefined bit pattern within the groups of coefficients comprise a processing during encoding by replacing one bit in the predefined bit pattern and the second predefined bit pattern. The decoder comprises a bit budget determiner configured to determine a remaining bit budget available in the data stream by omitting to count the second predefined bit pattern. The decoder is further configured to decode the decoded values and the extract additional information from the predefined bit pattern. Therefore, the decoder may, in the absence of specific signaling, be able to determine both additionally added bit planes, if, for example, a size of a workgroup allows encoded complete bit planes for single coefficients and additionally, to determine the additional information indicated by the predefined bit pattern.

The fifth concept is based on the finding that it is possible to encode additional information into the data stream by omitting to affect any further processing of the data stream. In other words, no further signaling needs to be performed when providing the additional information in the bit stream to enable the decoder to decode this additional information. Therefore, the original data stream should be processes such that a certain sequence of bits is removed from the encoded digital image representation in a way that the decoder is able to reverse this operation to obtain this sequence of bits from the encoded digital image representation. However, after encoding, the data stream comprises this sequence of bits only when signaling the additional information. The decoder may obtain this information from the data stream and cancels this sequence of bits such that the decoding of the encoded digital image representation is not affected. The additional information may, for example, be used to indicate a synchronization point within parallel encoded data streams. This may be advantageous, for example, when having stereo images or frames of a 3-D picture or sequence of pictures. A further usage of this further information is described with respect to the fifth concept in the following.

The sixth concept reveals an encoder for at least partially encoding a 2-dimensional digital image representation into a compressed data stream. The encoder comprises a rate control unit configured to determine a difference between a bit budget used for differentially encoding groups of coefficients representing spatial components of the digital image representation and a maximum available bit budget to determine a remaining bit budget. Furthermore, a processor may be configured to generate, by encoding, the compressed data stream comprising differentially encoded groups of coefficients representing spatial components of the digital image representation. The processor may encode the compressed data stream above (or greater than) a quantization factor used to compress the groups of coefficients and, further, to encode one or more remaining bit below (or less than) the quantization factor according to the remaining bit budget and to reduce the remaining bit budget respectively.

A respective decoder for at least partially decoding a 2-dimensional digital image representation from a compressed data stream may comprise a processor configured to generate, by decoding, the 2-dimensional digital image representation from the compressed data stream. The data stream may comprise values representing differentially encoded groups of coefficients representing spatial components of a digital image representation. Therefore, the processor may decode the compressed data stream above (or greater than) a quantization factor used to compress the coefficients. The decoder may further comprise a bit budget determiner configured to determine a difference between a bit budget used for differential encoding and a maximum available bit budget to determine a remaining bit budget equal to a bit budget used in the compressed data stream filled with encoded remaining bits below (or less than) the quantization factor. A valid decoder may further decode, depending on the remaining bit budget, the encoded remaining bits below the quantization factor and optionally the encoded remaining bit planes.

The sixth concept is based on the finding that a refinement of specific coefficients of the groups of coefficients may be performed without, or in absence of, a specific signaling of the actual refinement. This is possible, since both, the encoder and the decoder may be able to determine a bit budget that is used for typical encoding such as GCLI encoding and a maximum allowed size of a respective part of the image to be coherently encoded such as a block, workgroup or a slice of an image. Furthermore, the encoder and the decoder may determine a size of an additional bit plane for a first non-refined group of coefficients. If there are still remaining bits between the maximum allowed number of bits and the number of bits used to encode a further bit plane of one of the non-refined groups in addition to the already used bit budget, this bit plane is added by the encoder. Correspondingly the decoder knows that the respective bit plane is part of the data stream and thus adapts the decoding of the data stream accordingly.

The seventh concept relates to an encoder for at least partially encoding a digital image representation into a data stream. The encoder may comprise a processor for encoding groups of coefficients representing spatial components of the digital image representation. Furthermore, the processor may form the data stream using the encoded groups of coefficients wherein, if a coefficient is zero, the processor is configured to omit a respective sign information from encoding and to apply, for each omitted reference sign, additional information to a different coefficient.

A respective decoder may be configured for at least partially decoding a digital image representation from a data stream. The data stream may comprise encoded values representing encoded groups of coefficients representing spatial components of the digital image representation. Furthermore, the decoder comprises a processor configured to decode the encoded value representing a group of coefficients. The processor may further determine: if any of the coefficients are zero; additional information from the data stream for a different coefficient; and to omit encoding a sign bit for the zero coefficient.

The seventh concept is based on the finding that it is possible to enhance the information content of the data stream by maintaining a bandwidth or a size of single coefficients in the data stream. This may be performed on coefficient level, where bits carrying not information are omitted from being encoded and thus replaced by a bit increasing the information of one coefficient e.g. in the same group of coefficients. In other words, for example, if one coefficient in a group of coefficients is zero, an encoded sign bit uses bandwidth in the data stream in the absence of providing any further additional information. Thus, this sign bit may be omitted from encoding and used instead for reducing the quantization level of one of the remaining coefficients in the same group of coefficients. Thus, this bit does provide further information to the data stream. A respective signaling from the encoder to the decoder may be omitted if a certain scheme is known to the encoder and the decoder, where to apply the further information bit if at least one of the coefficients of a group is zero.

All of the described concepts and the respective embodiments of each concept may be seen individually or in combination.

Before embodiments are described in detail using the accompanying figures, it should be pointed out that the same or functionally equal elements are given the same reference numbers in the figures and that repeated descriptions for elements provided with the same reference number is omitted. Hence, descriptions provided for elements having the same reference numbers are mutually exchangeable, even across the different concepts.

Embodiments of the present invention will be discussed subsequently referring to the enclosed drawings, wherein:

Fig. 1 shows a schematic diagram indicating two groups of coefficients to describe the principle of GCLI coding;

Fig. 2 show a schematic 2-dimensional digital image subdivided into slice boundaries and frequency (or spatial) transform blocks;

Fig. 3 shows a schematic representation of a block or arrangement of transform coefficients;

Fig. 4 shows a schematic representation of a block of coefficient groups;

Fig. 5 shows a schematic representation of a workgroup consisting of two blocks of frequency or spatial coefficient groups;

Fig. 6 shows a schematic representation of a wavelet transform of an image;

Fig. 7 shows a schematic representation of a frequency transform block in case of a wavelet transform;

Fig. 8 shows a schematic block diagram of an encoder according to embodiments;

Fig. 9 shows a schematic representation of an intra-block prediction using zig-zag scanning;

Fig. 10 shows a schematic representation of an edge-aware intra block prediction;

Fig. 11 shows a schematic representation of a prediction order for wavelet blocks of coefficient groups;

Fig. 12 shows a schematic representation of a prediction scheme of a number of remaining bit planes for the right block of coefficient groups;

Fig. 13 shows a schematic block diagram of a decoder according to embodiments;

Fig. 14 shows a schematic representation of a data stream according to embodiments;

Fig. 15a shows a schematic block diagram of a method for encoding a 2-dimensional digital image representation into a data stream;

Fig. 15b shows a schematic block diagram of a method for encoding a 2-dimensional digital image representation into a data stream;

Fig. 16a shows a schematic block diagram of a method for decoding a 2-dimensional digital image representation from a data stream;

Fig. 16b shows a schematic block diagram of a method for decoding a 2-dimensional digital image representation from a data stream;

Fig. 17 shows a schematic table indicating an exemplary encoding of the delta values using unary coding;

Fig. 18 shows a table indicating possible values of delta depending on the value of $n_1$;

Fig. 19 shows a schematic block diagram of a data stream according to embodiments;

Fig. 20 shows a schematic block diagram of a method for encoding a digital image representation into a data stream;

Fig. 21 shows a schematic block diagram of a method for decoding a digital image representation from a data stream;

Fig. 22 show a schematic table indicating a maximum variable length code word size (for $\varepsilon = 0$);

Fig. 23 shows a schematic diagram of a principle of coarse jumps;

Fig. 24 indicates a schematic block diagram of a data stream according to embodiments;

Fig. 25 shows a schematic block diagram of a method for encoding a digital image representation into a data stream;

Fig. 26 shows a schematic block diagram of a method for decoding a digital image representation from a data stream;

Fig. 27 shows a schematic table indicating the encoding schemes delta encoding the remaining bit planes or delta encoding the number of leading zero bit planes;

Fig. 28 shows a schematic block diagram of a method for encoding a digital image representation into a data stream according to embodiments;

Fig. 29 shows a schematic block diagram of a method for decoding a digital image representation from a data stream according to embodiments;

Fig. 30 shows a schematic block diagram of the encoder according to embodiments indicating a data flow for coefficient encoding;

Fig. 31 shows a schematic block diagram of an encoder according to embodiments revealing an encoder concept for proper handling of bit stuffing for rate control;

Fig. 32 shows a schematic block diagram of a decoder according to embodiments indicating a decoder concept for proper handling of bit stuffing for rate control;

Fig. 33 shows a schematic block diagram of a method for encoding a digital image representation into a data stream according to embodiments;

Fig. 34 shows a schematic block diagram of a method for decoding a digital image representation from a data stream according to embodiments;

Fig. 35 shows a schematic block diagram of an encoder according to embodiments indicating an encoder architecture for refinement bits;

Fig. 36 shows a schematic block diagram of a decoder according to embodiments indicating a decoder architecture for refinement bits;

Fig. 37 shows a schematic block diagram of a method for encoding a digital image representation into a data stream according to embodiments;

Fig. 38 shows a schematic block diagram of a method for decoding a digital image representation from a data stream according to embodiments;

Fig. 39 shows a schematic block diagram of a barrel shifter in a decoder according to embodiments indicating a critical path extension due to conditional sign coding wherein the bits to decode next in the barrel shifter contain both value (0/1) and sign bits (+/-);

Fig. 40 shows a schematic barrel shifter of a decoder according to embodiments indicating a sign coding with reduced critical path;

Fig. 41 shows a schematic representation of a placement of refinement bits in a sign bit position;

Fig. 42 shows a schematic block diagram of a method for encoding a digital image representation into a data stream according to embodiments;

Fig. 43 shows a schematic block diagram of a method for decoding a digital image representation from a data stream according to embodiments.

In the following, embodiments of the disclosure will be described in further detail. Elements shown in the respective figures having the same or a similar functionality will have associated therewith the same reference signs.

General concept

When referring back to Fig. 1, the following will describe the idea of GCLI coding. Fig. 1 reveals two blocks 2a and 2b of four coefficients 4a, 4b, 4c and 4d. Furthermore, Fig. 1 shows an absolute value 6a and a sign of the absolute value 6b for each of the coefficients 4. It is assumed that the groups of coefficients 2a and 2b are consecutive groups. Consecutive groups may refer to groups of coefficients that depend on each other and/or are sequentially processed (i.e. encoded and/or decoded) or, in other words, two groups of coefficients that are not parallel processed. Thus, when encoding the coefficients in a data stream, the encoder may signal the actual encoding pattern, i.e. a number of bits used to represent one coefficient by indicating a quantization threshold 8 as, for example, a number of bits of coefficients that are cut off, for example, at the least significant positions of the bit sequence representing a coefficient. Due to the quantization threshold 8, an encoding using a lossy compression is achieved. The term quantization threshold and quantization factor are mutually applicable throughout this document indicating both a number of bit planes that is omitted from encoding due to quantization.
Furthermore, the encoder may signal a change or difference of a number of remaining bit planes 12a, 12b, also referred to as informative bit planes, between two consecutive groups of coefficients. The groups of coefficients may be directly consecutive, i.e. there is, in sequential processing, no further group of coefficients processed in between the consecutive groups of coefficients. Alternatively, if a processing order is known by the decoder, for example, by indicating the same in a certain header of the data stream or by applying a fixed pre-coded decoding sequence, any other relation between two groups of coefficients may be used. Examples are described with respect to the first concept. The remaining or informative bit planes may refer to those bit planes that remain after quantizing the least significant bits and by omitting to encode all zero bit planes 10 for all coefficients of a group.
A bit plane may refer, when bitwise-aligned as shown in Fig. 1, to one row of coefficients. In other words, the term bit plane may refer to a combination or a pool of bits of the same significance across a bit representation of the coefficients within the group of coefficients, wherein the combination comprises one bit from each coefficient of one group of coefficients. Thus, the absolute value of the coefficients shown in Fig. 1 reveals eight bit planes, one bit plane for each bit position of the coefficients. The quantization threshold $n_q$ 8 is set to two bit planes. Moreover, the group of coefficients 2a comprises two leading zero bit planes 10, such that four remaining or informative bit planes should be encoded (and respectively, decoded). The group of coefficients 2b comprises only one leading zero bit plane 10, such that five remaining bit planes are present. Hence, the difference (also referred to as delta value) of the remaining bit planes or the informative bit planes 12a, 12b from the first group of coefficients 2a to the second group of coefficients 2b, may be signaled by encoding a delta of 1 in a respective data stream.
Furthermore, this disclosure may refer to active bit planes. Active bit planes are those bit planes of a group of coefficients that remain after neglecting the leading zero bit planes 10 using, however, the bit planes 8 below the quantization threshold. Hence, group 2a reveals six active bit planes 14a wherein group 2b reveals seven active bit planes 14b.

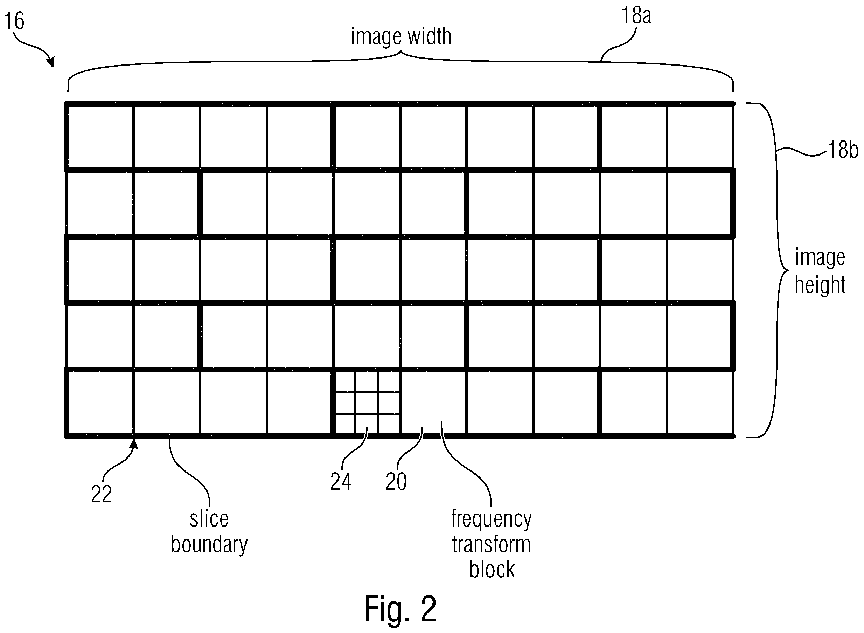

Fig. 1 shows examples of coefficients for base (or basis) functions of a spatial (or in embodiments frequency) transformation from a 2-dimensional digital image representation from a spatial domain into a frequency or wavelet domain. The terms spatial components or coefficients and frequency components or coefficients are mutually applicable throughout this disclosure as long as anything other is explicitly disclosed. Fig. 2 reveals a 2-dimensional digital image 16 in the spatial domain. The 2-dimensional digital image 16 may have a width 18a and a height 18b and may be further subdivided into frequency transform blocks 20. Multiple frequency transform blocks 20 form a slice 22 (Fig. 2 reveals four frequency transform blocks per slice) and each frequency transform block 20 may comprise multiple pixels 24 of the 2-dimensional digital image representation. Thus, for frequency transform of the 2-dimensional digital image representation, the frequency transform blocks 20 comprising of multiple (Fig. 2 exemplary reveals nine) pixels, thus obtaining, depending on the number of chosen basis functions, a respective number of coefficients, one coefficient for each chosen basis function. As a frequency transformation, a (2-dimensional) discrete cosine transform (DCT) may be chosen. However, other frequency/spatial transforms such as a wavelet transform, Hadamard transform, wavelet packet transform or any other suitable transform may also be used. In this case, the coefficients are wavelet coefficients.

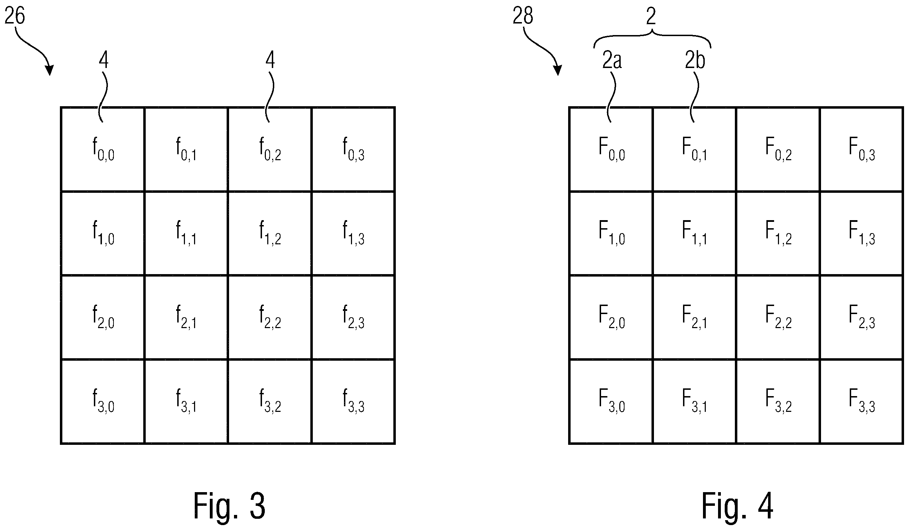

Fig. 3 shows the resulting arrangement 26 of coefficients of one frequency transform block 20 in a slice. Fig. 4 further reveals that, using multiple arrangements 26 of transform coefficients 4, for example, the coefficients 4 of all frequency transform blocks 20 in a slice 22, may be reordered in a way that the coefficients representing the same subband in each of the arrangements 26 of transform coefficients may be grouped in order to a block 28 of coefficients. When referring to Fig. 2, Fig. 3 and Fig. 4, the coefficients 4 $f_{0,0}$ ($f_{0,0}$ represents one subband) of each frequency transform block 20 in a slice boundary 22 are arranged into one group $F_{0,0}$ 2 in Fig. 4. Any of the respectively (subband-wise) grouped coefficients 4 form a block 28 of coefficient groups. The groups of coefficients 2a and 2b shown in Fig. 1 may therefore be short referenced by one of the boxes 2 in Fig. 4. Thus, coefficients 4 may be arranged in groups of coefficients 2. The groups of coefficients 2 may be further arranged in a block of coefficient groups 28.

In a further level of detail, the blocks 28 of groups of coefficients may be arranged in a workgroup 30 representing multiple blocks 28. For example, the quantization threshold 8, described with respect to Fig. 1, may be set once for the whole workgroup, for example, in a workgroup header. Thus, each group of coefficients 2 present in the workgroup 30 may be quantized or truncated using the same quantization threshold. The following chapters describe the organization of the coefficients in groups, blocks and workgroups in other words.

For efficient entropy coding, the output of the frequency transform is represented in blocks of coefficient groups $F_{i,j}$. Every item $F_{i,j} = (f_{i,j}^1, ...., f_{i,j}^g)$ groups $g$ coefficients of the same transform subband. Overall, the block consists of $b_h \cdot b_w$ coefficient groups, where $b_h$ is the block height, $b_w$ the block width. The result of block frequency transforms like the DCT, Hadamard or wavelet packet transform can be directly represented in form of blocks as depicted in Fig. 3. Each of the coefficients $f_{i,j}$ $0 \le i < b_h$, $0 \le j < b_w$ represents the amplitude of a transform base function. Consequently, from such a representation, a block of coefficient groups can be built by combining g transform blocks and grouping coefficients of the same frequency to a coefficient group:

$$F_{i,j} = (f_{i,j}^1, ...., f_{i,j}^g)$$

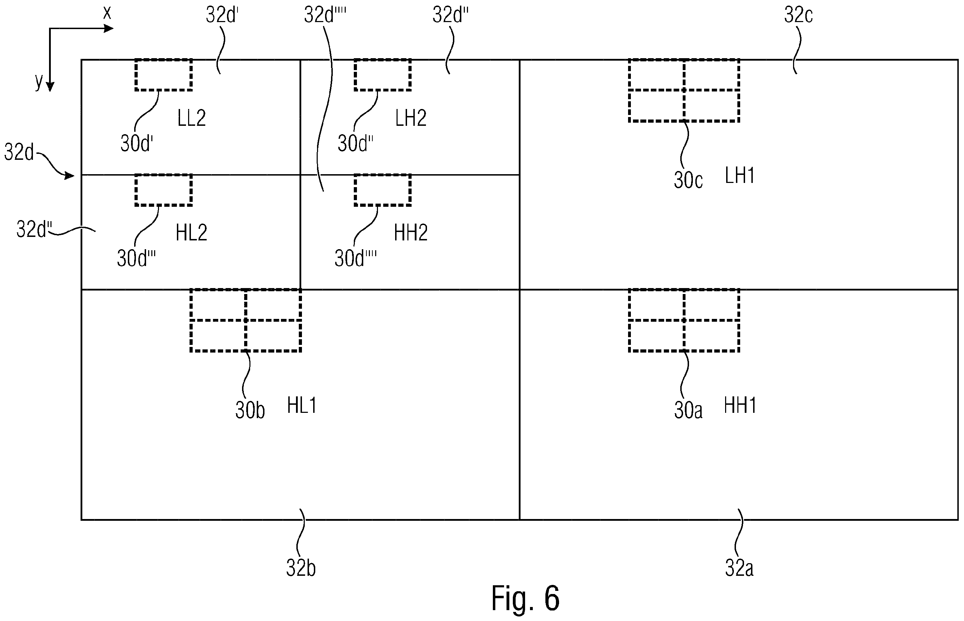

However, this principle may be further extended using (spatial) transform coding of the 2-dimensional digital image representation. An example of transform coding may be a wavelet transform. Using a wavelet transform, the 2-dimensional digital image representation is high-pass and low-pass filtered, at least once horizontally and in vertical direction of the 2-dimensional digital image. Fig. 6 gives an exemplary overview of a wavelet process 2-dimensional digital image. The wavelet transform of Fig. 6 may be a result of a section of an image having 4 x 4 pixels. These 4 x 4 pixels high-pass filtered in both x and y directions (corresponding to width and height, respectively) of the 2-dimensional digital image representation, leading to 2 x 2 equal to four coefficients 30a in area 32a, denoted as HH1. Accordingly, area 32b, denoted as HL1, comprises four coefficients 30b as a result from a low-pass filtering in x and high-pass filtering in y direction. Furthermore, area 32c comprises four coefficients 30c representing a low-pass filtered version of the 2-dimensional digital image representation in y direction and a high-pass representation in x direction. More generally, the denotation of the areas 32 may be abbreviated using ABm where A being one of H representing a high-pass filtering of the image in y direction or L representing a low-pass filtering in y direction. Accordingly, B may be one of H representing a high-pass filtering in x direction or L representing a low-pass filtering in x direction. $m$ may be any integer value representing the number of m-times filtering performed on the image.

Thus, the missing LL1 area may be further processed; i.e. using a second wavelet transform revealing the areas LL2 32d', LH2 32d", HL2 32d'" and HH2 32d"", each area having one remaining coefficient 30d', 30d", 30d'" and 30d"", respectively. Thus, each of the areas 32a, 32b, 32c, and 32d comprising the areas 32d' to 32d"", comprises four spatial coefficients 30.

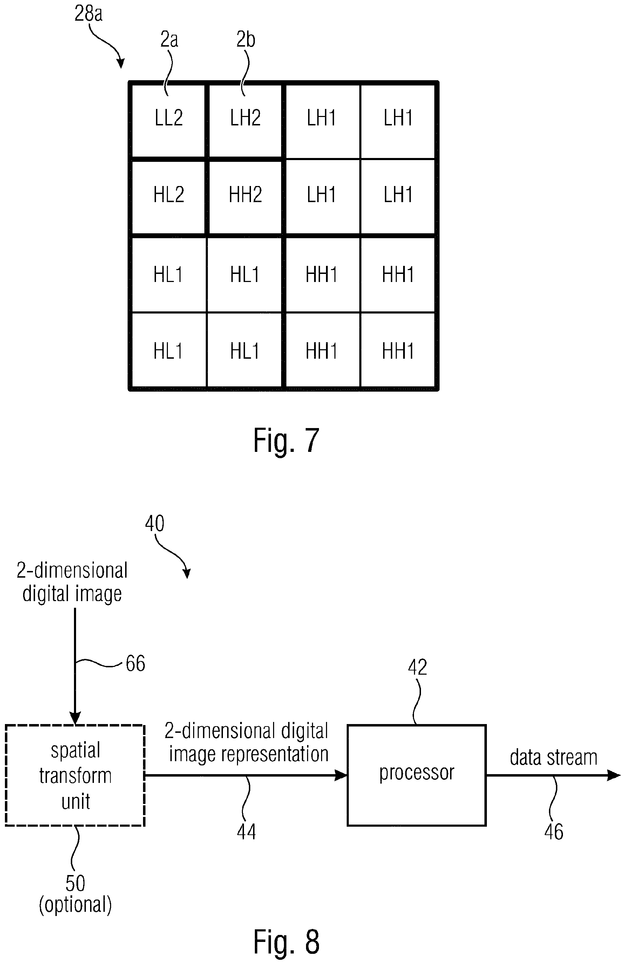

Fig. 7 shows the wavelet transform described with respect to Fig. 6 wherein, however, spatial coefficient 30d' of neighboring or adjacent frequency transform blocks are grouped into a group of coefficients 2a thus forming the block of coefficient groups 28. Accordingly, spatial coefficients 30d" of Fig. 6 of adjacent transform coefficients (Fig. 6 shows one transformed transform coefficient) may be grouped into group 2b representing LH2 coefficients of the adjacent transform blocks.

In other words, image and video compression typically applies a transform before running entropy coding. Reference [5], for instance, uses a block based prediction, while references [1][2][3][4] advocate for wavelet transforms. Such a wavelet transform is depicted in Fig. 6. It decomposes an image into a number of subbands. The LL2 subband represents a subsampled version of the image, while the other subbands contain the detail-information.

After the frequency transform, entropy coding is performed by applying the principles of GCLI coding to each subband individually. In other words, g > 1 coefficients of a subband ABm are formed into a coefficient group. Then the number of remaining bit planes is signaled, followed by the raw data bits. The number of remaining bit planes is signaled in the form of the difference to the number of remaining bit planes of a predecessor coefficient group situated in the same subband.

While a priori the subbands of Fig. 6 can be entropy coded independently from this each other, this is not advisable, since this ignores statistical dependencies between the subbands. The data organization presented in the next subsection aims to solve these deficiencies.

For wavelet-based transforms, the blocks of coefficient groups are slightly more difficult to form, since the subbands show different sizes. Consequently, there are more coefficient groups to encode for one subband than for another.

Fig. 7 illustrates a resulting block of coefficient groups for a two-level wavelet transform as shown in Fig. 6. Every dashed rectangle in Fig. 6 corresponds to a coefficient group $F_{i,j}$. While there is only one coefficient group for the LL2 subband, there are four coefficient groups for the LH1, HL1 and HH1 subbands.

Consequently, the areas covered by a block of coefficient groups differs for the individual subbands as depicted in Fig. 6 by the dashed rectangles.

In order to be able to decode the frequency coefficients, the decoder needs to know the number of truncated bit planes $n_q$. As will be described with respect to the second and the fourth concept, the quantization factor should be known before decoding the variable length code describing the number of remaining bit planes or zero bit planes when applying the improved alphabet described with respect to the second concept.

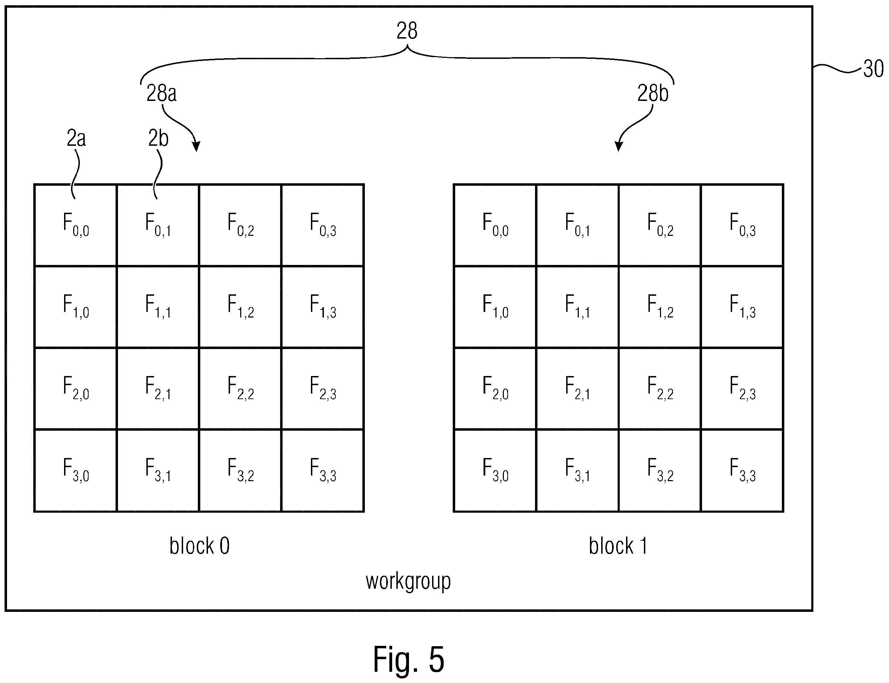

For signaling the quantization, *m* blocks of coefficient groups are combined to so-called workgroups as depicted in Fig. 5. For each such a workgroup, the quantization factor can be set individually in order to allow for high visual quality in images where highly textured image regions are next to flat image regions.

Given that a frequency transform will transform an 8 bit input image into 13 bit frequency coefficients (see description with respect to the third concept), signaling the quantization with a fixed length binary code would use 4 bits, which is already an overhead of 1.5% for a workgroup consisting of four 4x4 blocks and being encoded with 4 bits per pixel.

Consequently, quantization is better signaled by subtracting it from the quantization of the previous workgroup and using a variable length code similarly to the one used for signaling the number of remaining bit planes (see the second and the fourth concept).

Please note that this does not significantly impact a parallel implementation, because the beginnings of the different workgroups in the codestream should be searched in any case. In this process, the variable length code for quantization can be decoded.

Generally, the differential encoding using the GCLI coding comprises several options for improvements. Just as an example, in case all coefficients of a coding group are zero, it is obviously not necessary to send a sign bit for these coefficients. In case at least one remaining bit plane is transmitted, two different strategies for sign bit encoding can be chosen:

- Send sign bit for all coefficients of the group, whether they are zero or not;

- Send sign bits only for those coefficients whose transmitted magnitude bits are not zero.

The first option is simple to realize, but sacrifices coding efficiency. Thus, one of the goals of the following concepts describes a coding scheme that omits encoding a sign of the absolute difference of active bit planes between two consecutive groups of coefficients.

Concept 1

Fig. 8 shows an encoder 40 for at least partially encoding a 2-dimensional digital image representation 44 into a data stream 46 using a processor 42. The 2-dimensional digital image representation 44 comprises groups of coefficients representing spatial (or frequency) components of the digital image representation, each group comprising at least two coefficients of frequency components that may relate to spatial positions in the 2-dimensional digital image representation. Optionally, the groups of coefficients may be arranged in a 2-dimensional array. The at least partial encoding may refer to encoding only a part, such as slice, of the image. The 2-dimensional digital image representation may be a picture or a sequence of pictures such as a film or a video, where frames of the video may be referred to as the digital image representation. Examples of groups of coefficients have been described earlier with respect to the DCT transform or the wavelet transform. However, any other integral transform such as frequency or spatial transforms may also be used.

The processor 52 may generate the data stream using differential encoding in accordance with a relevance order of the group, wherein the processor is configured to signal a stop of encoding if a predefined relevance threshold in the relevance order is reached. Hence, an optional data stream 46 may have encoded the delta values of the remaining bit plains of consecutive groups of coefficients within, for example, a block or a workgroup and to further append the actual raw bits of the respective spatial components. The quantization threshold may be signaled individually for each group or commonly for each block or each workgroup.

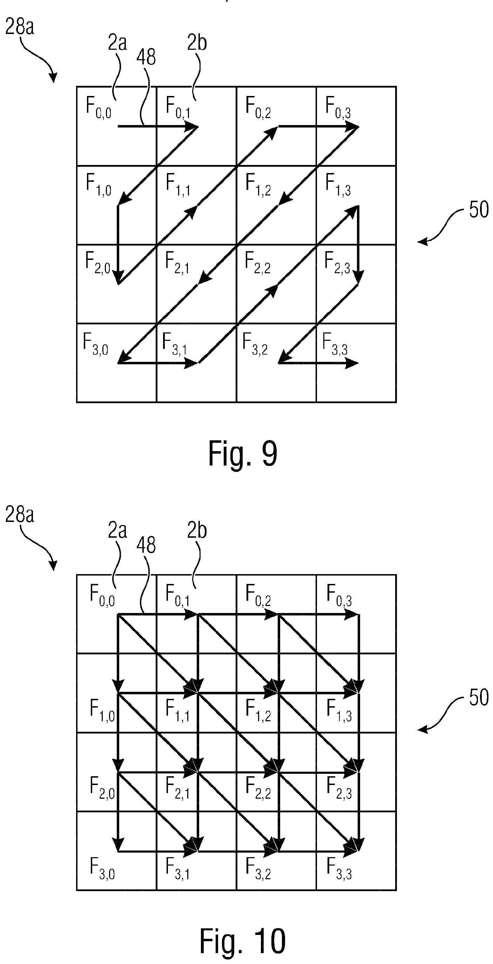

According to embodiments, assuming that the groups are arranged in the 2-dimensional array, the processor may perform at least one differential encoding using groups of coefficients from different rows and columns of the 2-dimensional array. Exemplary differential encoding schemes are described with respect to Figs. 9 to 13.

However, according to embodiments, instead of using the differential encoding in accordance with the relevance order of the groups in connection with the differential encoding using groups from different rows and columns of the 2-dimensional array, the processor 22 may be configured to generate the data stream performing the differential encoding using groups from differential rows and columns independently (only). In other words, by omitting to use the differential encoding in accordance with the relevance order of the groups, the processor may be configured to generate the data stream using differential encoding, wherein the processor is configured to perform at least one differential encoding using groups from different rows and different columns of the 2-dimensional array.

When performing the GCLI coding, the processor 42 may be configured to perform the differential encoding to indicate a difference of a number of informative bit planes of a group of coefficients with respect to a number of informative bit planes of a previously encoded group of the groups of coefficients. In this disclosure, the term "informative bit planes" and "remaining bit planes" are mutually exchangeable.

Prediction of remaining bit planes

For efficient entropy coding, the number of remaining bit planes shown in Fig. 1 is not directly (therefore indirectly) signaled as a fixed size binary number. Instead, for every coefficient group, the difference to a previously computed coefficient group is computed. The result of this operation is then represented by a variable length code as explained with respect to the second concept. In the following subsection, different prediction schemes are explained.

Predicting to a horizontally neighboring group

Let $\mathbb{F}_1 = \left[ F_{i,j}^1, 0 \leq i < b_h, 0 \leq j < b_w \right]$ and $\mathbb{F}_2 = \left[ F_{i,j}^2, 0 \leq i < b_h, 0 \leq j < b_w \right]$ be two blocks of coefficient groups that are horizontally situated next to each other (also referred to as consecutive or subsequent groups). Then, for encoding the number of remaining bit planes $r(\cdot)$ for the members of coefficient group $\mathbb{F}_2$, compute and signal

$$\delta = r\left( F_{i,j}^2 \right) - r\left( F_{i,j}^1 \right).$$

Predicting to a vertically neighboring group

Instead of predicting from a horizontally neighboring group, prediction can also be performed in vertical direction.

Prediction within a block of coefficient groups

The prediction schemes presented in the two preceding paragraphs only predict within the same subband. On the one hand, this is expected to deliver good image quality, since coefficients of the same subband should be similar. On the other hand, it limits parallel encoding and decoding due to the dependencies between blocks. Moreover, in case two neighboring blocks are very different, many bits need to be used to signal the number of remaining bit planes, leading to bad image quality.

This can be solved by predicting within a block of transform coefficients. To this end, prediction should be performed in such a way (using a certain prediction scheme) that coefficient groups are predicted from similar coefficient groups.

Fig. 9 shows such a prediction scheme. The number of remaining bit planes for coefficient group $F_{0,1}$ is predicted from coefficient group $F_{0,0}$. The number of remaining bit planes for coefficient group $F_{0,2}$ is predicted from coefficient group $F_{1,1}$.

In other words, an encoder and a respective decoder perform a prediction such as the differential encoding based on groups of coefficients covering the same subband for different parts, such as different transform blocks, of the image. As an example, the group of coefficients $F_{0,0}$ of a second block of coefficients is differentially encoded with respect to the group of coefficients $F_{0,0}$ of a first block of groups preceeding the second block. However, processing speed may be improved using intra-block prediction, for example, using the zig-zag scanning shown in Fig. 9. Intra-block prediction may refer to a differential encoding of groups of coefficients within one block of groups. Thus, the prediction may be performed on coefficients representing different spatial (or frequency) components of, for example, frequency transform blocks of the same slice of the image. This allows a parallel processing of blocks of groups of frequency components.

According to embodiments, the processor 42 may be configured to perform the differential encoding such that the differential encoding is performed only on neighboring groups of coefficients, wherein a neighboring group of coefficients is located in a horizontally, vertically or diagonally adjacent element of a 2-dimensional array. A sequential encoding order within the block 28 is indicated by arrows 48. Thus, Fig. 9 reveals an encoding/decoding scheme of the 2-dimensional array 50 where the differential encoding or the prediction is performed by diagonal groups of coefficients 2, as long as the coding path 48 reaches the border of the 2-dimensional array. In this case, the subsequent group along the border of the block of groups of coefficients is chosen as the next group of coefficients to be encoded.

Fig. 10 shows an alternative prediction scheme. In this case, the number of remaining bit planes for coefficient group $F_{0,j}$ is predicted from coefficient group $F_{0,j-1}$. Similarly, the number of remaining bit planes for coefficient group $F_{i,0}$ is predicted from coefficient group $F_{i-1,0}$. For the other coefficient groups, an edge aware median predictor can be used:

$$\delta = r(F_{i,j}) - \begin{cases} \min\left(r(F_{i,j-1}), r(F_{i-1,j})\right) & \text{if } r(F_{i-1,j-1}) \geq \max\left(r(F_{i,j-1}), r(F_{i-1,j})\right) \\ \max\left(r(F_{i,j-1}), r(F_{i-1,j})\right) & \text{if } r(F_{i-1,j-1}) \leq \min\left(r(F_{i,j-1}), r(F_{i-1,j})\right) \\ r(F_{i,j-1}) + r(F_{i-1,j}) - r(F_{i-1,j-1}) & \text{otherwise} \end{cases}$$

Thus, the processor may be configured to use the condition above to perform the differential encoding. With respect to the conditions, $\delta$ indicates the difference of the number of informative bit planes of the group of coefficients with respect to the number of informative bit planes of a previously encoded group of the groups of coefficients, $r(\ )$ indicates the number of informative bit planes of the group of coefficients and $F_{i,j}$ indicates the group of column i and row j in the 2-dimensional array.

More generally, the processor 42 may perform the differential encoding of two different groups of the groups of coefficients using the same previously encoded group of the groups of coefficients. In other words, a prediction scheme as, for example, described with respect to Fig. 10, where a prediction of one group of coefficients is performed based on a preceding group of coefficients, may be determined with respect to edges, i.e. large numbers of remaining bit planes. If a number of remaining bit planes of a diagonal preceding group of coefficients is larger than a number of remaining bit planes of a horizontal and vertical preceding group of coefficients, the preceding horizontal or vertical group of coefficients having the smallest number of remaining bit planes, indicates an edge towards the currently encoded or decoded group of coefficients $F_{i,j}$. The other way around, if the diagonal preceding group of coefficients is smaller than both, the horizontal and the vertical preceding group of coefficients, an edge may be directed to the currently encoded or decoded group of coefficients from the group of coefficients having the largest number of remaining bit planes. Otherwise, if no such edge is detected, a balanced value of the preceding vertical, horizontal and diagonal element is used to generate the delta value (i.e. the difference between the remaining bit planes between consecutive groups of coefficients). Thus, using this prediction scheme, the delta value may be indicated as the difference between the number of remaining bit planes of the current group of coefficients and the numbers of remaining bit planes of one of the previously described three possible groups of coefficients according to the described conditions.

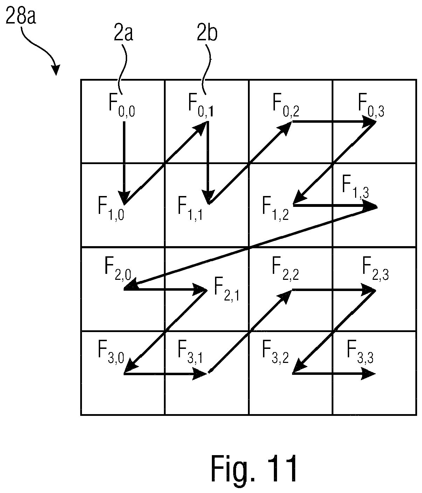

Fig. 11 shows a prediction scheme particularly suited for blocks of coefficient groups that are generated by a wavelet transform. The coding scheme or coding order 48 described with respect to Fig. 11, comprises a (zig-zag) scanning order such that corresponding areas of the block 28 are decoded in a row or subsequently by omitting to encode or decode one or more coefficients of other groups of coefficients. In other words, those groups of coefficients being filtered using the same high- or low-pass filtering may be sequentially encoded and decoded. Furthermore, those areas of the block 28 being processed using the same horizontal- and vertical-processing, comprise the same encoding and decoding order within the respective areas of the groups of coefficients.

Generally, the encoder 40 may further comprise a spatial transform unit 50 such as a wavelet calculator or a discrete cosine transform unit configured to, in order to perform the spatial coefficients, perform a wavelet transform or a discrete cosine transform on the 2-dimensional digital image representation such that the 2-dimensional array comprises a wavelet form and/referred to a structure of a block 28, for example, as described with respect to Fig. 4.

The respective wavelet form is described, for example, with respect to Fig. 7. In other words, the block 28 may comprise of groups of coefficients from different wavelet transform subbands with different decomposition levels. Thus, subbands being divided further than other subbands comprise of less coefficients when compared to the other subbands being subdivided less often. Thus, the areas of the image being processed, using the same high- or low-pass filtering in a horizontal and vertical direction, may be referred to as the same subband.

Mixed prediction schemes

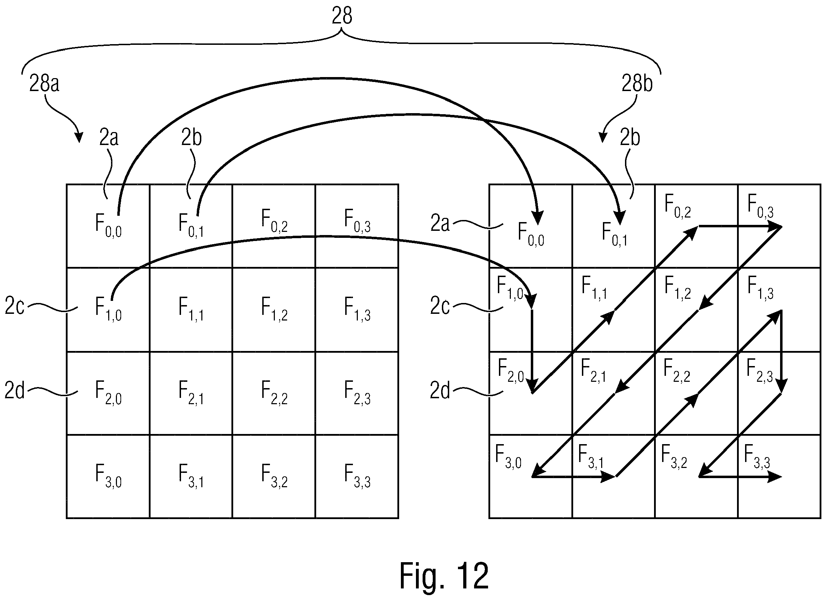

The mixed prediction scheme shown in Fig. 12 may be advantageous in a way that:

- The number of remaining bit planes is predicted for the coefficient group $F_{0,0}$;
- Due to the decaying nature of the frequency coefficient values, prediction within a block works better for the last couple of frequencies compared to the first frequencies.

Both issues can be addressed by mixed prediction schemes as illustrated in Fig. 12. The mixed prediction scheme in Fig. 12 combines both advantages.

The first couple of coefficient groups (Fig. 12 shows 3 coefficient groups as the first couple) are predicted from a horizontally or vertically neighboring block, while the others are predicted within a block of coefficient groups.

Thus, the encoder may be configured to encode the blocks 28 of the groups of coefficients.

Thus, the 2-dimensional digital image representation comprises at least a first and a second block of groups of coefficients, wherein the first and the second block comprises the groups of coefficients representing the same frequency components for different spatial areas or spatial positions of the 2-dimensional digital image (representation). Furthermore, the processor may be configured to encode a first group of coefficients 2a of the second block 28b using differential encoding with respect to a respective group 2a of coefficients of the first block 28a representing the same frequency components. The same may be performed with respect to a further group of coefficients $F_{1,0}$ 2c. Furthermore, the processor may encode a second group of coefficients 2d different from the first group of coefficients using differential encoding with respect to the group of coefficients 2c within the second block 28b. In other words, first or leading groups of coefficients may be encoded from a preceding block of groups of coefficients wherein further groups of coefficients may be encoded and decoded based on preceding groups of coefficients within the same block.

Due to quantization, it happens that many coefficient groups of a block are zero. This holds in particular for high frequency coefficients.

This can be exploited for improved compression by coding the frequencies in an optimized order, which in mean (or on average) ensures decaying coefficient amplitudes. A typical order is, for instance, the zig-zag order as illustrated in any of Figs. 9 to 12, wherein, to be precisely, Fig. 10 reveals the encoding/decoding scheme rather than the actual order since multiple orders depending on the actual values of the groups of coefficients are possible.

To this end, let's reorder the coefficient groups $F_{i,j}$ into a linear list of coefficient groups $F_k$, with $0 \leq k < k_{max}$ such that:

$$E\big(r(F_k)\big) \geq E\big(r(F_{k+1})\big).$$

$E(r(F_k))$ is the number of expected remaining bit planes for the coefficient group $F_k$. For encoding a block of coefficient groups, the encoder determines in a first step the smallest index $k_0$ such that all remaining coefficient groups are zero:

$$k_0 = min(\{k | \forall a \geq k : r(F_a) = 0\} \cup \{k_{max}\})$$

Please note that such an operation can be performed in hardware and in software by searching leading zeros in a binary number where each bit signals whether a coefficient group is zero or not.

Then all coefficient groups $F_k$ with $k < k_0$ are encoded as usual. However, when $k_0 < k_{max}$, the encoder signals a negative number of remaining bit planes for $F_{k_0}$, and then stops encoding the remaining coefficient groups. Typically, the value -1 is chosen as negative number.

By these means, the decoder can identify that all remaining coefficients are zero. Moreover, given that the number of remaining bit planes is signaled as a difference to previously coded coefficient group, signaling a negative number of remaining bit planes is possible with nearly no overhead.

Please note that when coefficient group $F_{k_0}$ is used as a basis to predict the number of remaining bit planes for another coefficient group, it may be advantageous to use $r(F_{k_0}) = 0$, despite a value of minus one has been signaled.

In other words, the processor may be configured to re-order the 2-dimensional array into a sequence of groups of coefficients wherein, due to the re-ordering, in the sequence of groups of coefficients, increasing (expected or actual) numbers of informative bit planes are statistically avoided and wherein the encoder is configured to generate the data stream using the re-ordered sequence of groups of coefficients. This re-ordering may be performed according to a typical or predetermined order of the groups of coefficients such that it is expected that the number of informative bit planes is avoided. However, a variable re-ordering may also be performed with an order of the variable re-ordering being signaled in the data stream and thus, a sequence of increasing actual numbers of informative bit planes may be derived. In this case, an index of the next encoded group may be signaled in the data stream, for example along with the delta values.

To perform the re-ordering, the processor may be configured to determine an index $k_0$ in the sequence of groups of coefficients where all remaining groups of coefficients comprise a value below the predefined threshold value and wherein the encoder is configured to generate the data stream using the sequence of groups of coefficients. According to an embodiment, the processor may use a predefined threshold value of zero such that the processor is configured to signal the stop of encoding if all remaining groups of coefficients to be encoded (i.e. at least one group of coefficients) comprises a value of zero after quantization.

Further embodiments relate to the actual encoding of the data stream, wherein the encoder indicates in the data stream that the encoder performed the stop of encoding. Hence, the processor may signal the stop of encoding by differentially encoding a difference from a preceding group to a current group leading to negative number of informative bit planes in the data stream for the current group of coefficients where the predefined relevance threshold is reached. Alternatively, the processor may signal the stop of encoding by differentially encoding a difference from a preceding group to a current group leading to a number of informative bit planes in the data stream greater than a possible number of informative bit planes for the current group of coefficients where the predefined relevance threshold is reached. In other words, the encoder and the decoder may determine the number of remaining bit planes from the last encoded/decoded group of coefficients and wherein the encoder may encode a delta value equal to the negative number of remaining bit planes of the respective previously encoded group minus one (or decreased by one). Thus, it is indicated for the following group to have a number of remaining bit planes of -1. However, the further group, i.e. the absolute values of the coefficients, may be omitted from encoding.

The same signalization is also possible by replacing the -1 bit planes of the further group of coefficients by a count of a number of remaining bit planes greater than a possible maximum number of remaining bit planes.

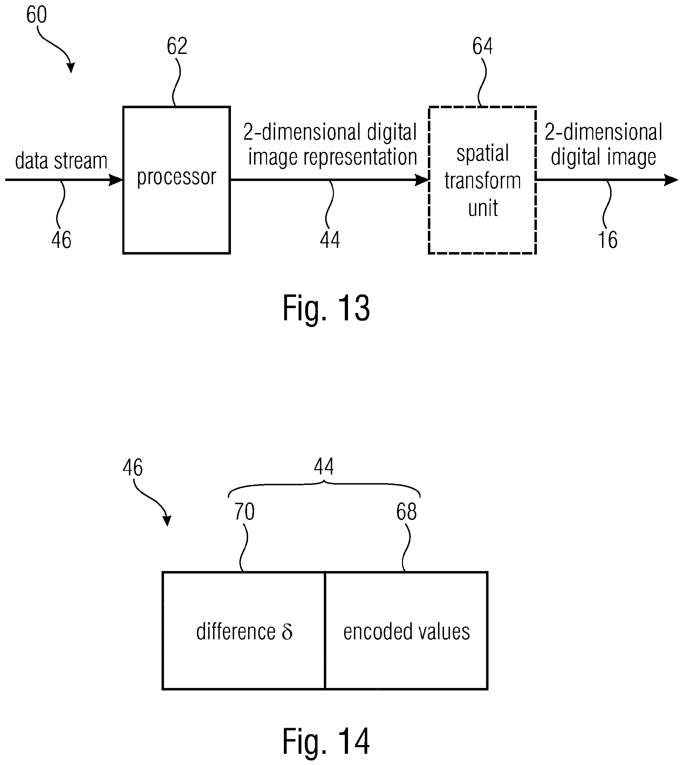

Recently the encoder of the first concept has been described. The respective decoder may perform the inverse operations to obtain the 2-dimensional digital image representation from the data stream. More specifically, Fig. 13 reveals such a decoder 60. Thus, the decoder may at least partially decode the data stream 46 of the 2-dimensional digital image representation 44 to obtain the 2-dimensional digital image representation 44. The 2-dimensional digital image representation may comprise groups of coefficients representing frequency components of the digital image representation. Each group comprises at least 2 coefficients of frequency components, wherein the groups relate to different spatial positions in the 2-dimensional digital image representation. Optionally, the groups may be arranged in a 2-dimensional array. The data stream 46 comprises encoded values representing the respective groups. The decoder 60 further comprises a processor 62 configured to decode the encoded values in the data stream 46 in accordance with a relevance order of the groups. Furthermore, the decoder is configured to apply zeroes until a predetermined size of the encoded 2-dimensional digital image representation is reached if a stop signal is obtained from the data stream.

According to embodiments, the decoder may know a predetermined size of the encoded 2-dimensional array instead of the size of the encoded 2-dimensional digital image representation. More specifically, assuming that slices of the 2-dimensional image are transformed and that coefficients of these slices are arranged in blocks of groups of coefficients, the decoder may determine, for example, based on the number of groups in the block and the number of spatial coefficients in each block, the number of remaining, i.e. non-decoded coefficients or groups of coefficients (in the block of coefficient groups) until the signal of a stop of encoding/decoding of the respective group is obtained. The decoder may further interpret the remaining non-decoded coefficients or groups of coefficients to be zero coefficients. Thus, due to the application/appending of zeroes in the decoded 2-dimensional digital image representation until a predetermined size of the encoded 2-dimensional digital image representation is reached, a respective size of a currently encoded block of groups of coefficients is obtained. Thus, the decoded 2-dimensional digital image representation with appended zeros (or zero coefficients) is equal to the encoded quantized 2-dimensional digital image representation.

According to embodiments, at least one value representing the respective groups is decoded using encoded values of groups from different rows and columns of the 2-dimensional array. However, in analogy to the encoder, the processor 62 may be configured to decode the encoded values, wherein at least one value is decoded using encoded values of groups from different rows and columns of the 2-dimensional array individually from the application of zeroes if a signal indicating the stop of encoding is obtained.

Further embodiments show the processor 62 configured to perform a differential encoding for obtaining a difference of a number of informative bit planes of a group of coefficients with respect to a number of informative bit planes of a previously encoded group of the groups of coefficients and to decode the group of coefficients using the obtained difference. According to further embodiments, the processor 62 may obtain the stop signal if the differential decoding, using a difference from a preceding group to a current group of coefficients, reveals a negative number of informative bit planes for a current group of coefficients where the predefined relevance threshold value is reached. Alternatively, the processor may obtain the stop signal if the differential decoding, using a difference from a preceding group to a current group, reveals a number of informative bit planes in the data stream greater than a possible number of informative bit planes for a current group of coefficients where the predefined relevance threshold value is reached.

The processor 62 may further identify a number of consecutive groups of coefficients where the predefined relevance threshold value is reached by decoding a further negative number depending on the number of consecutive groups of coefficients where the predefined relevance threshold value is reached. The further negative number is different from the signal indicating the stop of decoding. Thus, in addition to the signal of a stop of encoding, encoding and decoding to consecutive numbers of zero coefficients comprising at least on non-zero value as a subsequent coefficient may be omitted. For instance, a value of -2 may represent three consecutive zero coefficient groups. Regarding the processing order, further embodiments show the processor configured to perform the differential decoding such that the differential decoding reveals only neighboring groups of coefficients, wherein a neighboring group is located in a horizontally, vertically, or diagonally adjacent element of the 2-dimensional array. A further embodiment indicates that the processor performs a differential decoding of two different groups of the groups of coefficients using the same previously decoded group of the groups of coefficients. Furthermore, the processor may be configured to perform a differential decoding based on the conditions (dissolved with respect to $r(F_{i,j})$):

$$\delta = r(F_{i,j}) - \begin{cases} \min\left(r(F_{i,j-1}), r(F_{i-1,j})\right) & if\ r(F_{i-1,j-1}) \geq \max\left(r(F_{i,j-1}), r(F_{i-1,j})\right) \\ \max\left(r(F_{i,j-1}), r(F_{i-1,j})\right) & if\ r(F_{i-1,j-1}) \leq \min\left(r(F_{i,j-1}), r(F_{i-1,j})\right) \\ r(F_{i,j-1}) + r(F_{i-1,j}) - r(F_{i-1,j-1}) & otherwise \end{cases}$$

In this formula, $\delta$ indicates the difference of the number of informative bit planes of the group of coefficients with respect to the number of informative bit planes of a previously encoded group of the groups of coefficients, $r(\ )$ indicates the number of informative bit planes of the group of coefficients and $F_{i,j}$ indicates the group of column $i$ and row $j$ in the 2-dimensional array. More specifically, the decoder may obtain the group of coefficients for the respective delta value ($\delta$), based on the conditions as described with respect to the encoder.

According to embodiments, the 2-dimensional digital image representation comprises at least a first and second block of groups of coefficients, wherein the first and the second block of coefficients comprise the groups of coefficients representing the same frequency components for different spatial areas of the 2-dimensional digital image representation. The processor 62 may be configured to decode a first group of coefficients of the second block using differential decoding with respect to a respective group of coefficients of the first block representing the same spatial components.

According to embodiments, the processor 62 may obtain a sequence of groups of coefficients. The sequence omits increasing expected numbers of informative bit planes, wherein the processor is configured to re-order the sequence of groups of coefficients such that the 2-dimensional array is obtained. The order for the sequence of groups may be obtained from the data stream by the processor.

Furthermore, the decoder 60 may comprise a spatial transform unit 64 configured to arrange the decoded values representing the respective groups of coefficients into a wavelet form or a DCT form. As well, the spatial transform unit may, after decoding the data stream, transform the wavelet form or the DCT form (or a frequency transform form) of the groups of coefficients into the 2-dimensional digital image 16. The DCT form or more generally the frequency transform form may be referred to the arrangement of the coefficients as in Fig. 3 and Fig. 4. The wavelet form may be referred to the arrangement of the coefficients as in Fig. 6 and Fig. 7.

Fig. 14 shows a data stream 46 according to embodiments. The data stream may comprise an at least partially encoded 2-dimensional digital image representation 44, wherein the 2-dimensional digital image representation comprises groups of coefficients representing frequency components of the digital image representation. Each group comprises at least two coefficients of frequency components. The data stream comprises a difference of informative bit planes between a preceding group and a current group of coefficients resulting in a negative number for the number of informative bit planes for the current group. Alternatively, the difference 68 results in a number of informative bit planes greater than a maximum possible number of informative bit planes for the current group of coefficients. Additionally, the data stream 46 may comprise encoded values 70 representing the groups of coefficients. The encoded values 70 and the differences 68 may be ordered block-wise, such that the encoded values precede the differences or such that the differences precede the encoded values in the data stream. Alternatively, the encoded values 70 and the differences 68 of groups of coefficients for a current block may be mixed such that, for example, an alternating sequence of the differences 68 and the encoded values 70 is present in the data stream 46.

Reduction of necessary look-ahead by run-length encoding

The encoder/decoder and the respective methods described with respect to the first concept improves coding efficiency by sending a stop signal, when all remaining quantized coefficient groups are zero. However, for encoding a zero coefficient, the values of all remaining coefficient groups should be known.

In hardware, a corresponding look-ahead should be performed using a memory buffer. Fortunately, this buffer can be reduced in size by permitting a run length encoding using negative values for the number of remaining bit planes. As explained, the value of -1 is interpreted as a stop signal for the decoder. By sending a value of -2, the encoder can signal the decoder the existence of two consecutive zero coefficient groups. A value of -3 means the existence of three consecutive zero coefficient groups etc. Please note that another assignment between negative numbers and number of zero coefficients is possible as well.

By these means, the encoder only needs to look ahead one coefficient group. If the encoder finds a zero coefficient group and the next one is zero as well, it stops to output any code word for the decoder. When it arrives at a non-zero coefficient, it outputs the number of zero coefficient groups. Otherwise, if it arrives at the end of a block of coefficient groups, it sends the stop signal.

By looking ahead one symbol, the encoder needs to output at most one code word per coefficient group, which is very beneficial for efficient hardware implementations.

In other words, the processor 42 is further configured to indicate a number of consecutive groups of coefficients wherein the predefined relevance threshold is reached by encoding a further negative number depending on the number of executive groups of coefficients wherein the predefined relevance threshold value is reached. The further negative number is different from the signal indicating the stop of encoding. The relevance threshold indicates a value of a remaining bit plane (for example, 0) where, if all remaining coefficients or groups of coefficients are equal to or this threshold, the remaining coefficients or groups of coefficients are omitted from being explicitly encoded. Just as an example, a difference may be included between a preceding group and a consecutive group having only zeroes by encoding the number of remaining bit planes of the preceding group with a negative sign such that the resulting delta value indicates zero bit planes for the current group having only zero coefficients. Having a further group directly following the current group in encoding order, having only zero coefficients, instead of regularly encoding the current group of zero coefficients, a delta may be encoded such that the current group would have -2 remaining bit planes. The decoder may, since -2 remaining bit planes are not a regular value for GCLI coding, interpret the -2 remaining bit planes as two consecutive groups of coefficients having only zero coefficients. Thus, in other words, the decoder knows that the current group and the further group comprise only zero coefficients. Additionally, using this concept, the value of -1 remaining bit planes remains available for the case when all remaining groups of coefficients to be included in a block of groups of coefficients comprise only zero coefficients.

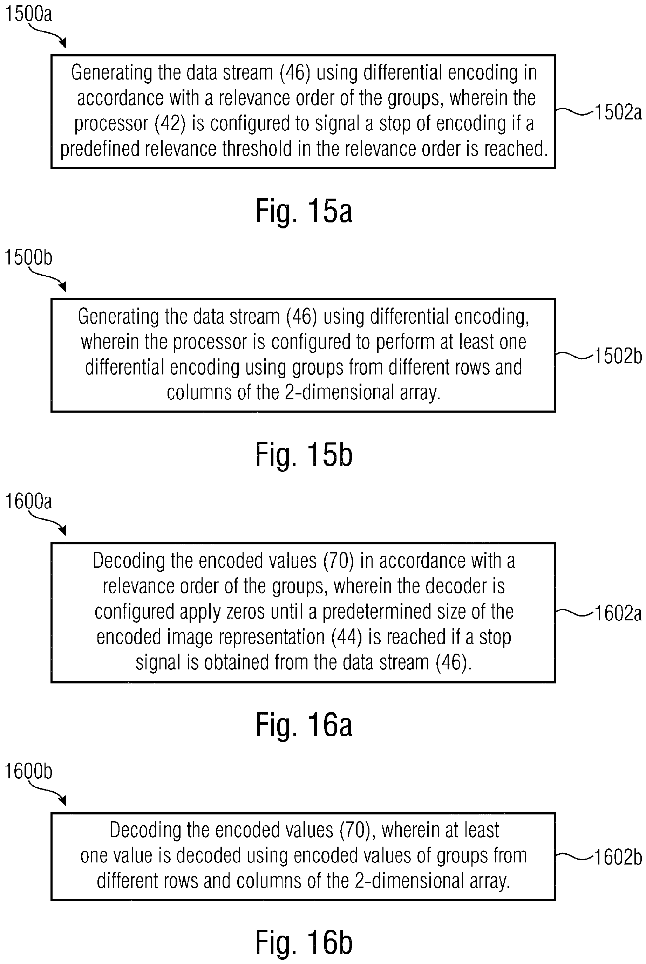

Fig. 15a shows a schematic block diagram of a method for at least partially encoding a 2-dimensional digital image representation into a data stream. The method 1500a comprises a step 1502a of generating the data stream 46 using differential encoding in accordance with a relevance order of the groups, wherein the processor 42 is configured to signal a stop of encoding if a predefined relevance threshold in the relevance order is reached.

Fig. 15b shows a schematic block diagram of a method for at least partially encoding a 2-dimensional digital image representation into a data stream. The method 1500b comprises a step 1502b of generating the data stream 46 using differential encoding, wherein the processor is configured to perform at least one differential encoding using groups from different rows and columns of the 2-dimensional array.

Fig. 16a shows a schematic block diagram of a method for at least partially decoding a digital image representation from a data stream. The method 1600a comprises a step 1602a of decoding the encoded values 70 in accordance with a relevance order of the groups, wherein the decoder is configured apply zeros until a predetermined size of the encoded image representation 44 is reached if a stop signal is obtained from the data stream 46.

Fig. 16b shows a schematic block diagram of a method for at least partially decoding a digital image representation from a data stream. The method 1600b comprises a step 1602b of decoding the encoded values 70, wherein at least one value is decoded using encoded values of groups from different rows and columns of the 2-dimensional array.

Concept 2

Fig. 8 and Fig. 13 show the encoder and the decoder, respectively. These figures may be used as a base encoder and decoder, respectively, for any of the seven described concepts. However, the processing or the actual implementation may change with respect to the first concept.

Thus, the second concept reveals an encoder 40 for at least partially encoding a digital image representation into a data stream. The encoder 40 comprises a processor 42. The processor is configured for processing groups of coefficients representing frequency components of the digital image representation, wherein the processing comprises a differential encoding of consecutive groups using an absolute difference of bits representing the coefficients of a first group of the consecutive groups and a second group of the consecutive groups, and optionally, a sign of the difference. Moreover, the encoder may form the data stream using the absolute difference of bits and may use, depending on the bits representing the coefficients of a first group of the consecutive groups ($n_1$) and the absolute difference, the sign of the difference or to omit using the sign of the difference. In other words, there are structures of consecutive groups of coefficients where the delta value representing the difference between the remaining bit planes should be positive or negative only. Thus, the respective decoder may, by analyzing the structure, be able to obtain the respective sign of the difference without an explicit signalization (or by omitting the signalization) in the data stream. Hence, both the encoder and the decoder may omit encoding and decoding the respective sign of the difference. To form the data stream, the encoder may use an optional encoding unit.

With respect to Fig. 13, the decoder (60) may at least partially decode the data stream 46 of the digital image representation 44. The data stream 46 comprises encoded values representing differentially encoded groups of coefficients representing spatial components of the digital image (or the digital representation). The data stream further comprises an absolute difference of consecutive groups of coefficients. The encoded values may comprise the absolute difference. However, it is still possible to use separate or distinct data words for encoding the absolute difference and the encoded values. Furthermore, the absolute difference may be encoded first in the data stream of, for example, a block of groups of coefficients followed by the encoded values, i.e. for example, a sequence of raw bits of the coefficients. The decoder 60 may further comprise the processor 62 configured to decode the encoded values in the data stream 46 and to obtain, depending on the number of bits ($n_1$) representing the coefficients of a first group of the consecutive groups and the absolute difference, a sign of the difference from the data stream or to calculate the sign of the difference. The calculation may be performed as described above.

Better alphabet for delta encoding of the number of active bit planes

Constant quantization

The coefficients to be entropy encoded are typically represented in sign-magnitude representation. Let $a$ be the quantized coefficient, then:

$$a = |a| \cdot sign(a)$$

Let $n_{max}$ be the maximum number of active bit planes required to represent the coefficient:

$$0 \leq |a| \leq 2^{n_{max}} - 1 < 2^{n_{max}}.$$

Let $n_q$ be the number of bit planes that are discarded due to quantization ($n_q = 0$ means no quantization). Consequently, for the quantized coefficient $q(a)$, the following holds:

$$0 \leq |q(a)| \leq 2^{n_{max} - n_q} - 1 < 2^{n_{max} - n_q}.$$

In order to ease the notation, $n = n_{max} - n_q$ is defined as the maximum number of active bit planes needed for a coefficient after quantization.

Then the delta value $\delta$ to encode the difference of active bit planes between two groups of coefficients can be characterized as follows, when ignoring for a moment the coding extensions described with respect to the first concept:

$$-n \leq \delta \leq n.$$

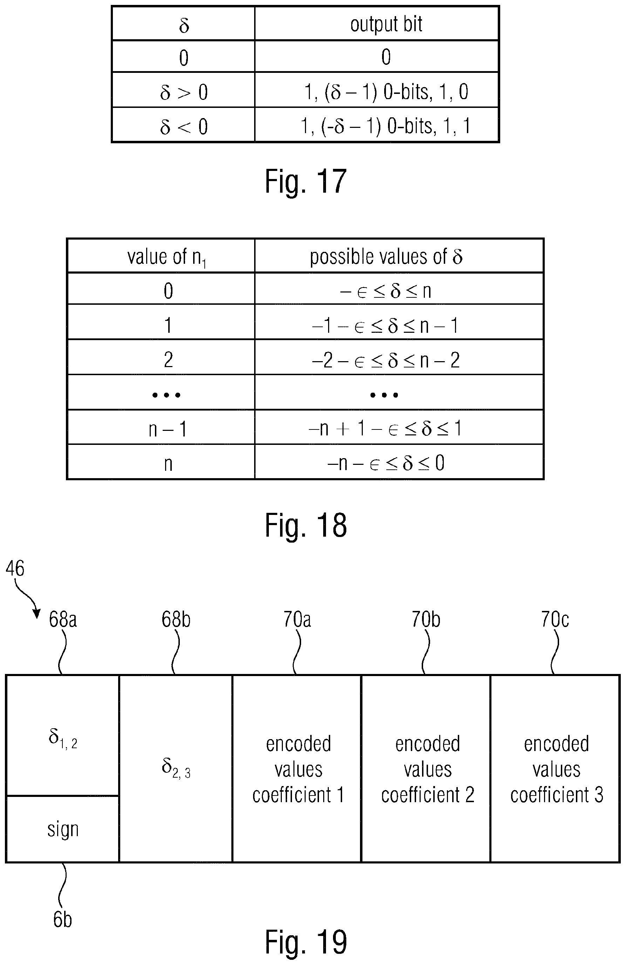

One coding possibility is shown in Fig. 17, where exemplary encoding of the $\delta$ values using unary coding is shown. In this coding scheme, the last bit corresponds to the sign of $\delta$.

The efficiency of this coding scheme can be improved by considering the dependencies between the values used for prediction. To this end, let $n_1$ be the number of remaining bit planes of a first coefficient group, and let $n_2$ be the number of remaining bit planes of a second coefficient group, and let $\delta = n_2 - n_1$. In other words, the first coefficient group serves as a reference for the second coefficient group. Consequently, it is assumed that $n_1$ is known by the decoder at the time when it decodes $\delta$ with the goal to determine the value of $n_2$.

The value of $n_1$ is bounded by:

$$0 \leq n_1 \leq n.$$

In case the coding extension using to signal a stop of encoding/decoding described with respect to the first concept, $n_2$ can be characterized by:

$$-1 \leq n_2 \leq n.$$

In case the coding extension using to signal a number of consecutive coefficients described with respect to the first concept, $n_2$ can be characterized by:

$$-P \leq n_2 \leq n_,.$$

With $P$ being the number of coefficient groups within a block of coefficient groups or the minimum negative number used to signal a run of groups of zero coefficients.

Otherwise:

$$0 \leq n_2 \leq n.$$

From the definition of $\delta$ and as shown in Fig. 18, it follows that:

$$-n_1 - \epsilon \leq \delta \leq n - n_1$$

With $\epsilon = 1$, when using the coding extension with signaling a stop of encoding/decoding described with respect to the first concept, with $\epsilon = P$, when using the coding extension from with signaling a number of consecutive coefficients described with respect to the first concept, otherwise $\epsilon = 0$.

Hence, despite $-n - \epsilon \leq \delta \leq n$, only $n + \epsilon + 1$ values are actually possible depending on the value of $n_1$. Fig. 18 shows possible values of $\delta$ depending on the value of $n_1$. From this insight, three possible improvements of the alphabet are derived for encoding $\delta$:

1. When $\epsilon = 0$ and when the reference value $n_1$ is zero, no sign bit needs to be emitted for encoding the value of $\delta$. This is very easy to be done in hardware, since the sign bit is already excluded in case of $\delta = 0$. Hence, by a simple additional comparison, coding efficiency can be improved. (Please note the absence of run-length encoding.) In other words, the encoder 40 may be configured to omit the sign of the difference if a number of bits representing the coefficients of the first group ($n_1$) is 0. Thus, only the absolute value of the difference may be encoded. Respectively, the decoder 60 may omit obtaining the sign of the difference from the data stream if the number of bits ($n_1$) representing the coefficients of the first group is 0.

2. A generalization consists in omitting the sign bit, when $\delta > n_1 + \epsilon$, since in such a case the sign bit must be positive. Such a comparison is slightly more complicated in hardware, but has also more impact on the coding efficiency.

In other words, the encoder may omit encoding the sign of the difference if the difference is greater than the sum of a number of bits representing the coefficients of the first group and an encoding scheme indicator ($\varepsilon$). $\varepsilon$ may be an integer value wherein epsilon being a number different from zero indicates a first encoding scheme and wherein $\varepsilon = 0$ indicates a second encoding scheme. The encoding scheme indicator $\varepsilon$ may refer to the bit plane or coding truncation described with respect to the first concept, thus signaling, for example, a number of -1 remaining bit planes for a current group of coefficients. Hence, the encoder 40 may apply the first encoding scheme, wherein the first encoding scheme omits encoding groups of coefficients where values of the groups are below a predefined threshold value. The first encoding scheme also covers the extension of the truncation as described with respect to first concept, indicating a negative number of remaining bit planes for a current group in accordance with a number of consecutive groups having only zero bit planes followed by a group having coefficients different from zero (i.e. the groups of zero coefficients are not located at the end of the block of groups). However, the encoder may also apply the second encoding scheme. This may be the typical GCLI encoding absent from the extension described with respect to the first concept.

Accordingly, the decoder may omit decoding the sign of the difference if the difference is greater than the sum of a number of bits representing the coefficients of the first group and a decoding scheme indicator $\varepsilon$, wherein an $\varepsilon$ different from zero indicates a first decoding scheme and wherein $\varepsilon = 0$ indicates a second decoding scheme. Moreover, the decoder is configured to apply the first decoding scheme indicating decoding groups of coefficients where values of informative bit planes are below a predefined threshold value or to apply the second decoding scheme.

3. Finally, the sign bit can also be omitted when $\delta < -(n - n_1) = n_1 - n$, since in such a case, it must be negative. This comparison further improves the coding efficiency.

Thus, the encoder may be configured to omit encoding the sign of the difference if the difference is smaller than a number of bits representing the coefficients of the first group minus a maximum possible number of informative bit planes available after quantization to represent coefficients of the groups of coefficients. Accordingly, the decoder 60 is configured to omit decoding the sign of the difference if the difference is smaller than a number of bits ($n_1$) representing the coefficients of the first group minus a maximum possible number of informative bit planes available after quantization (n) to represent coefficients of the groups of coefficients.

Varying quantization

Predictive coding for the number of remaining bit planes as discussed with respect to the second concept works well if neighboring coefficient groups have a similar number of remaining bit planes, and hence similar number of active bit planes. Then $\delta$ will be small, leading to the use of short variable length codes.

Use of varying quantization within an image can result in neighboring groups of coefficients using different quantization levels. In this case, the mean value of $\delta$ differs from zero when following the hypothesis of similar number active bit planes between neighboring coefficient groups. As a consequence, coding efficiency would be reduced.

In order to solve this issue, the reference value $n_1$ should to be modified before prediction. To this end, let $n_1$ be the number of remaining bit planes of a first coefficient group, and let $n_2$ be the number of remaining bit planes of a second coefficient group. Moreover, let $n_{q1}$ be the quantization factor of the first coefficient group, and let $n_{q2}$ be the quantization factor of the second coefficient group. Then the following quantities are defined:

$$\Delta n_q = n_{q2} - n_{q1}$$

$$\widetilde{n_1} = \begin{cases} \max(n_1 - \Delta n_q, 0) & n_1 > 0 \\ 0 & otherwise \end{cases} = \begin{cases} n_1 - \Delta n_q & n_1 > 0 \wedge n_1 > \Delta n_q \\ 0 & otherwise \end{cases}.$$

The value of $\delta$ is then encoded as:

$$\delta = n_2 - \widetilde{n_1}.$$

Hence, $n_1$ should to be replaced by $\widetilde{n_1}$ in the description of the first concept above. More generally, the number of remaining bit planes of the first group of coefficients may be replaced by a modified number of remaining bit planes $\widetilde{n_1}$ to obtain a (measure of) a number of remaining bit planes for the first coefficient that, on average, varies less than the original number of remaining bit planes $n_1$

In other words, the encoder may calculate a modified number of bits $(\widetilde{n_1})$ replacing the number of bits representing the coefficients of the first group ($n_1$) using the formula above. Herein, $\Delta n_q$ indicates a deviation from a quantization of the second group to a quantization of the first group. Accordingly, the decoder may be configured to calculate or more precisely, determine from the data stream, a modified number of bits $\widetilde{n_1}$ replacing the number of bits representing the coefficients of the first group ($n_1$) using the formula above. Thus, the expected delta values indicating the difference between remaining bit planes of consecutive groups is reduced. The reasoning is as follows:

- If $n_{q2} > n_{q1}$, the second coefficient group needs to drop more least significant bits (LSBs). Consequently, the expected number of remaining bit planes gets smaller. If, $n_1 < \Delta n_q$ one expects the second coefficient group to be zero as well.
- If $n_{q2} < n_{q1}$, one expects the second coefficient group to have more LSB bit planes. Consequently, the expected number of remaining bit planes gets larger, except for when $n_1$ equals zero. In the latter case, it is hard to predict anything about the expected value for $n_2$. Since the coefficient might be very small, even a decrement in quantization may not result in any additional bit plane.

Error checking based on the delta values

Given that $-\epsilon \leq n_2 \leq n$, this constraint can be used to validate the correctness of the received codestream. Whenever the decoder receives a value for $\delta$ that would violate this constraint, the codestream must be corrupted, and resynchronization should to be performed.

In other words, the decoder may optionally comprise a validator configured to validate the data stream using the absolute difference of consecutive groups of coefficients. To be more precise, the validator may determine, as a first condition, if a decoded number of bits representing the coefficients of the second group is below (or less than) an encoding scheme indicator $\varepsilon$ or, as a second condition, if a decoded number of bits representing the coefficients of the second group is above (or greater than) a maximum possible number of bit planes available after quantization (n) and to indicate an error in the data stream if the first condition and/or the second condition is valid. This validation scheme may also be used together with the extension described with respect to the first concept. However, the values used to indicate a consecutive number of groups having only zero coefficients and the value indicating the presence of remaining zero coefficients in a block of groups should be omitted from the list of possible numbers indicating an error in the decoding algorithm. However, any other obtained number of remaining bit streams still indicates an error in the data stream or the decoding algorithm.

Fig. 19 shows a schematic data stream 46 corresponding to the second concept. The data stream comprises encoded values 70a, 70b and 70c representing differentially encoded groups of coefficients representing spatial components of the digital image representation. The data stream may further comprise an absolute difference 68a and 68b of consecutive groups of coefficients and, for a subset of non-zero absolute differences smaller than a total number of non-zero absolute differences in the data stream, a sign value 6b. Referring to Fig. 19, the delta value 68a may indicate the (absolute) difference between remaining bit planes of the encoded values 70a and 70b and the delta value 68b may indicate the (absolute) difference of remaining bit planes between the encoded values 70b and 70c. However, as described with respect to the second concept, the sign of the second data value 68b is omitted from encoding, such that only the sign 6b of the first delta coefficient 68a is present in the data stream.

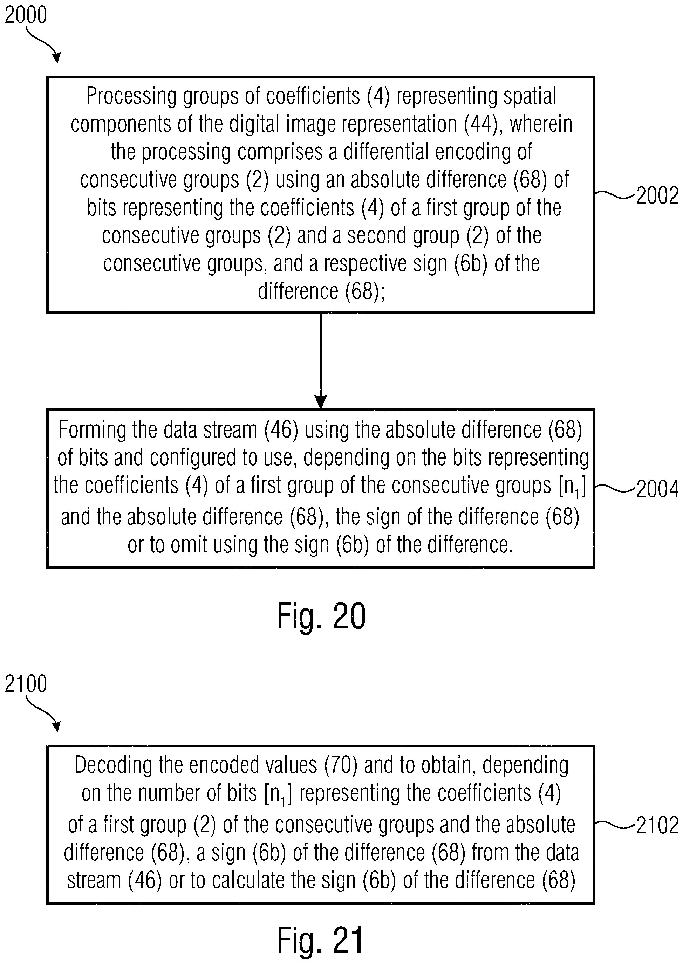

Fig. 20 shows a schematic block diagram of a method for at least partially encoding a digital image representation into a data stream. The method 2000 comprises a step 2002 of processing groups of coefficients representing spatial components of the digital image representation, wherein the processing comprises a differential encoding of consecutive groups using an absolute difference of bits representing the coefficients of a first group of the consecutive groups and a second group of the consecutive groups, and a respective sign of the difference and a step 2004 of forming the data stream using the absolute difference of bits and configured to use, depending on the bits representing the coefficients of a first group of the consecutive groups [$n_1$] and the absolute difference, the sign of the difference or to omit using the sign of the difference.

Fig. 21 shows a schematic block diagram of a method 2100 for at least partially decoding a data stream of a digital image representation. The method 2100 comprises a step 2102 of decoding the encoded values 70 and to obtain, depending on the number of bits [$n_1$] representing the coefficients 4 of a first group of the consecutive groups and the absolute difference 68, a sign 6b of the difference 68 from the data stream 46 or to calculate the sign 6b of the difference 68.

Concept 3

Again, Fig. 8 shows a schematic diagram of the encoder 40 and Fig. 13a is, respectively, a schematic diagram of a decoder 60 of the third concept. However, the processing comprises differences in regard to the technical difference between the concepts.

The encoder 40 of the third concept may at least partially encode a digital image representation into a data stream of data words. The encoder 40 may comprise the processor 52 configured for processing groups of coefficients representing frequency components of the digital image representation, wherein the processing comprises a differential encoding of consecutive groups using an absolute difference of bit planes representing the number of informative bit planes of coefficients of a first group to a second group of the consecutive groups. Moreover, the encoder, e.g. performed by the processor or an encoding unit, is configured to form the data stream using the processed groups of coefficients using a first encoding algorithm if a value of a respective absolute difference is below a predetermined threshold value ($t_\delta$) and, if the value is above the predetermined threshold value, to perform a different encoding with a second encoding algorithm different from the first encoding algorithm to reduce the number of bits of a data word used to represent the absolute difference of the first group and the second group.

Thus, the idea is to increase the probability that the encoded absolute difference is limited to a maximum size (i.e. the number of bits used to represent the actual number) or to a maximum value (i.e. the actual value of the difference). This may improve the coding efficiency e.g. for hardware implementations. The respective decoder shown in Fig. 13 may at least partially decode the data stream of the digital image representation. The data stream comprises values representing groups of coefficients representing frequency components of the digital image representation, wherein consecutive groups are differentially encoded using an absolute difference of bit planes representing the number of remaining bit planes of coefficients of a first group to a second group of the consecutive groups. The data stream, as in all embodiments/concepts, may be formed using data words, e.g. an addressable unit in a (memory) storage comprising e.g. 16 bits, 32 bits or 64 bits or any other multiple of 8 bits, depending on the (hardware) architecture. The decoder comprises the processor 62 configured for decoding the data stream using a first decoding algorithm if a value of a respective absolute difference is below a predetermined threshold value ($t_\delta$) and, if the value is above the predetermined threshold value, to perform a different decoding with a second decoding algorithm different from the first decoding algorithm. The first encoding and decoding algorithm may be the regular GCLI encoding/decoding. The second encoding/decoding algorithm may refer to a reduction of a code word size for the transmitted delta values. This may be performed using clipping, non-linear quantization of the delta value, or encoding the delta value with a special code such as a Golomb code or a Huffman code.

Limitation of the variable code word length

In other words, the value of $\delta$ is represented by a code word of variable length. For the example given in Fig. 17, the length of the code word equals:

$$s = \begin{cases} 1, & \delta = 0 \\ 3 + |\delta| - 1, & otherwise \end{cases}$$

The maximum code word size thus equals:

$$\max(s) = 2 + n + \epsilon.$$

When using the alphabet optimizations described with respect to the second concept, this number is reduced by one since the sign bit can eliminated for the largest $\delta$-values:

$$\max(s) = 1 + n + \epsilon.$$

Since frequency transforms typically increase the bit depth of the frequency coefficients compared to the bit depth of the input image pixels, and having for instance 12 bit/s per color component, this value can be as large as 19 (4 extra bits due to frequency transform, 1 extra bit from the color transform) or even larger.

This is unfortunate due to the following reasons. Implementation of a variable length code requires a barrel shifter. In case of an FPGA implementation, the chip area of the barrel shifter increases with the size of the maximum variable code word length, when realized with combinatorial logic. While this can be partly circumvented by using FPGA multipliers, a single multiplier can only perform a shift of up to 18 bits in most FPGA architectures. Exceeding this 18-bit boundary hence increases chip area as well. And software implementations finally suffer from reduced SIMD parallelism in case a 16 bit boundary is exceeded.

Consequently, there is an interest in limiting the maximum size of the variable code word. This can be achieved by taking into account that large values of $|\delta|$ will only occur rarely. This allows deviating from the ideal alphabet by one of the possibilities described below.

Introduction of clipping

To this, we introduce a threshold $t_\delta < n$. When $|\delta| < t_\delta$, encoding is performed as usual. When $|\delta| \geq t_\delta$, we encode the value $sign(\delta) \cdot t_\delta$ instead of $\delta$, followed by a binary representation of $|\delta| - t_\delta$. A simple encoding scheme for this binary representation uses $1 + \llcorner \log_2(n + \epsilon - t_\delta) \lrcorner$ bits. A more sophisticated coding can also be derived by using a code having either $\llcorner \log_2(n + \epsilon - t_\delta) \lrcorner$ or also $1 + \llcorner \log_2(n + \epsilon - t_\delta) \lrcorner$ bits. In other words, a first coding algorithm using $1 + \llcorner \log_2(n + \epsilon - t_\delta) \lrcorner$ bits, there are too many codewords wherein using a second coding algorithm using $\llcorner \log_2(n + \epsilon - t_\delta) \lrcorner$ bits, there is an insufficient number of codewords. Thus, it may be switched between both binary representations (or encoding algorithms) at a certain point in time during encoding, starting with the second coding algorithm. If the certain point in time is reached, i.e. the (maximum) number of codewords is used for encoding (the groups of coefficients), it may be switched to the first coding algorithm for further encoding/decoding (the remaining groups of coefficients).

Consequently, the maximum code word size now equals:

$$\max(s) = 2 + t_\delta + 1 + \lfloor \log_2(n + \epsilon - t_\delta) \rfloor.$$

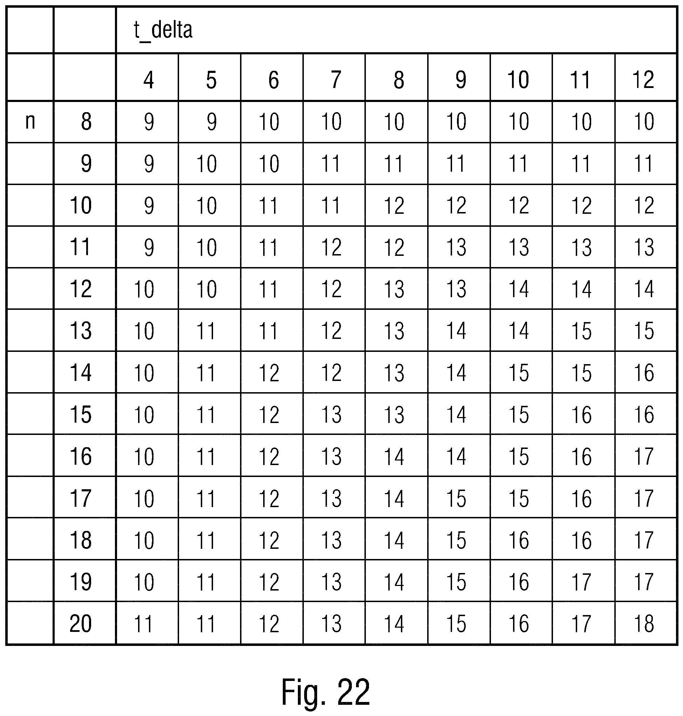

Fig. 22 shows the resulting maximum variable length code word size (for $\varepsilon = 0$), illustrating the desired effects. Thus, the encoder may perform the first encoding algorithm by encoding the absolute difference and a sign of the absolute difference and wherein the encoder is configured to perform the second encoding algorithm by encoding the sign of the absolute difference ($sign((\delta))$ times the predetermined threshold $t_\delta$ followed by a binary representation of $|\delta| - t_\delta$ wherein the predetermined threshold indicates a maximum allowed difference between remaining bit planes of the first group to the second group of coefficients. The encoding algorithms may refer to the clipping. The first encoding algorithm may relate to the standard GCLI coding, wherein the second coding algorithm may perform the clipping as described above. The corresponding decoder is configured to perform the first decoding algorithm by decoding the absolute difference and a sign of the absolute difference. Furthermore, the decoder may perform the second decoding algorithm by decoding the sign of the absolute difference ($sign(\delta)$) times the predetermined threshold ($t_\delta$) followed by a binary representation of $|\delta| - t_\delta$ wherein the predetermined threshold indicates a maximum difference allowed between remaining bit planes of the first group to the second group of coefficients.

Please note that the sign bit can be omitted as explained with respect to the second concept. Alternatively, the following can be performed:

1. In case both $\varepsilon = 0$ and the reference value $n_1$ is zero, no sign bit needs to be emitted.

2. A generalization consists in omitting the sign bit, when $(\delta \geq t_\delta \wedge t_\delta > n_1 + \epsilon) \vee (\delta < t_\delta \wedge \delta > n_1 + \epsilon)$, since in such a case the sign bit must be positive. This simplification permits the decoder to simply check whether clipping has been performed, and whether the clipping value is large enough to decide for the presence of a sign bit without first decoding the actual value for $\delta$.

In other words, the encoder may omit encoding a sign of the absolute difference if a difference $\delta$ comprising the absolute difference $|\delta|$ and the sign of the absolute difference ($sign(\delta)$) is greater than or equal to the predetermined threshold ($t_\delta$). Additionally or alternatively, the predetermined threshold $t_\delta$ is greater than a sum of informative bit planes of the first group $n_1$ and an encoding scheme indicator $\varepsilon$, wherein $\varepsilon$, different from zero, indicates a first encoding scheme and wherein $\varepsilon = 0$ indicates a second encoding scheme. The respective decoder is configured to omit decoding a sign of the absolute difference as greater than or equal to the predetermined threshold $t_\delta$. Additionally or alternatively, if a difference $\delta$ comprising the absolute difference $|\delta|$ and the sign of the absolute difference ($sign(\delta)$) is smaller than a difference of a number of informative bit planes $n_1$ of the first group and a maximum number of bit planes $n$ available after quantization.

Thus, due to the clipping, the maximum variable length code word size is limited to the values shown in Fig. 22 depending on the maximum allowed difference between remaining bit planes $t_\delta$ and the maximum number $n$ of bit planes of the groups of coefficients. However, since these are maximum values, mean values may also be determined such that, for example, at a given $n$ a larger threshold $t_\delta$ is allowed that leads to a maximum code word length of the encoded difference of remaining bit planes. Still, the mean value of the encoded differences should be below (or less than) a given maximum length of the code word. Thus, within a block or a workgroup, a sum of a code word length of the code words of the difference of remaining bit planes is below a total number of bits allowed to represent the difference of remaining bit planes in the block or the workgroup.

Thus, the encoder may apply the first encoding scheme by omitting encoded groups of coefficients wherein values of informative bit planes are below the predetermined threshold value. Alternatively, the encoder may apply the second encoding scheme.

Instead, the encoder may omit encoding the sign of the absolute difference if a difference $\delta$ comprising the absolute

difference $|\delta|$ and the sign of the absolute difference ($sign(\delta)$) is smaller than the predetermined threshold $t_\delta$. Additionally or alternatively, the sign of the absolute difference may be omitted if the difference is greater than a sum of a number of informative bit planes $n_1$ of the first group and an encoding scheme indicator $\varepsilon$ wherein $\varepsilon$ different from zero indicates a first encoding scheme and wherein $\varepsilon = 0$ indicates a second encoding scheme. Correspondingly, the decoder may omit decoding the sign of the absolute difference is the difference $\delta$ is smaller than the predetermined threshold $t_\delta$ and/or if the difference is greater than a sum of a number of informative bit planes of the first group $n_1$ and a decoding scheme indicator $\varepsilon$.

3. Finally, the sign bit can also be omitted when $(\delta \leq -t_\delta \wedge -t_\delta < n_1 - n) \vee (\delta > -t_\delta \wedge \delta < n_1 - n)$, since in such a case, it must be negative.

In other words, the encoder may omit encoding a sign of the absolute difference if the difference $\delta$ is smaller or equal to -1 times the predetermined threshold $t_\delta$ and/or if -1 times the predetermined threshold is smaller than a difference of informative bit planes of the first group $n_1$ and a maximum number of bit planes $n$ available after quantization. Accordingly, the decoder may omit decoding the sign of the absolute difference if the difference $\delta$ is smaller or equal to -1 times the predetermined threshold $t_\delta$ and/or if -1 times the predetermined threshold $t_\delta$ is smaller than a difference of informative bit planes of the first group $n_1$ and a maximum number of bit planes $n$ available after quantization.

Alternatively, the encoder may omit encoding the sign of the absolute difference if the difference $\delta$ is greater than -1 times the predetermined threshold $t_\delta$ and/or if the difference $\delta$ is smaller than a difference of a number of informative bit planes $n_1$ of the first group and a maximum number of bit planes $n$ available after quantization. Accordingly, the decoder may omit decoding the sign of the absolute difference if the difference $\delta$ is greater than -1 times the predetermined threshold and/or if the difference is smaller than a difference of a number of informative bit planes $n_1$ of the first group and a maximum number of bit planes $n$ available after quantization.

Nonlinear quantization of delta value

An alternative to clipping explained above is a non-linear quantization of the delta value using:

$$q(\delta) = \begin{cases} \delta & |\delta| < t_\delta \\ \delta_{max} & \delta \geq t_\delta \\ -t_\delta & \delta \leq -t_\delta \end{cases}$$

By these means, large delta values will be represented in an imprecise manner, causing zero bit planes to be included in the raw data bits. This, however, will not impact coding efficiency significantly, if it happens/occurs rarely in the image.

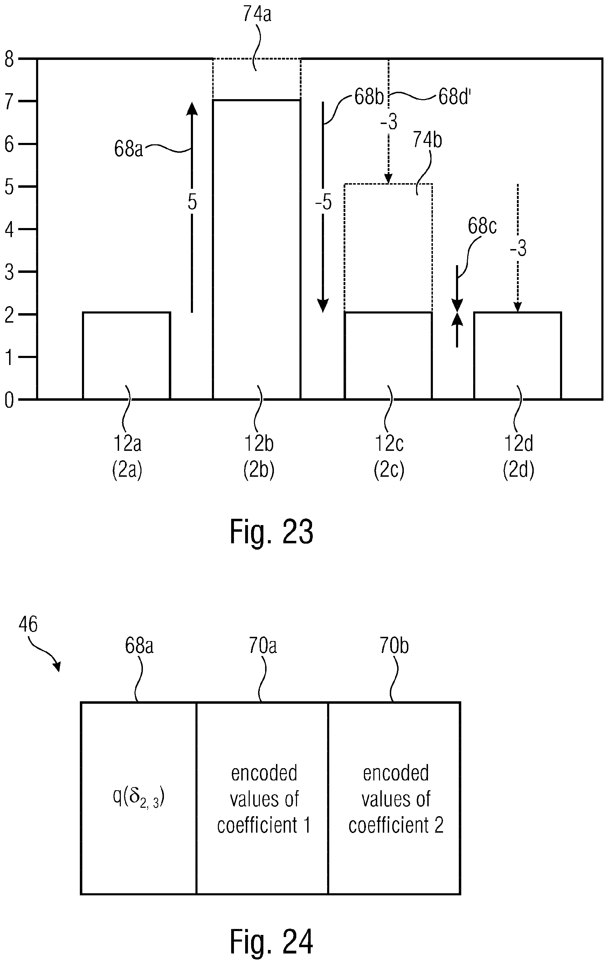

Fig. 23 illustrates the corresponding principles. Each solid rectangle corresponds to the remaining bit planes that need to be transmitted. The first delta value 68a equals five, followed by the second delta value 68b of minus five and the third delta value 68c.

Assuming a threshold $t_\delta = 3$, one would signal for the second coefficient group 2b a delta value of $t_\delta$ and interpreting it as $q(\delta) = \delta_{max} = n - n_1 = 8 - 2 = 6$. This means that the dashed bits 74a also should be transmitted, although they are zero. Moreover, this means, that the second delta value 68b needs to be minus six instead of minus five. Since $-6 \leq -t_\delta$, one would only signal a delta 68b' of -3, meaning again that the dashed zero bits 74b should be transmitted. The next coefficient group 2d would finally be encoded in a precise manner (with respect to the delta value). Using this concept, only the delta value is quantized if the number of bit planes to be signaled exceeds a (predetermined) threshold value. However, due to the encoding of further (zero) bit planes of the coefficients, the same (overall) information is encoded.

Thus, the encoder may quantize the difference $\delta$ of the first group and forms the data stream using the data word of the first group comprising the quantized difference $q(\delta)$. More precisely, the encoder may quantize the difference by encoding the predetermined threshold $t_\delta$, the encoded predetermined threshold representing a maximum possible difference of the first group to the second group $\delta_{max}$ and further encoding a number of zero bit planes corresponding to a difference between a maximum number of informative bit planes of the consecutive groups and the number of informative bit planes of the first group. Moreover, the encoder may quantize the difference of the first group and the second group according to the above described relation leading to the quantized difference $q(\delta)$. Here, $q(\delta)$ refers to the quantized difference of the number of informative bit planes, $n$ refers to a maximum number of bit planes available after quantization, $n_1$ refers to a maximum number of informative bit planes of the first group, $t_\delta$ refers to the predetermined threshold.

Accordingly, the decoder may decode a quantized difference of the first group and to further decode the data stream using the data word of the first group comprising the quantized difference. More precisely, the decoder may decode the quantized difference by decoding the predetermined threshold, the decoded predetermined threshold representing a maximum possible difference of the first group to a second group and further decoding a number of zero bit planes corresponding to a difference between a maximum number of informative bit planes of the consecutive groups and the number of informative bit planes of the first group. Moreover, the decoder may use the relations described above to obtain the correct encoded delta value from the quantized delta values $q(\delta)$.

Omission of the sign bits is possible in the same way than described with respect to the second concept:

1. When $\varepsilon = 0$ and when the reference value $n_1$ is zero, no sign bit needs to be emitted for encoding the value of $\delta$. Thus, at least for the second encoding scheme, the encoder may omit the sign of the difference if the number of bits representing the coefficients of the first group is zero. Accordingly, the decoder may omit obtaining the sign of the difference from the data stream if the number of bits representing the coefficients of the first group is zero.

2. A generalization consists in omitting the sign bit, when $q(\delta) > n_1 + \varepsilon$, since in such a case the sign bit must be positive. Thus, the encoder may omit encoding the sign of the difference if the quantized difference $q(\delta)$ is greater than the sum of a number of informative bit planes $n_1$ representing the coefficients of the first group and an encoding scheme indicator $\varepsilon$, wherein $\varepsilon$ being a number different from zero indicates a first encoding scheme and wherein $\varepsilon = 0$ indicates a second encoding scheme. Again, the encoder may apply the first encoding scheme thus omitting to encode groups of coefficients where values of the groups are below a predefined threshold value or to apply the second encoding scheme, that may refer to GCLI coding. Accordingly, the decoder may omit decoding the sum of the difference if the quantized difference is greater than the sum of a number of informative bit planes representing the coefficients of the first group and a decoding scheme indicator $\varepsilon$.

3. Finally, the sign bit can also be omitted when $q(\delta) < n_1 - n$, since in such a case, it must be negative.

Thus, the encoder may omit encoding the sign of the difference if the quantized difference is smaller than a number of bits $n_1$ representing the coefficients of the first group minus a maximum possible number of informative bit planes $n$ available after quantization to represent coefficients of the groups of coefficients. Correspondingly, the decoder may omit decoding the sign of the difference if the quantized difference is smaller than a number of bits $n_1$ representing the coefficients of the first group minus a maximum possible number of informative bit planes $n$ available after quantization to represent coefficients of the groups of coefficients.

Alternatively, the following approach can be used to simplify decoding of the sign bit:

1. When $\varepsilon = 0$ and when the reference value $n_1$ is zero, no sign bit needs to be emitted for encoding the value of $\delta$.

2. A generalization consists in omitting the sign bit, when $(\delta < t_\delta \wedge \delta > n_1 + \varepsilon) \vee (\delta \geq t_\delta \wedge t_\delta > n_1 + \varepsilon)$, since in such a case, the sign bit must be positive. This approach is more conservative, but avoids computation of $\delta_{max}$ before being able to determine the need for a sign bit.

3. Finally, the sign bit can also be omitted when $q(\delta) < n_1 - n$, since in such a case, it must be negative.

Use of Golomb Codes or Huffman

In addition to the methods of described with respect to the third concept above (clipping and nonlinear quantization), reduction of the maximum code word length is also possible by using Golomb Codes with order $k > 0$ or appropriate Huffman codes.

Thus, the encoder may encode the data stream using a Golomb Code with order $k > 0$ or or a Huffman code. Accordingly, the decoder may configure to decode the data stream using a Golomb Code with order $k > 0$ or a Huffmann code.

Fig. 24 shows a schematic block diagram of a data stream 46. The data stream comprises values 70a and 70b representing groups of coefficients representing spatial components of the digital image representation, wherein consecutive groups are differentially encoded using an absolute difference of bit planes representing the number of remaining bit planes of coefficients of a first group to a second group of the consecutive groups, wherein at least one absolute difference 68a of informative bit planes is quantized. This reduces the number of bits to encode the delta value.

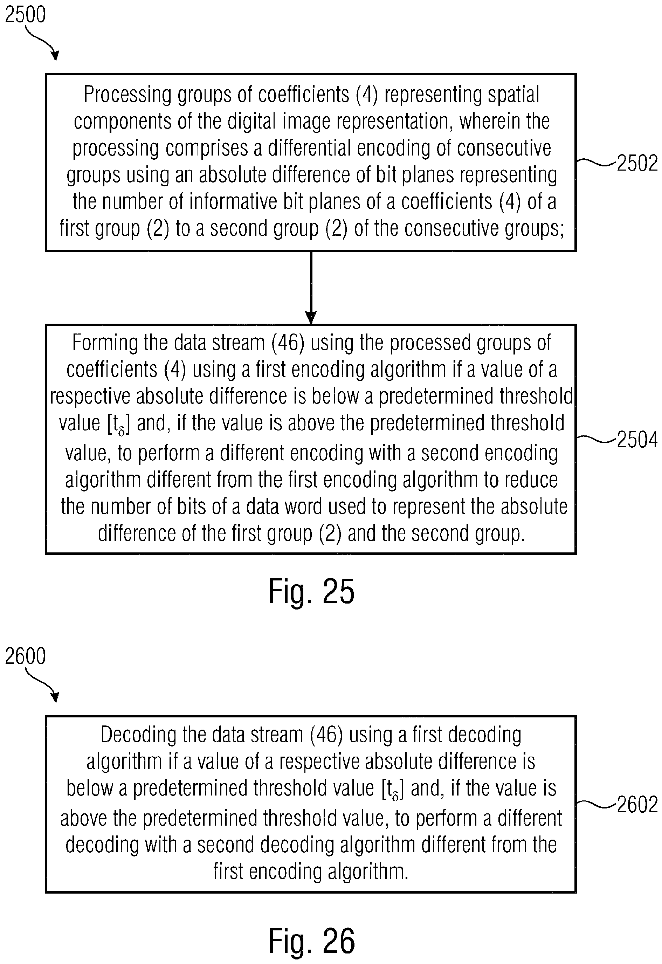

Fig. 25 shows a schematic block diagram of a method 2500 for encoding a digital image representation into a data stream. The method 2500 comprises a step 2502 of processing groups of coefficients 4 representing spatial components of the digital image representation, wherein the processing comprises a differential encoding of consecutive groups using an absolute difference of bit planes representing the number of informative bit planes of a coefficients 4 of a first group to a second group of the consecutive groups and a step 2504 of forming the data stream 46 using the processed groups of coefficients 4 using a first encoding algorithm if a value of a respective absolute difference is below a predetermined threshold value [$t_\delta$] and, if the value is above the predetermined threshold value, to perform a different encoding with a second encoding algorithm different from the first encoding algorithm to reduce the number of bits of a data word used to represent the absolute difference of the first group 2 and the second group.

Fig. 26 shows a schematic block diagram of a method 2600 for decoding a digital image representation from a data stream. The method 2600 comprises a step 2602 of decoding the data stream 46 using a first decoding algorithm if a value of a respective absolute difference is below a predetermined threshold value [$t_\delta$] and, if the value is above the predetermined threshold value, to perform a different decoding with a second decoding algorithm different from the first encoding algorithm.

Concept 4

The concept for Fig. 8 shows an encoder 40 of the fourth concept. The encoder may at least partially encode a digital image representation into a data stream. The encoder comprises a processor 42 configured to process groups of coefficients representing frequency components of the digital image representation, each group comprising at least two coefficients of frequency components. The processing comprises quantizing the groups or more specifically the coefficients representing one group. Furthermore, the encoder may form the data stream using, for at least one group, a number of uncompressed bit planes different from the zero bit planes and for each group a value indicating a number of leading zero bit planes $n_x$ and a quantization threshold $n_{qx}$. The notation reveals a subscript $x$ which may be replaced by a positive integer value indicating the respective group. However, the quantization threshold may be transmitted once for multiple groups such as once for a block or a workgroup and therefore omitted from encoding once for each group.

Fig. 13 shows a respective decoder for at least partially decoding a data stream of a digital image representation. The data stream may comprise encoded values representing the processed groups, an encoded quantization level, and at least one group comprises a number of uncompressed bit planes different from the zero bit planes. Furthermore, the data stream comprises for each group a number of differentially encoded leading zero bit planes. The leading zero bit planes 10 may be, for example, identified in Fig. 1. Moreover, the decoder may comprise a processor 62 configured to decode the encoded values, the number of differentially encoded leading zero bit planes, and the encoded quantization threshold to obtain the digital image representation.

Alternative signaling principles

Both in the general concept and the second concept, the number of remaining bit planes and the quantization level have been signaled to the decoder.

Given that the maximum number of active bit planes $n_{max}$ is constant for a given input image bit depth, the same information can be carried by:

-  signaling the number of leading zero bit planes and the quantization level $n_q$;
-  signaling the number of leading zero bit planes and the number of remaining bit planes.

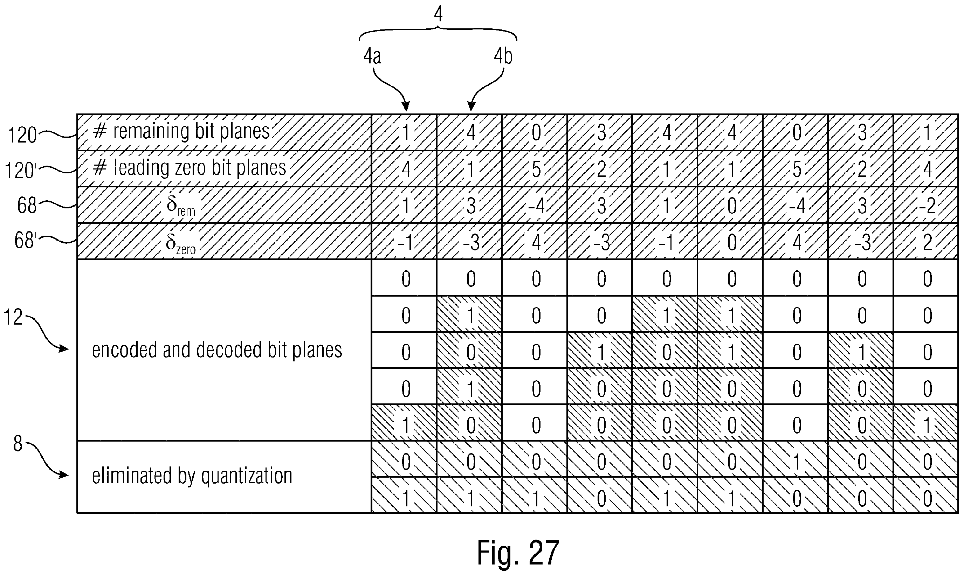

The first solution may be advantageous in that the number of the leading zero bit planes typically changes less frequently than the quantization level. Thus, the first solution may be preferred due to the moderate (or less often) change of the delta value. This is illustrated in Fig. 27. Fig. 27 reveals the number 120 of remaining bit plains (# remaining bit plains), the number 120' of leading zero bit plains (# leading zero bit plains), the difference 68 between the number of remaining bit plains of a preceding group of coefficients 4 to a current group of coefficients 4 ($\delta_{rem}$), the difference between the number of leading zero bit plains of a preceding group of coefficients 4 to a current group of coefficients 4 ($\delta_{zero}$), encoded/decoded bit planes 12 and bit plains 8 eliminated due to quantization in one example.

Thus, the encoder may form the data stream using a first group and a second group of the groups of coefficients by encoding a difference of the number of leading zero bit planes between the first and the second group. Furthermore, the encoder may form the data stream using the quantization threshold and, depending on a difference between the number of leading zero bit planes of the second group and the quantization threshold, an informative bit plane.

The respective decoder may decode a first group and a second group of the groups of coefficients from the data stream by decoding a difference of the number of leading zero bit planes between the first and the second group, the quantization threshold and, depending on a deviation between the number of leading zero bit planes of the second group and the quantization threshold, an informative bit plane. In other words, the decoder may identify the number of encoded bit planes of a second coefficient based on the deviation between the number of leading zero bit planes of the first group to the second group and the respective quantization threshold.

$\delta_{rem}$ defines the delta value for the number of remaining bit planes. $\delta_{zero}$ defines the delta value for the number of zero MSB bit planes. Visibly, they have an opposite sign. For the very first coefficient, it is assumed that the reference coefficient is zero. This means that it has no remaining bit planes, and five leading zero bit planes. In case the very first coefficient is typically larger, also a larger value for this first reference coefficient should be chosen in order to improve the coding efficiency.

Improvement of coding efficiency by coding truncation

Similarly to the first concept, coding of a block of coefficient groups can be aborted by signaling a negative number of remaining bit planes. This is equivalent of signaling $n + 1$ zero bit planes. Alternatively, minus one (-1) zero bit planes can be signaled. Typically however, this will use more bits for encoding, since coefficients will already be small before getting finally completely zero. Consequently, this option is not considered in the following.

Thus, the encoder may generate the data stream using differential encoding in accordance with a relevance order of the groups, while the processor may signal a stop of encoding if a predefined relevance threshold is reached for all remaining coefficients. More specifically, the processor may signal a stop of encoding by differential encoding a difference of the number of leading zero bit planes of the first group to the second group such that the difference leads to a number of leading zero bit planes being greater than a maximum number of informative bit planes $n$ after quantization in the data stream for a respective group of coefficients where the predefined relevance threshold value is reached.

Alternatively, the processor 42 may signal the stop of encoding by differential encoding a difference between the number of leading zero bit planes of a first group and a second group such that the difference leads to a number of leading zero bit planes being smaller than zero for the current group of coefficients where the predefined relevance threshold value is reached. Accordingly, the decoder may decode the data stream using differential decoding in accordance with a relevance order of the groups. Thus, the processor is configured to obtain a stop signal indicating a stop of decoding if a predefined relevance threshold is reached. The processor 62 may be further configured to obtain a signal indicating a stop of decoding if the decoding reveals a negative number of leading zero bit planes for a respective group of coefficients where the predefined relevance threshold value is reached. Alternatively, the processor may obtain a signal indicating a stop of decoding if the decoder reveals a number of informative bit planes for a respective group of coefficients greater than a maximum possible number of informative bit planes where the predefined relevance threshold value is reached.

Furthermore, the encoder may generate the data stream using a difference of the number of leading zero bit planes of a first and a second group of the groups of coefficients and to use, depending on the number of leading zero bit planes $n_1$ of the first group and the difference of the number of leading zero bit planes of the first to a second group, a sign of the difference or to omit using a sign of the difference. Accordingly, the processor 62 of the decoder may decode the encoded values of a second group of the groups of coefficients and to obtain, depending on the number of leading zero bit planes $n_1$ of a first group and the difference between the number of leading zero bit planes of the first group and the second group, a sign of the difference from the data stream or to calculate the sign of the difference.

Constant quantization

In other words, in case the value of nq is known, everything from the second concept can be applied in a similar manner, when signaling the number of leading zero bit planes. In particular, the sign-bit for the delta-encoding can be omitted in the following cases:

1. In case $n_1 = 0$, no sign bit needs to be emitted for encoding the value of $\delta$. Please note that in this case $\in$ does not need to be zero (or may be different from zero), when no negative numbers for the number of zero bit planes are signaled (see above).

Thus, the encoder may omit encoding the sign of the difference of the number of leading zero bit planes between the consecutive groups if the number of leading zero bit planes $n_1$ is zero. Accordingly, the respective decoder may omit decoding the sign of the difference of the number of leading zero bit planes if the difference is greater than the number of leading zero bit plane $n_1$ of the first group.

2. A generalization consists in omitting the sign bit, when $\delta > n_1$, since in such a case the sign bit must be positive.

Thus, the encoder may omit encoding the sign of the difference of the number of leading zero bit planes if the difference is greater than the number of leading zero bit planes $n_1$ of the first group. Accordingly, the decoder may omit decoding the sign of the difference if the difference is greater than the number of bits $n_1$ representing the coefficients of the first group.

3. Finally, the sign bit can also be omitted when $\delta < -(n - n_1) - \in = n_1 - n - \in$, since in such a case, it must be negative.

Thus, the encoder may omit encoding the sign of the difference of the number of leading zero bit planes if the difference is smaller than the number of leading zero bit planes $n_1$ of the first group minus a maximum possible number of informative bit planes $n$ available after quantization to represent coefficients of the group of coefficients and minus an encoding scheme indicator $\varepsilon$, wherein the encoding scheme indicator being a number different from zero indicates a first encoding scheme and wherein the encoding scheme indicator equal to zero indicates a second encoding scheme.

Accordingly, the decoder may omit decoding the sign of the difference of the number of leading zero bit planes if the difference is smaller than the number of leading zero bit planes $n_1$ of the first group minus a maximum possible number of informative bit planes $n$ available after quantization to represent coefficients of the groups of coefficients and minus an encoding scheme indicator $\varepsilon$.

Varying quantization

In contrast to the second concept, the number of leading zero bit planes is almost agnostic to the quantization level. This only changes, when a coefficient is getting zero due to a stronger quantization.

Consequently, let $n_1$ be the number of leading zero bit planes of a first coefficient group, and let $n_2$ be the number of leading zero bit planes of a second coefficient group.

Moreover, let $n_{q1}$ be the quantization factor of the first coefficient group, and let $n_{q2}$ be the coefficient group of the second quantization factor. Then one defines the following quantity:

$$\widetilde{n_1} = \begin{cases} n_{max} - n_{q2} & if\ n_1 + n_{q2} \geq n_{max} \vee n_1 = n_{max} - n_{q1} \\ n_1 & otherwise \end{cases}.$$

Similarly to the second concept, an alternative definition of $\left(\widetilde{n_1}\right)$ is possible:

$$\widetilde{n_1} = \begin{cases} n_{max} - n_{q2} & if\ n_1 + n_{q2} \geq n_{max} \\ n_1 & otherwise \end{cases}$$

Then a decrease in quantization will assume an increase in the number of magnitude bit planes.

The value of $\delta$ is then encoded as $\delta = n_2 - \widetilde{n_1}$.

The reasoning is as follows:

- If $n_1 + n_{q2} \geq n_{max}$, the number of zero bit planes plus the number bit planes eliminated by the quantization meet or exceed the number of overall available bit planes. Consequently, the coefficient must be zero, and a zero coefficient is signaled by $n_{max} - n_{q2}$ leading zero bit planes.
- If $n_1 = n_{max} - nq_1$, the reference coefficient group is zero. Even when quantization gets smaller, with a high probability the second coefficient group will be zero, leading to $n_{max} - n_{q2}$ leading zero bit planes.
- Otherwise, the number of reference leading zero bit planes is unchanged.

Thus, the encoder may calculate a modified number of bits $\widetilde{n_1}$ till the replacing of the number of bits $n_1$ representing the coefficients of the first group by using the above described correlation. With respect to the formula $nq_2$ refers to a quantization threshold of a second group, wherein $n_{max}$ refers to a number of overall available bit planes. The overall available bit planes refer to the maximum number of bits used to represent values of the coefficients independently or without taking quantization or leading zero bit planes into account.

The data stream 46 according to embodiments comprises quantized groups of coefficients representing frequency components of the digital image representation and a quantization threshold, each group comprising at least two coefficients or frequency components, and values of a first group and a second group of the groups of coefficients are represented by a difference of the number of leading zero bit planes between the first and the second group and, depending on a difference between the number of leading zero bit planes, of the second group and the quantization threshold, the at least one encoded value of an informative bit plane different from the zero bit plane. This is represented by Fig. 14, where in contrast to the first concept, the difference 68 relates to the difference between the number of leading zero bit planes.

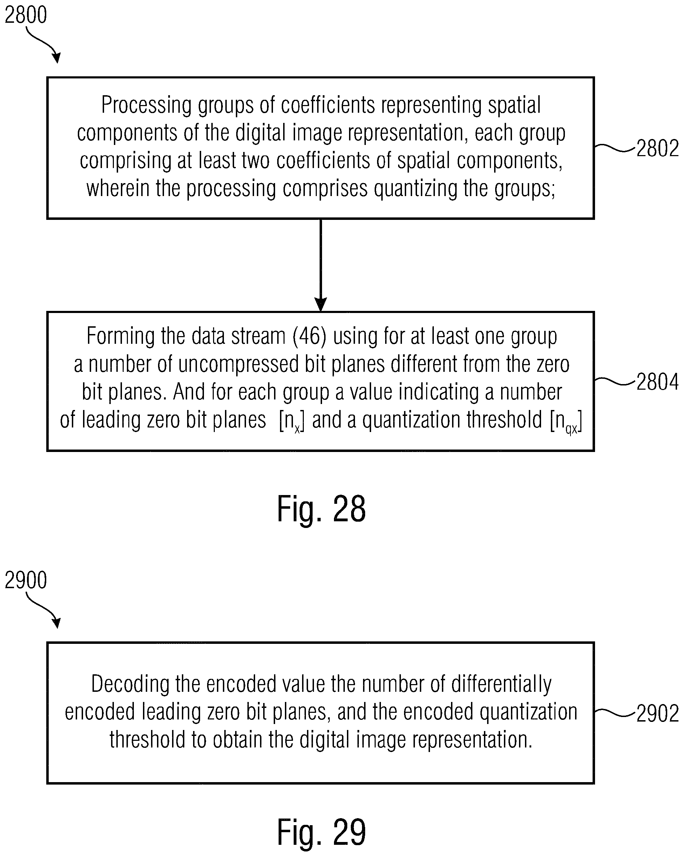

Fig. 28 shows a schematic block diagram of a method 2800 for at least partially encoding a digital image representation into a data stream. The method 2800 comprises a step 2802 of processing groups of coefficients representing spatial components of the digital image representation, each group comprising at least two coefficients of spatial components, wherein the processing comprises quantizing the groups and a step 2804 of forming the data stream 46 using for at least one group a number of uncompressed bit planes different from the zero bit planes. and for each group a value indicating a number of leading zero bit planes [$n_x$] and a quantization threshold [$nq_x$].

Fig. 29 shows a schematic block diagram of a method 2900 for at least partially decoding a data stream of a digital image representation. The method 2900 comprises a step 2902 of decoding the encoded value the number of differentially encoded leading zero bit planes, and the encoded quantization threshold to obtain the digital image representation.

Concept 5

Combination with bit stuffing

Bit stuffing is a technique to avoid certain byte or word values appearing in the regular codestream. By these means, these avoided (or omitted) values can be used for special signaling. In the following, these values are called markers. Whenever such a marker occurs in the codestream/data stream, the decoder can infer some important information, without interpreting the complete codestream. Instead, a simple search for the possible marker values is sufficient. In order to make such a search efficient, markers are aligned with byte boundaries. Such markers can then be used for instance to:

- Increase error robustness;
- Signal slice boundaries such that a decoder can decode them independently from previous image regions.

The following subsection explains the bit stuffing technique, while the subsequent subsection details how this can be combined with GCLI coding.

Bit stuffing

The unique purpose of bit stuffing is to exclude the byte value OxFF from appearing in the output of the entropy coder. By these means, OxFF can be used to signal the presence of a marker.

The bit stuffing is performed as follows:

```
For every complete byte a output by the entropy coder
      if a == OxFE or a == OxFF
            shift LSB of a to the MSB of the next byte
            a = OxFE;
      end if
end for
```

By these means, the decoder can reverse the bit stuffing whenever it encounters the value OxFE. Whenever the decoder encounters a OxFF, this must be a specifically inserted marker that does not belong to the output of the entropy coder. Hence, it must not be fed to the input of the entropy decoder.

GCLI coding with bit stuffing

While lossless encoding is easy to perform, it is not generally applicable due to the impossibility to guarantee the target rate constraint. Consequently, a rate control needs to decide which information to discard in order to meet the output bit rate.

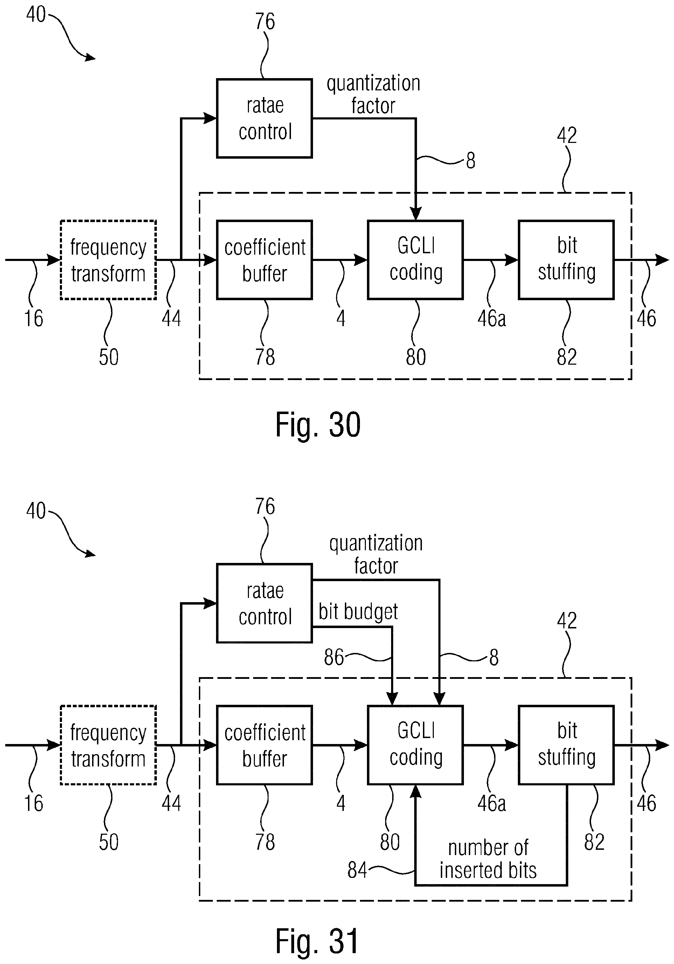

Fig. 30 illustrates the corresponding block diagram for lossy coding with GCLI entropy coding. The coefficients generated by the frequency transform 50 are stored in a coefficient buffer 78 and sent to a rate control module 76. The rate control module 76 determines the number of bit planes that need to be discarded in order to meet the overall output bit rate constraint. This decision is typically performed on a workgroup base. Hence, different working groups can have different quantization factors.

Given the quantization factor, the GCLI encoder 40 does the actual entropy encoding, that is followed by the bit stuffing in bit stuffing module 82. The size of the coefficient buffer 78 varies with the rate control strategy. When the coefficient buffer is large, the quantization factor for a given coefficient can also include information about "future" coefficients. If the coefficient buffer is small, then the rate control can only consider coefficients from the "past" as well as for the current workgroup.

Given that the rate control 76 does not do the actual entropy coder, but only precomputes or even estimates only the required quantization factor, the final output bit stream generated by the GCLI encoder is not known to the rate control. Consequently, it is also not possible determine the number of inserted bits generated by the bit stuffing module at this time. Hence, the rate control cannot ensure that the output rate is met exactly.

Thus, Fig. 30 shows the concept of using a rate control in connection with GCLI coding. The encoder 40 may thus be improved in terms of the rate control unit 76, which is configured to calculate the quantization factor 8 that should be used to obtain a maximum size in terms of bits used to encode the coefficients, or any composition of coefficients like groups, blocks, or workgroups comprising the coefficients. The quantization factor 8 is input to the GCLI coding module 80 receiving the coefficients 4 from a coefficient buffer 78. Thus, the GCLI coding module 80 performs the encoding of the coefficients 4 based on the quantization factor 8 by applying the determined quantization to the coefficients 4. Output of the GCLI coding module 80 is a typical or intermediate data stream 46a that may be extended by additional information using the bit stuffing module 82. Thus, the extended data stream 46 having bit stuffing bits included is obtained.

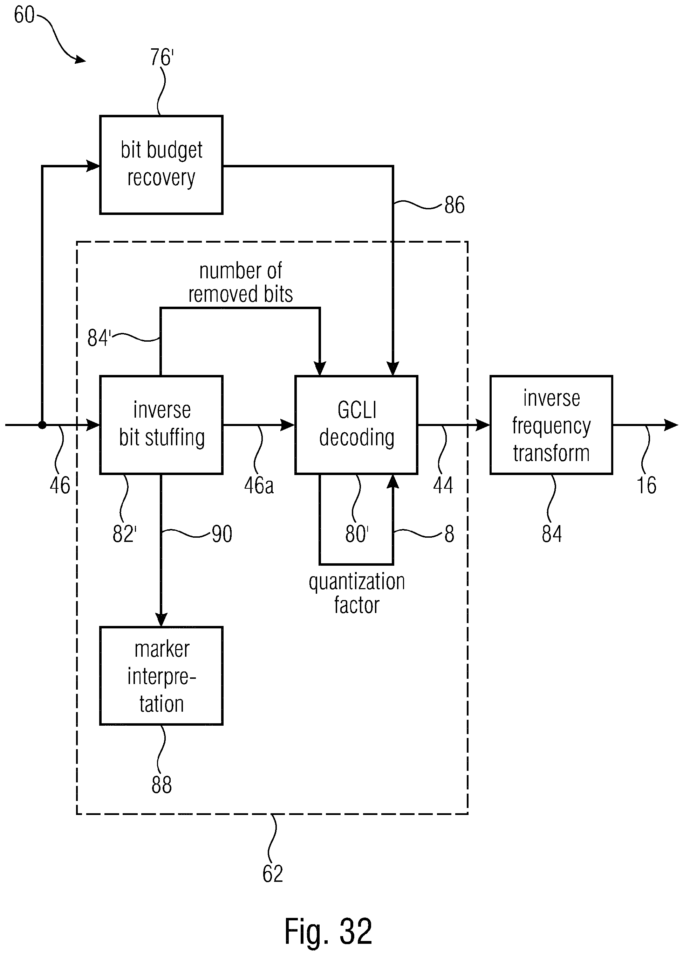

In order to solve this issue, a feedback loop from the bit stuffing module to the GCLI coding module may be inserted as illustrated in Fig. 31 and Fig. 32. Whenever the bit stuffing module 82 inserts a bit, the GCLI coding module 80 is informed that a bit has been inserted that has not been taken into account during rate control, using the feedback loop 84. In other words, the GCLI encoder 40 has one bit less for encoding the data. To track this situation, the GCLI encoder in addition obtains the bit budget 86 available for the current workgroup. Then for every coefficient, it tracks the remaining bit budget and simply aborts encoding when the bit budget is exceeded.

In other words, Fig. 31 shows an improved concept of an encoder 40 based on the concept described with respect to Fig. 30. Additionally, the rate control module 76 provides the remaining bit budget 86 to the GCLI coding module 80. This enables the GCLI coding module 80 to obtain or determine the remaining bit budget of a current encoding unit such as a workgroup. Having determined the remaining bit budget after performing the GCLI encoding, the remaining bit budget may be diminished or decreased by the actual inserted bit stuffing bits. This number of inserted bits is provided to the GCLI coding module 80 via feedback loop 84 from the bit stuffing module 82. Thus, the GCLI coding module is enabled to count the overall remaining bit budget and to indicate to the bit stuffing module 82 if the remaining bit budget is used and that no further bit stuffing is possible in the current workgroup.

According to embodiments, the encoder 40 of Fig. 31 is configured for at least partially encode a digital image representation into a data stream. The encoder comprises a rate control unit 76 and a processor 42. The rate control unit 76 may determine an available bit budget 86 in the data stream 46a. The processor 42 may process groups of coefficients 2 representing spatial components of the digital image representation 44 or the actual digital image 16 depending on the available bit budget 68. Each group comprises at least two coefficients 4 of frequency components, wherein the processing comprises identifying a first predefined bit pattern and a second predefined bit pattern within the groups of coefficients. Furthermore, the processor is configured to process the first and the second predetermined bit pattern by replacing one bit in the first predefined bit pattern into the second predefined bit pattern. The bit pattern may be, for example, a data word having a hexadecimal value of FE or FF. Thus, the first predefined bit pattern may be FE and the second predefined bit pattern may be FF. When referring to the pseudo code above, if such a predefined bit pattern is present in the data stream, the least significant bit of the data word is shifted to a subsequent data word. The released least significant bit position is thus replaced by a zero bit. This enables the decoder to look for one bit in the subsequent data word replacing the least significant bit of the current data word, if the current data word comprises a hexadecimal value of FE.

Using this technique, the decoder may regularly decode data words in the original digital image representation having a value of FE and FF with only one bit overhead (since they are both encoded as FE in the data stream and the LSB is shifted to the subsequent data word). Furthermore, if the decoder obtains a value of the data word of FF that is, due to the above described processing, absent in the regular data stream, the decoder may interpret this data word as additional information. At the beginning of the description of the fifth concept, the usage of this information was described.

Furthermore, the encoder 40 may generate the data stream 46 using the processed groups, wherein the use comprises including the second bit pattern to the data stream to indicate additional information and wherein the encoder is configured to reduce the available bit budget if the first bit pattern or the second bit pattern is included. More specifically, the encoder may generate the data stream using the processed groups and the second bit pattern to the data stream to indicate additional information using the second bit pattern. Furthermore, the encoder is configured to reduce the available bit budget if the second bit pattern is included. When referring back to the example of the data words above, when including the second bit pattern, i.e. FF, the remaining bit budget 86 may be reduced by eight bits (or one word). This may be indicated by the bit stuffing module 82 using the feedback loop 84. Furthermore, if the data stream 46a comprises regular values of FE or FF, the bit stuffing module 82 may shift the least significant bit of this data word to the subsequent data word and insert a zero bit at the released least significant bit position of the current data word. Thus, the bit stuffing module 82 may further indicate a reduction of one bit of the available bit budget 86 to the GCLI coding module 80 using the feedback loop 84.

In other words, the processor may determine if the second predefined bit pattern signaling additional information is included in the data stream. Furthermore, the processor is configured to use a respective number of bits less than the available bit budget for encoding the groups and to stop encoding the groups of coefficients or to stop adding additional information if a remaining bit budget is smaller (or less than) or equal to zero.

In a further embodiment, the encoder, for example in terms of the bit stuffing module 82, may indicate the remaining bit budget to the processor, for example, in terms of the GCLI coding module 80.

According to further embodiments, the processor may process the first and the second predefined bit pattern by removing a bit from a predetermined bit position, such as the least significant bit position, of the first predefined bit pattern and/or the second predefined bit pattern only at the predetermined bit position and to replace the removed bit of the predefined bit pattern, such as FE, FF, by a predefined bit value, such as zero, such that the first and the second predefined bit pattern compares a value of the first predefined bit pattern, such as FE, before processing.

More precisely, the processor may remove the bit from a least significant position in the first and the second predefined bit pattern and shift the removed bit of the first and the second predefined bit pattern to a subsequent bit pattern to obtain a value of the first predefined bit pattern before processing for the first and the second predefined bit pattern after processing.

This, however, has two important consequences. First of all, the frequency coefficients should be ordered in such a way, that important coefficients are encoded first, since the coefficient that is encoded last in a workgroup risks being dropped. For DCT transforms, a zig-zag scan giving priority to small frequencies is preferable. This is described with respect to the first concept.

Secondly, it should be ensured that the decoder can detect the aborting of encoding (of the additional information) in order to properly decode the codestream. Otherwise, it would misinterpret the following bits in the bit stream. To this end, a bit budget recovery is added to the decoder 60 as shown in Fig. 32. The decoder 60 firsts performs inverse bit stuffing using inverse bit stuffing 82' by removing all inserted bits and removing inserted markers (data words comprising FF) from the codestream by forwarding them to the marker interpretation module 88. Moreover, a bit budget recovery module 76 informs the GCLI decoder 80 about the available bit budget 86 for the currently processed block.

Given that the quantization value 8 in general also depends on the data of the currently processed workgroup, that is not available to the decoder before decoding the actual data, the quantization factor needs to be retrieved from the bit stream 46a.

Given that the GCLI decoder knows the available bit budget 86, it can track the number of additional bits generated by the bit stuffer and abort decoding at the same position than the encoder 40 did abort encoding.

In other words, the decoder 60 shown in Fig. 32 may be configured to at least partially decode the data stream 46 of a digital image representation. The data stream comprises encoded values of groups of coefficients representing frequency components of the digital image representation, each group comprising at least two coefficients of frequency components. A first predefined bit pattern and a second predefined bit pattern within the groups of coefficients comprise a processing during encoding by replacing one bit in the first predefined bit pattern. Therefore, the decoder may perform an inverse bit stuffing using, for example, the inverse bit stuffing module 82'. Thus, the first and the second predefined bit pattern that have been processed in the encoder, such that a least significant bit has shifted to a subsequent data word, or more generally, a subsequent position in the data stream, may be reversed, i.e. decoded, to obtain the sequence of FE and FF to decode the digital image representation.

Furthermore, the decoder may comprise a bit budget determiner 76' configured to determine a remaining bit budget available on a data stream by omitting to count the second predefined bit pattern and the replaced bit. To be more precise, the second predefined bit pattern in the data stream 46 indicates additional information in the data stream, where the second predefined bit pattern in the encoded values of the groups of coefficients indicates the respective coefficients and is further omitted in the data stream 46 due to the bit replacement described above. Thus, the inverse bit stuffing module 82' may perform this processing to obtain the original coefficients from the data stream 46 using the inverse bit replacement. Furthermore, the inverse bit stuffing module 82' or more generally the processor 62, may obtain the second predefined bit pattern 90 from the data stream 46 and provides the same to the marker interpretation module 88.

Thus, the information present in the second predefined bit pattern may be interpreted or derived in the marker interpretation module 88. In other words, the decoder may decode the encoded values and extract additional information from the predefined bit pattern. After the inverse bit stuffing module 82' performs the reverse bit replacement and the extraction of the second predefined bit pattern from the data stream, it provides the data stream 46a to the GCLI decoding module 80'. The GCLI coding module 80' further receives the remaining bit budget 86 from the bit budget recovery module 76' due to analyzing the data stream 46, for example with respect to the differences between remaining bit planes or between zero bit planes as indicated in the bit stream. From this information, the bit budget recovery module 76' may derive the remaining bit budget. This is the same remaining bit budget as determined by the rate control module in the encoder. Furthermore, the GCLI decoding module 80' may receive the number of removed bits 84' from the inversed bit stuffing module 82'. From this information, the GCLI decoding module 80' may derive a position in the data stream 46a where the number of removed bits exceed the remaining available bit budget 86. At this point in the data stream 46a, the GCLI decoder processes or decodes the data stream 46a without the actual reverse bit replacement, since the encoder stopped adding additional markers at that point in the intermediate bit stream 46a. Thus, the GCLI decoding unit is able to decode the data stream in accordance with the encoder and is even able to derive the position in the bit stream 46a where the encoder stops adding additional information where a maximum number of bits available for the bit stream 46 are derived. Thus, instead of the inverse bit stuffing module 82', the GCLI decoding may perform the reverse replacement of the bits from the data stream 46a and furthermore, the inverse bit stuffing performs the determination of the second predefined bit pattern in the data stream 46 only.

However, if the currently decoded unit is too small to have the quantization factor separately encoded, as for example, if blocks of groups of coefficients are encoded separately, but only one quantization factor is provided per workgroup, the GCLI decoder may determine a current quantization factor from the data stream 46a.

After the 2-dimensional digital image representation 44 or the groups of coefficients 4 are derived from the GCLI decoding module 80', an inverse frequency transform may be performed using the spatial transform unit 64 to obtain the digital image 16.

According to embodiments, the decoder may indicate if the second predefined bit pattern signaling the additional information is included in the data stream 46 and wherein the decoder (or a respective processor) is configured to use one bit less than the available bit budget for decoding the groups and to stop decoding the groups of coefficients if a remaining bit budget is smaller or equal to zero.

Embodiments further show that the decoder may process or obtain the first and the second predefined bit pattern by removing a bit from a predetermined bit position included in the first predefined pattern only at the predetermined bit position and to replace the removed bit in the predetermined bit pattern, i.e. the first and the second predetermined bit pattern, by one bit from a subsequent bit pattern to reverse the bit replacement.

According to embodiments, the decoder may remove the bit from a least significant position in the first and the second processed predefined bit pattern and to shift a most significant bit of the subsequent bit pattern to a least significant position in the first and the second processed predefined bit pattern to obtain a reprocessed first and second predefined bit pattern.

Limiting the impact of coding aborting

In other words, the negative impact on quality when aborting encoding and decoding can be reduced by assuming in the rate control that a certain number of bit stuffs will occur. This can be done explicitly, or implicitly. In the first case, the rate control only attributes a fraction of the available bit budget to actual coded bits, while the remainder can be used for bit stuffing.

In the second case, the number of necessary sign bits can be overestimated by assuming that a sign bit will be sent out even for zero coefficients. While this is not necessarily the case, it simplifies the rate control and at the same time gives some margin for occurring bit stuffs.

However, please note that in both cases it might happen that when performing the actual entropy encoding, it might happen that the available bit budget for the workgroup is not completely used.

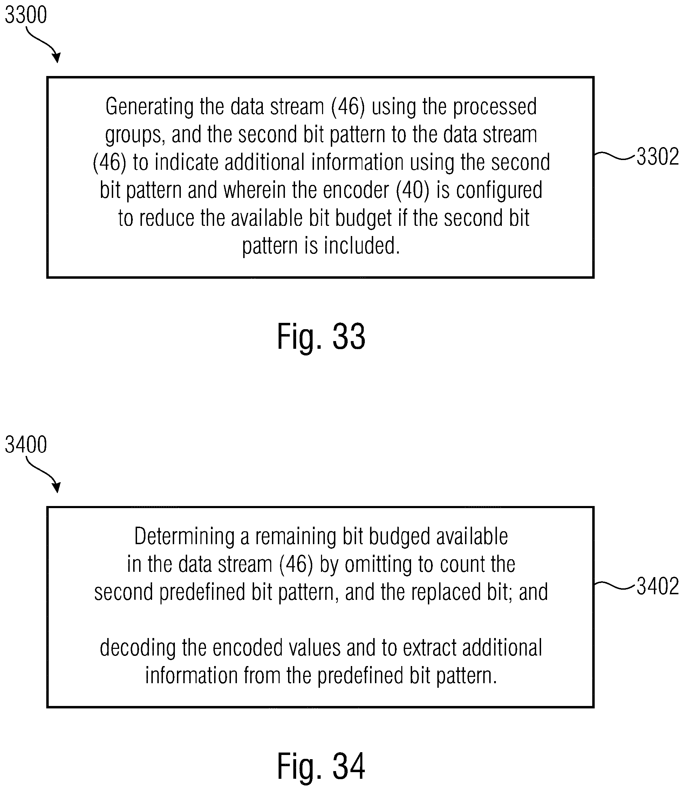

Fig. 33 shows a schematic block diagram of a method 3300 for at least partially encoding a digital image representation into a data stream. The method 3300 comprises a step 3302 of generating the data stream using the processed groups, and the second bit pattern to the data stream to indicate additional information using the second bit pattern and wherein the encoder is configured to reduce the available bit budget if the second bit pattern is included.

Fig. 34 shows a schematic block diagram of a method 3400 for at least partially decoding a data stream of the digital image representation. The method 3400 comprises a step 3402 of determining a remaining bit budged available in the data stream by omitting to count the second predefined bit pattern, and the replaced bit; and by decoding the encoded values and to extract additional information from the predefined bit pattern.

Concept 6

Refinement scans without overhead

Issue

In order to meet the target compression bit rate, it is necessary to crop some of the least significant bits of the frequency coefficients contained in the workgroup. The easiest solution is to crop complete bit planes for the whole workgroup. This, however, results in very few truncation points, such that the available bit budget for a workgroup cannot be completely used. In particular for rate control strategies where every workgroup is assigned exactly the same bit budget, the remaining bits can represent a significant portion of the overall bit budget.

This can be avoided by cropping for some frequency coefficients one bit plane less than for others. On the one hand, this increases the number of possible truncation points, and hence also the probability to reach the target rate more closely. On the other hand, for every possible truncation point the rate control needs to compute some coding statistics, in order to select the best possible truncation point. Consequently, the more truncation points exist, the more hardware resources are used for rate control. This holds in particular for the size of the memory holding the different truncation point statistics. And even more importantly, given that the decoder needs to know the chosen truncation point, signaling overhead is increasing as well with the number of possible truncation points. A remedy to these difficulties is presented in the following subsections.

Architecture

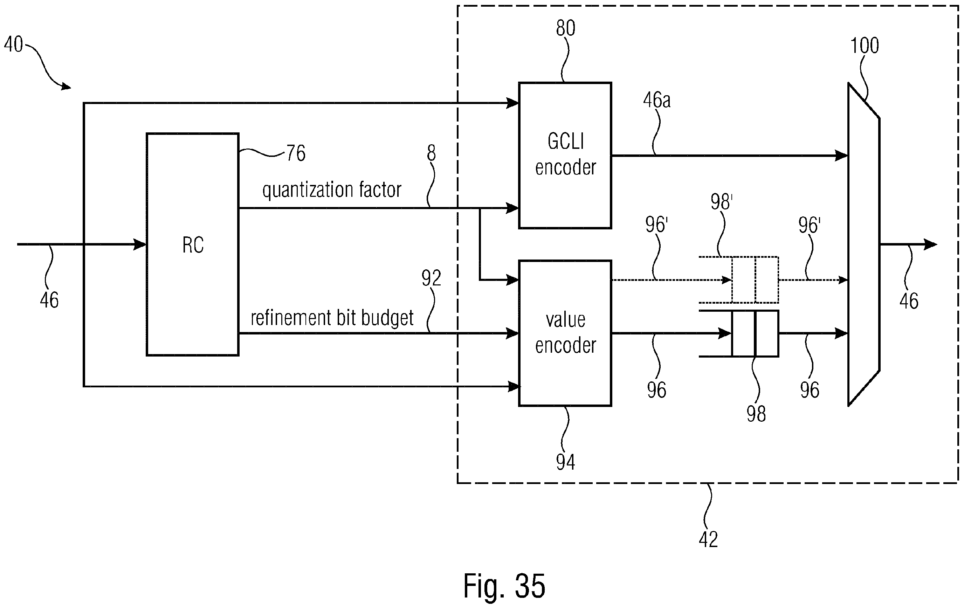

Fig: 8 shows a schematic block diagram of the encoder 40 being modified with regard to Concept 6 as respectively described. A modified and more detailed version covering embodiments of the sixth concept is described with respect to Fig. 35. The encoder 40 is configured for at least partially encoding a 2-dimensional digital image representation into a compressed data stream. The encoder 40 comprises a rate control unit 76 and a processor 42. The rate control unit 76 may determine a difference between a bit budget used for differential encoding (or GCLI encoding) groups of coefficients representing spatial components of the digital image representation and a maximum available bit budget to determine a remaining bit budget also referred to as refinement bit budget 92. Thus, the GCLI encoder and the value encoder may operate in parallel for the same block or workgroup. Alternatively, the difference between a bit budget used for differential encoding (or GCLI encoding) groups of coefficients representing spatial components of the digital image representation and a maximum available bit budget may be computed by the GCLI encoder to determine a remaining bit budget also referred to as refinement bit budget 92 The maximum available bit budget may be a number of bits (or words) that are used for a current unit of the 2-dimensional digital image representation that are encoded together in one part of the data stream. Thus, this current unit may be a block or a workgroup.

The processor 42 may generate, by encoding, the compressed data stream 46 comprising differentially encoded groups of coefficients representing spatial components of the digital image representation. The processor may encode the compressed data stream 46 above a quantization factor used to compress the groups of coefficients. Furthermore, the encoder may encode one or more remaining bits below the quantization factor according to the remaining bit budget and to reduce the remaining bit budget, respectively. Thus, the encoding of the compressed data stream above the quantization factor may be performed by GCLI encoding using the GCLI encoder 80 to encode the delta values and the value encoder 94 to encode the (raw) bits of the coefficients. However, by encoding of the compressed data stream above the quantization factor, a bit budget available for encoding the block or workgroup may not be completely used, meaning that there are further bits available that may be used to encode the current block or workgroup. This available bit budget may be comparatively large, since the granularity or truncation points of the block or workgroup are comparatively low. In other words, since only complete bit planes of each group of coefficients within the block or workgroup are cut off due to quantization, in a worst case scenario, it may be a number of coefficients in the block or workgroup minus one bit remaining in the currently encoded unit in the data stream.

Fig. 35 further reveals an optional structure of the processor 42. Thus, the GCLI encoder 80 may differentially encode the delta value into an intermediate data stream 46a considering or using the quantization factor 8 provided by the rate control unit 76. Furthermore, the rate control unit 76 (or optionally the value encoder 94) may calculate the refinement bit budget 92 by calculating the number of bits used to GCLI encode the digital image representation 44 into a data stream and the maximum possible number of bits the encoded data stream may (maximally) use. The rate control unit 76 is enabled to calculate the number of bits used to encode the data stream, since it comprises the same information as the GCLI encoder, i.e. the 2-dimensional digital image representation 44 and the quantization factor 8. From this information, the rate control unit may provide the refinement bit budget 92 to the value encoder 94, at least as long as the information is obtained by the rate control 76 and not by the value encoder 94. Hence, the value encoder 94 encodes the remaining bit planes of the groups of coefficients, i.e. those bit planes above the quantization threshold/factor and below the leading zero bit planes.

Additionally, the value encoder may encode from the 2-dimensional digital image representation 44 remaining bit planes of single groups of coefficients below the quantization factor, i.e. those bit planes that have been omitted from encoding by the GCLI encoder. The value encoder may provide the encoded bit planes 96 (i.e. the informative/remaining bit planes and the refinement bit planes below the quantization factor 2a, or alternatively all active bit planes) and provides the encoded bit planes to a FIFO (First In, First Out) register 98. Accordingly, after providing the bit planes 96 to the FIFO register, the value encoder 94 decreases the refinement bit budget 92 by the respective bit budget used to encode the remaining bit planes 96 below the quantization factor. Alternatively, the remaining bit budged indicates the bit budget remaining in the data stream (or the part of the data stream used to encode a current block or workgroup) after the delta values are encoded. In this case, the value decoder may decrease the number of remaining bit planes according to the number of bits used to encode/write the bit planes 96. Thus, the encoding of the bit planes may refer to providing the raw bits of the respective bit planes to the FIFO register 98. An adaption of the delta values 46a encoded by the GCLI encoder to the additionally encoded refinement bit planes (below the quantization factor) may be omitted or not performed.

Furthermore, the processor 42 may comprise a multiplexer or a bit combiner 100, that may combine the data stream 46a with the bit planes 96 to obtain the data stream 46. Thus, the value encoder may encode one further bit plane (or any number of bit planes below the quantization factor) if further remaining bit budget is available. However, further constraints may initiate the encoder to omit a further bit plane below the quantization factor to a group of coefficients, e.g. if the group of coefficients comprises only zeros (i.e. zero bits). The bit planes below the quantization factor may be inserted into the data stream 46, i.e. appended to the respective encoded part of the coefficient above the quantization threshold such that the bits representing one coefficient are in a consecutive order in the data stream. In other words, the additional bit planes below the quantization factor may be appended directly after the respective group of coefficients in the bit stream 46. Alternatively, the additional bit planes below the quantization factor may be appended to the data stream 46a such that the data stream 46 comprises first (all) bits of the intermediate data stream 46a and second the additional bits planes 96 behind the intermediate data stream 46a. In this case, the encoder 40 of Fig. 35 may comprise an optional further FIFO register 98' arranged in parallel to the FIFO register 98. The further FIFO register 98' may store the bit planes 96' below the quantization threshold. Hence, the FIFO register 98 may store only the remaining bit planes, such that the bit planes 96 only comprise the remaining bit planes. Thus the data stream 46 may be formed by appending remaining bit planes 96 to the intermediate data stream 46a comprising the delta values and by appending the bit planes 96' below the quantization threshold to the remaining bit planes 96.

The value encoder 94 may stop or interrupt providing additional bit planes below the quantization factor to the FIFO register if the refinement bit budget minus the bit budget used by the bit planes below the quantization factor provided to the FIFO register, is less than a bit budget used to encode a further bit plane of a further group of coefficients below the quantization factor. However, the remaining bit budget may also refer to the number of bits remaining for the active bit plains or (which may optionally be different) the number of bits remaining for the remaining bit planes in addition to the refinement bit planes (and thus not only indicating the refinement bit planes below the quantization threshold) as described above. In this case, the value encoder may determine the bit budget used to encode all remaining bit planes (above the quantization threshold) e.g. based on the information provided by the encoded delta values. Unless this bit budget is known, the value encoder may determine a separate bit budget available for refinement bit planes. Thus, the value encoder may interrupt encoding if the separate bit budget is used.

Thus, the rate control unit 76 may calculate the quantization factor 8 using the maximum available bit budget (for a current unit of the digital image representation to be encoded). Furthermore, the rate control unit may calculate the quantization 8 by choosing the smallest quantization factor to be applicable to the groups of coefficients such that the encoding of groups of coefficients using the smallest quantization factor 8 uses a bit budget for differential encoding within the maximum available bit budget. In other words, if the quantization factor 8 is increased by one further bit plane, the bit budget used to encode the current unit of the digital image representation would exceed the maximum available bit budget.

In other words, a rate control 76 computes the quantization factor 8 in order to not exceed the available bit budget. To this end, it assumes that every coefficient is quantized with the same quantization factor 8. In particular, the bit budget used for GCLI encoding is based on this assumption.

In addition, the rate control 76 also computes the refinement bit budget 92 that is available for encoding one additional bit plane for some of the frequency coefficients or the group of coefficients.

Knowing the quantization factor 8, the number of remaining bit planes or zero bit planes can be determined and encoded by the GCLI encoder 80 using a variable length code as explained in the general concept and in the first concept. The value encoder 80 outputs the active bit planes, i.e. the bit planes 96 below the leading zero bit planes, and stores them into a FIFO register 98. A multiplexer 100 then combines both data streams 46a and 96 by first reading the GCLI bits 46a (i.e. the encoded delta values), followed by the value bits 96 (i.e. the bit planes.

In other words the value encoder 94 may at least partially or completely encode the bit plane and determine whether the bit budget used to differentially encode the bit plane is smaller than the remaining bit budget and include the encoded further bit plane to the encoded compressed data stream when the bit budget, after appending the encoded further bit plane, remains positive.

The number of bits per frequency coefficient that are output by the value encoder 94 a priori equals the number of remaining bits signaled by the GCLI encoder. If however a sufficient refinement bit budget is available, then an additional least significant bit plane is appended. Please note that this additional bit plane may not be signaled (or omitted from signaling) by the GCLI encoder. In case the GCLI encoder has signaled a zero coefficient, two refinement bits need to be sent per coefficient, one for the value and one for the sign. Otherwise, only one bit per coefficient is sufficient.

Thus, the processor may encode a bit plane comprising bits below the quantization factor using a value and a sign bit if a respective coefficient (or group) comprises a value different from zero and further, to include the value and the sign bit or only the value bit into the encoded compressed data stream depending on the value of the respective coefficients. In other words, the GCLI encoder 80 may omit encoding the signs of a coefficient group or the sign of a coefficient into the data stream if the coefficient group or the coefficient has a value of zero after quantization. However, when adding an additional bit plane of the group of coefficients, the coefficient having a value of zero after quantization may comprise a value different from zero if the additional bit plane 96 is added. Thus, the value encoder 94 should add a sign value of the respective coefficient to the data stream 46 to indicate whether the value of the refined coefficient is positive or negative.

The value encoder 94 tracks the number of emitted refinement bits 96, and when the refinement bit budget is not sufficient to refine a coefficient group, it stops emitting additional refinement bits. This means that the coefficient group encoded first will have a higher chance of obtaining an additional refinement bit plane. Consequently, the frequency coefficients should be processed in order of visual importance. Moreover, non-zero coefficients should ideally be refined before zero coefficients, since refining the latter ones might not increase the PSNR (Peak Signal-to-Noise Ratio).

When using for instance a DCT transform, both aspects are fulfilled when using a zig-zag scan. Please note that this matches with the order required to apply the coding improvements described with respect to the first concept.

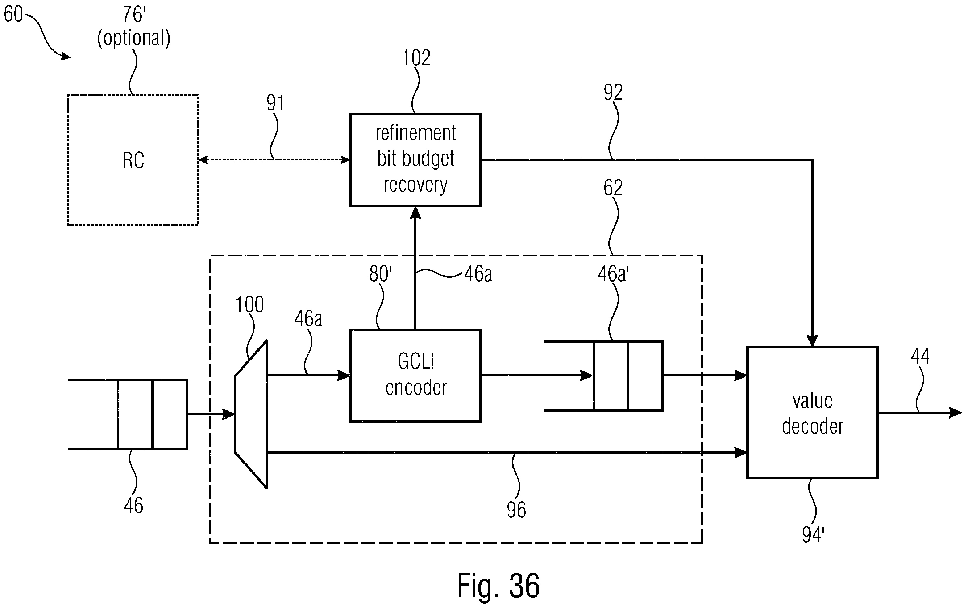

Fig. 13 illustrates the corresponding decoder architecture wherein Fig. 36a and Fig. 36b indicate embodiments thereof. The decoder retrieves the coded bit stream 46, starting with the bits for GCLI decoding. Once the number of remaining bit planes are known for all coefficient groups of the complete workgroup, also the number of data bits can be computed, assuming that every coefficient obtains a sign bit as long as there is at least one remaining bit plane for the coefficient group. In combination with the rate control strategy (described below in the chapter "Combination with rate control"), this finally allows to recover the bit budget that has been used on the encoder side for adding additional bit planes to some of the frequency coefficients.

With this knowledge, the value decoder can then undo the operation of the value encoder: Whenever there is sufficient refinement bit budget left, the value decoder reads an additional bit for all coefficients of the currently processed coefficient group. When the number of remaining bit planes signaled by the GCLI decoder is zero, then additionally a sign bit per coefficient should be read.

An actual implementation may be obtained by running the pseudo-code below:

$$\text{numberRefinementBits} = 0$$

$$\text{for all coefficient groups } F_k \text{ in increasing order}$$

$$\text{for all components } c$$

$$\text{if } r(F_k) > 0$$

$$\text{numberRefinementBits} \mathrel{+}= (r(F_k) + 1) \cdot \text{size}(F_k)$$

$$\text{end if}$$

$$\text{end for}$$

$$\text{end for}$$

$$\text{if constant workgroup size}$$

$$\text{bitbudgetFractionalBits} = \text{workgroup bit budget} - \text{numberRefinementBits}$$

$$\text{else}$$

$$\text{bitbudgetFractionalBits} = 16 - \text{numberRefinementBits mod } 16$$

$$\text{end if}$$

Thus, Fig. 36a shows an extension of the decoding scheme of Fig. 13 for the sixth concept. The decoder for at least partially decoding 2-dimensional digital image representation from a compressed data stream 46 comprises a processor 62, a bit budget determiner 102 and a value decoder 94'. The processor 62 may generate, by decoding, the 2-dimensional digital image representation 44 from the data stream. The data stream 44 comprising values representing differentially encoded groups of coefficients representing frequency components of the digital image representation. The processor is further configured to decode the compressed data stream 46 above a quantization factor 8 used to compress the coefficients or at least the delta values 46a in the data stream to obtain decoded delta values 46a'. Therefore, the processor 62 may comprise a de-multiplexer 100' receiving the compressed data stream 46 and splitting the intermediate data stream 46a comprising the delta values and the encoded bit planes 96. The GCLI decoder 80' may receive the intermediate data stream 46a from the de-multiplexer 100' and performs the GCLI decoding to derive the decoded delta values 46a'.

The delta values 46a are provided to the bit budget determiner 102 for determining a difference between the bits used to form the intermediate data stream 46a and the maximum available bits the data stream 46 may use. This difference, the refinement bit budget 92, is therefore the same bit budget as determined by the rate control unit 76 in the encoder. Alternatively, the refinement bit budget 92 may refer to the bit budget available for the refinement bit planes. In this case, the refinement bit budget recovery 102 may determine the number of bits used to encode the remaining bit planes based on the (respective) information obtained from the delta values. Additionally, the decoded delta values 46a' are provided to a value decoder 94' from the GCLI decoder 80'. Additionally, the value decoder receives the encoded bit planes 96 and the refinement bit budget 92.

Thus, the value decoder 94' may decode, depending on the remaining bit budget, the encoded bit planes 96 comprising the encoded remaining bits below the quantization factor. Furthermore, the value decoder 94' reduces the refinement bit budget 92 according to a number of encoded bits of the bit planes 96 (or the refinement bit planes depending on the definition of the refinement bit budget). As long as there is a sufficiently large and positive refinement bit budget, the value decoder interprets decoded bits from the encoded bit planes 96 as referring to additional refinement bit planes.

Furthermore, as described above, the bit budget determiner 102 may determine a difference between a bit budget used for differential encoding and a maximum available bit budget to determine a remaining bit budget relating to or even equal to a bit budget used in the compressed data stream filled with encoded remaining bits below the quantization factor. Since the remaining bit budget may be different from a multiple of the bits representing one bit plane, there may be still a residual between the maximum available bit budget and the actual bit budget used to encode the compressed data stream 46.

Further embodiments show the bit budget determiner calculating a bit budget used to decode a bit plane of a group of the groups of coefficients, wherein the bit plane refers to bits of the group below the quantization factor. Furthermore, the value decoder may decode the refinement bit plane if the bit budget used to decode the refinement bit plane is smaller than the remaining bit budget. According to embodiments, the value decoder may decode a bit plane comprising bits below the quantization factor using a value and a sign bit if a respective group comprises a value of zero and configured to omit decoding the sign bit and using only the value bit if the respective group or coefficient comprises a value different from zero.

In other words, the GCLI decoding unit 80' may control the demultiplexer 100'. Based on the decoded delta values, GCLI decoding unit may indicate if the delta values are completely decoded (and therefore that any further values refer to (raw) bits of the bit planes to be sent directly to the value decoder 94'). Additionally, the value decoder may also control the demultiplexer 100' by indicating an additional refinement bit plane that should be additionally provided to the value decoder 94'. For providing the remaining bit planes to the value decoder, the demultiplexer 100' may be controlled (either) by the GCLI decoder or the value encoder since both receive the respective delta values 46'.

Optimization of sign coding

The approach described above only works if the decoder can assume that every coefficient having at least one remaining bit plane also has a sign bit, even in case the coefficient value is zero. Consequently, the encoder needs to perform the same assumption. This is obviously not optimal.

A remedy is that the rate control indeed assumes a sign bit per coefficient having at least one remaining bit plane. For every coefficient the value encoder outputs, it checks whether the coefficient is zero. If so, it omits the sign bit and increases the refinement bit budget by one. In this case, the decoder can do exactly the same.

Thus, the processor may omit encoding a sign bit and increase the remaining bit budget by one bit if, after adding a bit plane to a group of coefficients, one coefficient in the group of coefficients remains zero. The respective decoder may omit decoding a sign bit and increase the remaining bit budget by one bit if, after adding a bit to a coefficient, the coefficient remains zero. In other words, if a quantized coefficient is zero, typically, when refining this coefficient, both the refinement bit and an additional sign bit have to be added to indicate, if the coefficient after refining comprises a value different from zero, comprises the correct sign after decoding. However, if the refined coefficient remains zero, i.e. the refinement bit is zero, the sign bit of the coefficient may still be omitted.

Combination with rate control

For proper decoding, it is crucial that the decoder can derive the bit budget available for the additional refinement bits. Corresponding example scenarios are discussed in the following subsections.

The optional rate control unit 76' may calculate or readjust the decoding algorithm according to a specific rate control strategy performed in the encoder. In other words, the rate control unit 76' may provide the relevant information such that the decoder may take the same decisions as performed by the encoder. For example, the quantization factor may be omitted from explicitly encoding in the data stream. Thus, the rate control unit 76' or the GCLI decoder or the refinement bit budget recovery may determine the respective quantization factor. In this case, the decoder (using the rate control unit 76') may imitate the rate control of the encoder.

According to embodiments, the rate control may also allow for adding (or removing) a bit budget that may be used to encode a block or a workgroup. E.g., each fifth encoded workgroup may comprise one additional byte for a respective encoded (part of the) data stream. Thus, the rate control unit 76' may indicate to the refinement bit budget using connection 91 that each fifth workgroup comprises one additional byte. In this case, the refinement bit budget recovery unit 102 may calculate the correct number of remaining bits used for refinement bit planes.

Constant bit budget workgroup

Assigning a constant bit budget per workgroup permits easy parallel decoding since the decoder knows beforehand where a workgroup is located in the codestream. Moreover, it increases error robustness.

For such a coding mode, however, it is crucial to fully exploit the available bit budget, otherwise the PSNR of the decoded image will drop significantly. Consequently, the proposed scheme is particularly useful for such a coding scheme.

Fortunately, determination of the bit budget available for refinement bits is easy, since the bit budget available per workgroup can be easily signaled in the codestream. Given that the number of bits required for GCLI coding is known after decoding them, and given that the number of remaining bit planes can be derived as well, computation of the bit budget for refinement is easy.

Refining padding bits

The number of bits required to encode an integer number of bit planes for a workgroup is typically not a multiple of 8, 16 or even 32. Consequently, the bit stream for the workgroups is not aligned with byte or word boundaries.

This can, a priori, be enforced by adding padding bits. However, when assuming a workgroup size of four 4x4 DCT blocks, encoded with 4bpp, adding 7 padding bits to reach the next byte boundary already corresponds to an overhead of 2.7%.

Consequently, image quality can be improved by adding additional refinement bits for some of the frequency coefficients. Again the size of the bit budget available for refinement coding can be easily determined by determining the number of bits required for GCLI coding and the number of data bits. The number of bits required reaching the next byte or word boundary then corresponds to the bit budget for refinement.

Thus, the processor may determine, based on the bit budget for differential encoding groups of coefficients, a difference between a size of a multiple of an encoding pattern and to include encoded remaining bits or remaining bit planes to reduce the difference. The encoding pattern may be a data word or a byte depending on the actual preferences or the hardware architecture. If such an encoding pattern has to be used by a coefficient or a group of coefficients, there may be, depending on the actual quantization threshold, remaining bits in the multiple of the encoding pattern. These remaining bits may be used for refinement.

According to embodiments, the processor may perform the differential encoding by determining a difference from a number of informative bit planes of a preceding group to a current group and to encode the difference, where informative bit planes of the preceding group and informative bit planes of the current group are encoded independently. Accordingly, the processor may perform the differential decoding by determining a deviation from a number of informative bit planes of a preceding group to a current group, where informative bit planes of the preceding group and informative bit planes of the current group are decoded independently.

Moreover, the processor 42 may generate the data stream using deviations from a number of informative bit planes of a preceding group to a current group for all encoded groups of coefficients first, encoded informative bit planes of all encoded groups second, and, unless the remaining bit budget is positive, remaining bits below the quantization factor third. Alternatively, the data stream may be generated using deviations from a number of informative bit planes of a preceding group to a current group for all encoded groups of coefficients first, and unless the remaining bit budget is positive, alternating encoded informative bit planes of all encoded groups and the remaining bits below the quantization factor. This refers to the two different approaches for generating the data stream as described with respect to Figs. 35 and 36, if the refinement bits are appended to the intermediate data stream or if the refinement bits are included into the intermediate data stream.

Accordingly, the decoder may decode the aforementioned types of data streams. Thus, the respective data stream 46 comprises differentially encoder groups of coefficients representing frequency components of a digital image representation. The groups of coefficients are quantized using a quantization factor. The differential encoding is represented by a deviation from a number of informative bit planes of a preceding group to a current group and encoded informative bit planes of the preceding group and encoded informative bit planes of the current group encoded independently from the other group. The informative bit planes represent bits of the coefficients above the quantization factor. For the consecutive or current group, the deviation/difference indicates a number of informative bit planes different from the actual number of encoded informative bit planes of the current group. The difference indicates a different number of informative bits of coefficients in the current groups since at least one refinement bit may be added to one coefficient such that the number of bits representing this coefficient is different from the number of remaining bit planes indicated by the encoded difference. This is shown with respect to Fig. 14, where in contrast to concept 1, the delta value 68 indicates a difference between a number of remaining bit planes that is different from an actual difference between a number of remaining bit planes of consecutive groups of coefficients.

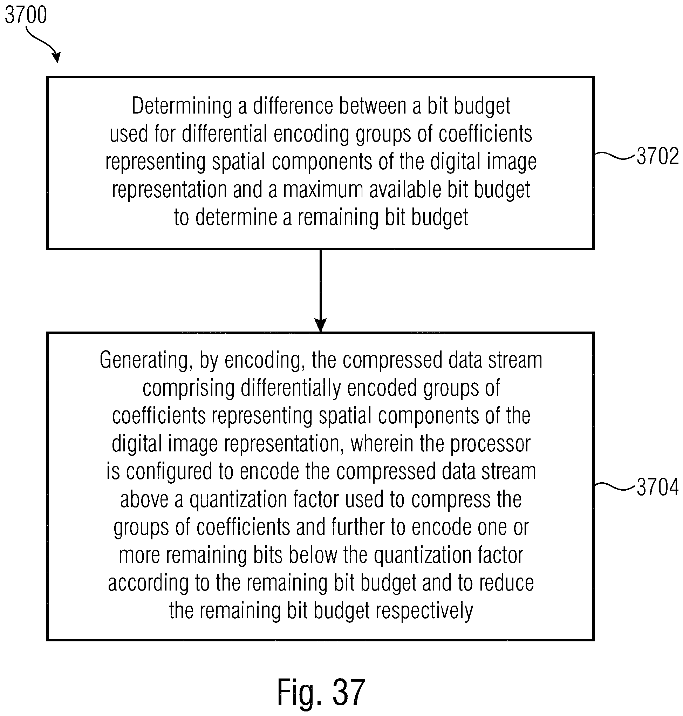

Fig. 37 shows a schematic block diagram of a method 3700 for at least partially encoding a 2-dimensional digital image representation into a compressed data stream.

The method 3700 comprises a step 3702 of determining a difference between a bit budget used for differential encoding groups of coefficients representing spatial components of the digital image representation and a maximum available bit budget to determine a remaining bit budget and a step 3704 of generating, by encoding, the compressed data stream comprising differentially encoded groups of coefficients representing spatial components of the digital image representation, wherein the processor is configured to encode the compressed data stream above a quantization factor used to compress the groups of coefficients and further to encode one or more remaining bits below the quantization factor according to the remaining bit budget and to reduce the remaining bit budget respectively.

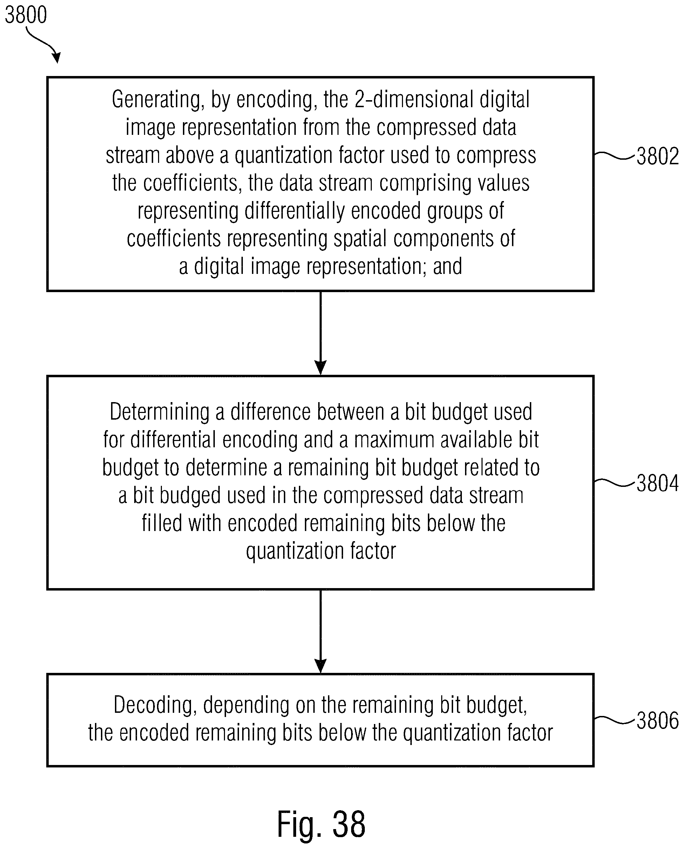

Fig. 38 shows a schematic block diagram of a method 3800 for at least partially decoding a 2-dimensional digital image representation from a compressed data stream.

The method 3800 comprises a step 3802 of generating, by decoding, the 2-dimensional digital image representation from the compressed data stream above a quantization factor used to compress the coefficients, the data stream comprising values representing differentially encoded groups of coefficients representing spatial components of a digital image representation, a step 3804 of determining a difference between a bit budget used for differential encoding and a maximum available bit budget to determine a remaining bit budget related to a bit budged used in the compressed data stream filled with encoded remaining bits below the quantization factor and a step 3806 of decoding, depending on the remaining bit budget, the encoded remaining bits below the quantization factor and optionally the remaining bit planes.

## Alternative approaches

These alternative approaches relate to the signaling principle where first, the delta values, second the remaining bit planes and third, the refinement bit planes are consecutively encoded.

## Modification of GCLI coding for refinement

With respect to the sixth concept, the additional refinement bits have not been taken into account during GCLI encoding. This can obviously be changed: Whenever an additional bit plane is added to a coefficient, also the $\delta$-value signaling the number of remaining bit planes can be adapted. The decoder still tracks the bit budget available for additional refinement bits. Whenever there is enough bit budget for an additional refinement bit, it assumes that the least significant bit plane belongs to the additional bit plane which effectively reduces quantization. Also the refinement sign bits can be handled accordingly.

Such a solution gives the benefit, that "useless" refinement of zero coefficients can be avoided. In fact, whenever the encoder determines that the additional bit plane for a zero coefficient is just zero, it does not modify the $\delta$-value, informing the decoder that no refinement has taken place. Moreover, determining the number of value bits for a coefficient is easier for the decoder, since it is directly related to the $\delta$-value without considering the bit budget available for refinement bits.

On the other hand, tracking of the bit budget for refinement bits is much more complicated, since not only additional data and sign bits, but also the impact for signaling the $\delta$-value needs to be taken into account. In fact, both the encoder and the decoder need to determine the $\delta$-value with and without the additional refinement bits. The difference between both of them needs to be subtracted from the bit budget of the refinement bits, since the rate control did not consider the additional refinement bit when computing the quantization factor.

## Post coding refinement

Instead of including the additional refinement bits directly in value encoding and decoding, the refinement bits can also be appended after having encoded the workgroup in an ordinary manner. This, however, increases decoder complexity, since first all decoded frequency coefficients need to be buffered, until the refinement bits can be read from the codestream.

## Comparison with state of the art

Reference [3] uses explicit signaling, which frequency coefficients should be quantized less. In order to avoid excessive overhead, such a signaling is only performed on the level of complete lines (a line of a picture/image comprises multiple slices). By these means, the granularity is rather large and cannot be used for constant workgroup size coding or avoidance of padding.

Concept 7

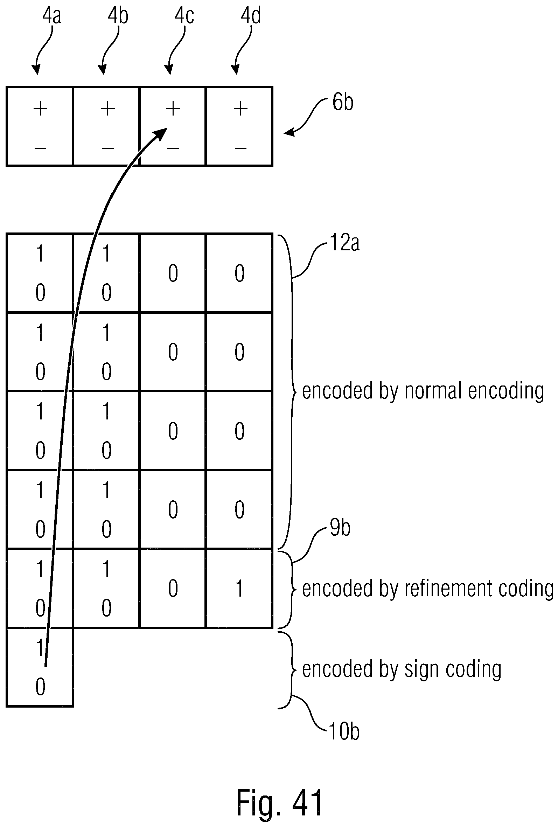

A respective encoder as, for example, shown in Fig. 8, may at least partially encode a digital image representation into a data stream. The encoder comprises a processor for encoding groups of coefficients representing frequency components of the digital image representation. The processor may form the data stream using the encoded groups of coefficients, wherein, if a coefficient is zero, the processor may omit the respective sign information 6b from encoding and to apply, for each omitted (reference) sign, additional information to a different coefficient. The respective decoder shown for example in Fig. 13, may at least partially decode a digital image representation from the data stream. The data stream comprises encoded values representing encoded groups of coefficients representing frequency components of the digital image representation. The decoder further comprises a processor configured to decode the encoded values representing a group of coefficients, wherein the processor is configured to determine, if any of the coefficients is zero, additional information from the data stream for a different coefficient and to omit decoding a sign for the zero coefficient. In other words, as shown with respect to Fig. 41, if, for example, coefficient 4c comprises only zero bits, the respective sign information 6b may be omitted from encoding. Due to the omission of encoding the sign bit, one position in the data stream is free. This position may be used for adding an additional bit 108 to one of the coefficients, for example, coefficient 4a. Thus, the coefficient 4a comprises more information since a further least significant byte is applied. However, due to removing the sign bit 6b from coefficient 4c, no information is lost in the data stream.

Thus, the processor may append a further bit to an absolute value of a non-zero coefficient in the groups of coefficients. Alternatively, the further bit may be appended to a coefficient that is in a different group of coefficients than the zero coefficient where the sign information is omitted from encoding. Thus, the processor may append the further bit to an absolute value of a non-zero coefficient in the groups of coefficients.

The respective processor in the decoder may determine a further bit for an absolute value of one of a non-zero coefficient in the group(s) of coefficients.

Furthermore the encoding and decoding processor may determine the different coefficient c where an additional bit is appended in the group of coefficients using $c = \left(a + \frac{g}{2}\right) mod\ g$ or $g = (a + 1) mod\ g$ wherein a refers to the position of the zero-coefficient within the group of coefficients and $g$ refers to the total number of coefficients within the group of coefficients.

More generally, instead of the formulas described above, the coefficient may be determined by the formula $c = (a + k)\ mod\ g.$ Here, the variable $k$ refers to the smallest integer value where a coefficient c is non-zero.

According to embodiments, the processor may append a further bit to an absolute value of the different coefficient, wherein the coefficient is chosen as a non-zero coefficient following the zero-coefficient in the group of coefficients. This may be performed by both, the encoder and the decoder. Basically, this embodiment refers to the last formula described for determining the coefficient c.

A respective data stream comprises encoded values representing a group of coefficients representing frequency components of a digital image representation. The data stream may comprise additional information for a coefficient of the group of coefficients if a coefficient of the group of coefficients is equal to zero and where a sign of the zero coefficient is omitted in the data stream. More specifically, the additional information may be, an additionally significant bit below the quantization threshold. This bit may be characterized in that coefficients within the group of coefficients are represented by a different number of bits representing the respective coefficients.

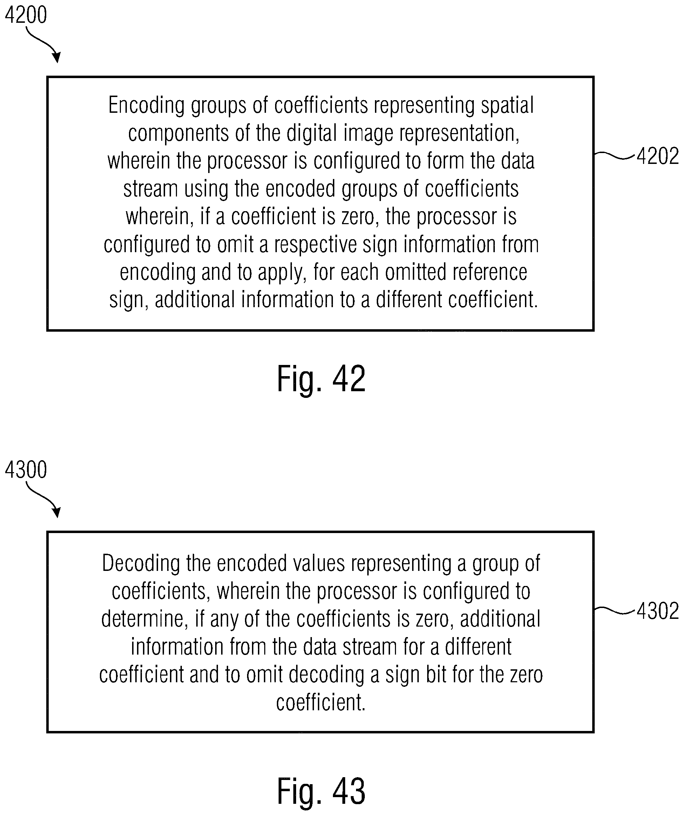

Fig. 42 shows a schematic block diagram of a method 4200 for at least partially encoding a digital image representation into a data stream. The method 4200 comprises a step 4202 of encoding groups of coefficients representing frequency components of the digital image representation, wherein the processor is configured to form the data stream using the encoded groups of coefficients wherein, if a coefficient is zero, the processor is configured to omit a respective sign information from encoding and to apply, for each omitted reference sign, additional information to a different coefficient.

Fig. 43 shows a schematic block diagram of a method 4300 for at least partially decoding a digital image representation from a data stream. The method 4300 comprises a step 4302 of decoding the encoded values representing a group of coefficients, wherein the processor is configured to determine, if any of the coefficients is zero, additional information from the data stream for a different coefficient and to omit decoding a sign bit for the zero coefficient.

Hardware-friendly optimization of sign encoding

Problem formulation

As explained in the general concept, from an information point of view a sign bit only needs to be transmitted, when the quantized coefficient value is unequal to zero. Unfortunately, this may increase the critical path for hardware implementations in the decoder. This holds in particular, when processing multiple coefficients in parallel. The critical path may refer to the length of the computation path to be computed within one clock cycle or between two samples.

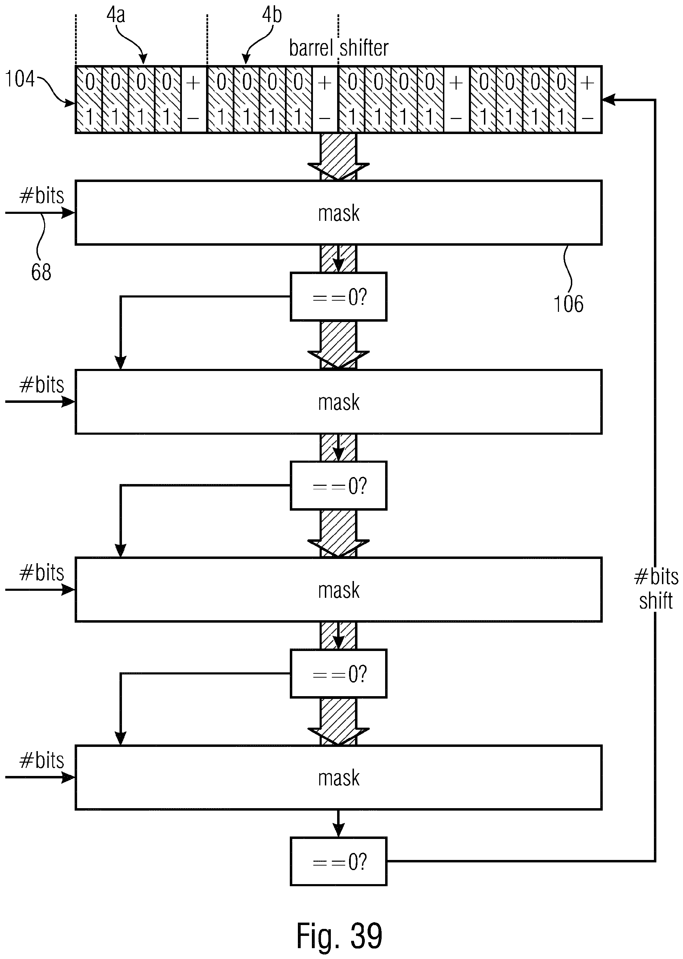

Fig. 39 illustrates this situation when processing four coefficients in parallel. The barrel shifter 104 outputs the bits to decode next. Based on the number of remaining bit planes 68, the bits describing the absolute value of the first coefficient needs to be extracted by a mask 106. Then the decoder can check whether the coefficient is zero or needs a sign bit. Only at this point in time the decoder knows where to find the next coefficient.

Due to these dependencies, it takes very long time until the barrel shifter 104 knows how many bits to shift. Given that the barrel shifter is very huge, this is disastrous for high speed hardware implementations.

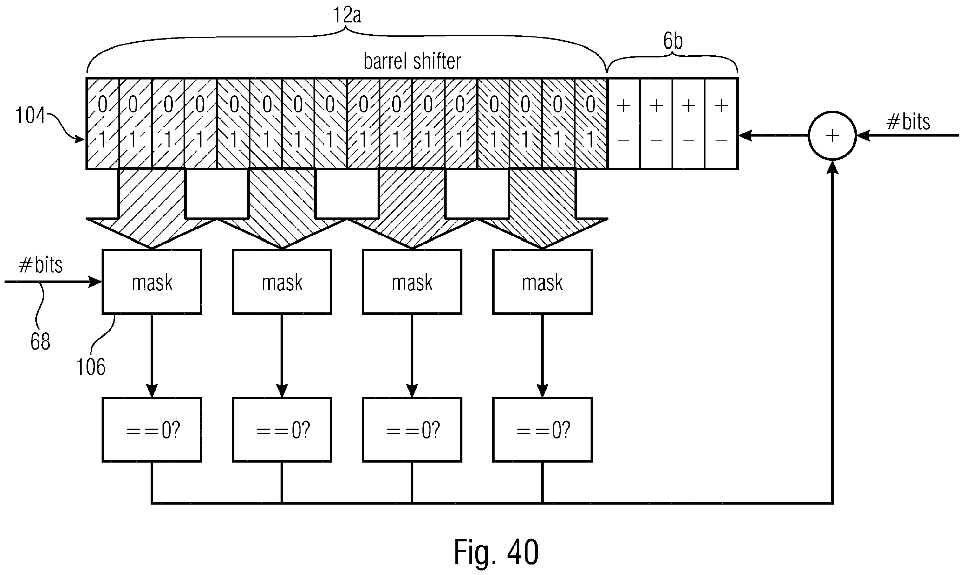

This can be improved by first coding all value bits, and then all sign bits. The resulting critical path is much smaller as illustrated in Fig. 40, since now all absolute values of the coefficient values can be decoded in parallel. But still the barrel-shifter only knows the number of bits to shift after having decoded all coefficient values. Given that the barrel shifter is very huge, this is critical for high-speed implementations.

Given that precise sign encoding also complicates refinement coding as explained with respect to the sixth concept, the following section presents an alternative method, that on the one hand removes the sign from the critical path, but on the other hand can still provide better image quality than when signaling useless sign bits.

Reuse of sign bit for coefficient refinement

Whenever a coefficient value is zero, transmission of a sign bit is useless and hence reduces achievable coding efficiency. This can be avoided by signaling different information than the sign bit of the zero coefficient in the bit position that has been reserved for this purpose.

Given that sign bits are only emitted for group of coefficients having at least one non-zero coefficient, useless sign bits within a group of coefficients can be used to add another least significant bit for another coefficient in the group as illustrated in Fig. 41.

Fixed relation between sign bit and coefficient to refine

In this variant, there is a fixed relation between the position of the sign bit and the coefficient to refine. For instance, the sign bit at position $a$ can be used to refine coefficient number

$$\left(a + \frac{g}{2}\right) \bmod g$$

in case this coefficient is unequal to zero, and where $g$ is the overall number of coefficients within the group. While this is simple to implement, the sign bit is still wasted when the coefficient to refine is zero.

Dynamic relation between sign bit and coefficient to refine

In this variant, the next non-zero coefficient is refined. Let a be the position of the sign bit, then both encoder and decoder search for the smallest $k$, such that coefficient $(a + k) \bmod g$ is unequal to zero. This coefficient is then refined with an additional least significant bit.

Furthermore, a computer program may perform the methods according to Figs. 15a, 15b, 16a, 16b, 20, 21, 25, 26, 28, 29, 33, 34, 37, 38, 42, 43 when running on a computer. The computer program may be stored on a computer-readable digital storage medium.

Further embodiments of the invention relate to the following examples:

1. Encoder for at least partially encoding a 2-dimensional digital image representation into a data stream, wherein the 2-dimensional digital image representation comprising groups of coefficients representing frequency components of the digital image representation, each group comprising at least two coefficients of frequency components, wherein the groups are arranged in a 2-dimensional array.

the encoder comprising a processor configured to generate the data stream using differential encoding in accordance with a relevance order of the groups, wherein the encoder is configured to signal a stop of encoding if a predefined relevance threshold is reached.

2. Encoder according to claim 1, wherein at least one differential encoding uses groups from different rows and columns of the 2-dimensional array.

3. Encoder for at least partially encoding a 2-dimensional digital image representation into a data stream, wherein the 2-dimensional digital image representation comprising groups of coefficients representing frequency components of the digital image representation, each group comprising at least two coefficients of frequency components, wherein the groups are arranged in a 2-dimensional array. wherein at least one differential encoding uses groups from different rows and columns of the 2-dimensional array.

4. Decoder for at least partially decoding a data stream of a 2-dimensional digital image representation, wherein the 2-dimensional digital image representation comprising groups of coefficients representing frequency components of the digital image representation, each group comprising at least two coefficients of frequency components, wherein the groups are arranged in a 2-dimensional array; wherein the data stream comprises encoded values representing the respective groups, the decoder comprising a processor configured to decode the encoded values in accordance with a relevance order of the groups, wherein the decoder is configured apply zeros until a predetermined size of the encoded 2-dimensional array is reached if a stop signal is obtained from the data stream.

5. Decoder according to claim 4, wherein at least one value is decoded using encoded values of groups from different rows and columns of the 2-dimensional array.

6. Decoder for at least partially decoding a data stream of a 2-dimensional digital image representation, wherein the 2-dimensional digital image representation comprising groups of coefficients representing frequency components of the digital image representation, each group comprising at least two coefficients of frequency components, wherein the groups are arranged in a 2-dimensional array; wherein the data stream comprises encoded values representing the respective groups, wherein at least one value is decoded using encoded values of groups from different rows and columns of the 2-dimensional array.

7. Encoder for at least partially encoding a digital image representation into a data stream, the encoder comprising:

a processor configured for processing groups of coefficients representing frequency components of the digital image representation, wherein the processing comprises a differential encoding of consecutive groups using an absolute difference of bits representing the coefficients of a first group of the consecutive groups and a second group of the consecutive groups, and a respective sign of the difference; wherein the encoder is configured to form the data stream using the absolute difference of bits and configured to use the sign of the difference or to omit the sign of the difference if the sign is deducable by the decoder without signaling in the data stream.

8. Decoder for at least partially decoding a data stream of a digital image representation, wherein the data stream comprises encoded values representing differentially encoded groups of coefficients representing frequency components of the digital image representation, the encoded values comprising an absolute difference of consecutive groups of coefficients; the decoder comprising, a processor configured to decode the encoded values and to obtain a sign of the difference from the data stream if a respective value is present in the data stream or to calculate the sign if the sign is deducable by the decoder without signaling in the data stream.

9. Decoder of claim 8, comprising a validator configured to validate the data stream using the absolute difference of consecutive groups.

10. Encoder for at least partially encoding a digital image representation into a data stream of data words comprising at most m bits, the encoder comprising a processor configured for processing groups of coefficients representing frequency components of the digital image representation, wherein the processing comprises a differential encoding of consecutive groups using an absolute difference of bits representing the number of remaining bits of a coefficients of a first group of the consecutive groups wherein the encoder is configured to form the data stream using the processed groups of coefficients using a first encoding algorithm if a value of a respective absolute difference is below a predetermined threshold value or, if the value is above the predetermined threshold value, to perform a different encoding with a second encoding algorithm different from the first encoding algorithm to reduce the number of bits used to represent the absolute difference.

11. Decoder for at least partially decoding a data stream of a digital image representation, wherein the data stream comprises data words comprising at most m bits:

wherein the data stream comprises values representing groups of coefficients representing frequency components of the digital image representation, wherein consecutive groups are differentially encoded using an absolute difference of bits representing the number of remaining bits of a coefficients of a first group of the consecutive groups,
the decoder comprising a processor configured for decoding the data stream using a first decoding algorithm if a value of a respective absolute difference is below a predetermined threshold value or, if the value is above the predetermined threshold value, to perform a different decoding with a second decoding algorithm different from the first encoding algorithm.

12. Encoder for encoding a compressed data stream, comprising
an encoding stage configured to generate, by encoding, the compressed data stream comprising differentially encoded coefficients representing frequency components of a digital image representation, wherein the encoding stage is configured to encode the compressed data stream depending on a quantization factor used to compress the coefficients; and
a value encoder configured to encode remaining bits below the quantization factor;
a bit budget determiner configured to determine a difference between a bit budget used for differential encoding and a maximum available bit budget to determine a remaining bit budget;
a multiplexer configured to append encoded remaining bits below the quantization factor to the encoded compressed data stream to reduce the remaining bit budget.

13. Decoder for decoding a compressed data stream, comprising
a decoding stage configured to generate, by decoding, the compressed data stream comprising differentially encoded coefficients representing frequency components of a digital image representation, wherein the decoding stage is configured to decode the compressed data stream depending on a quantization factor used to compress the coefficients; and
a bit budget determiner configured to determine a difference between a bit budget used for differential decoding and a maximum available bit budget to determine a remaining bit budget equal to a bit budged filled with encoded remaining bits below the quantization factor;
a value decoder configured to decode, depending on the remaining bit budget, the encoded remaining bits below the quantization factor.

14. Encoder for at least partially encoding a digital image representation into a data stream, the encoder comprising:

a processor configured for processing groups of coefficients representing frequency components of the digital image representation, wherein the encoder is configured to form the data stream using the processed groups of coefficients wherein, if a coefficient is zero, a respective sign information is omitted and to applying for each omitted reference sign additional information to a different coefficient.

15. Decoder for at least partially decoding a data stream of a digital image representation, wherein the data stream comprises encoded values representing encoded groups of coefficients representing frequency components of the digital image representation,
the decoder comprising a processor configured to decode the encoded values representing a group of coefficients, wherein the processor is configured to determine additional information from the data stream for a coefficient from a sign bit of a coefficient that is equal to zero.

16. Encoder for at least partially encoding a digital image representation into a data stream, the encoder comprising:

a processor configured for processing groups of coefficients representing frequency components of the digital image representation, each group comprising at least two coefficients of frequency components, wherein the processing comprises quantizing the groups;
wherein the encoder is configured to form the data stream using for each group a value indicating a number of leading zero bit planes, a quantization level and a number of uncompressed bit planes different from the zero bit planes.

17. Decoder for at least partially decoding a data stream of a digital image representation, wherein the data stream comprises encoded values representing the processed groups and for each group a number of encoded leading zero bit planes and an encoded quantization level;
the decoder comprising a processor configured to decode the encoded value of the number of leading zero bit planes, and the encoded quantization level and the uncompressed bit planes different from the zero bit planes to obtain the digital image representation.

18. Encoder for at least partially encoding a digital image representation into a data stream, the encoder comprising:

a processor configured for processing groups of coefficients representing frequency components of the digital image representation, each group comprising at least two coefficients of frequency components, wherein the processing comprises identifying a first predefined bit pattern and a second predetermined bit pattern within the groups of coefficients,
wherein the encoder is configured to generate the data stream using the processed groups, wherein the second identified predefined bit pattern is replaced by additional information such that the first predefined pattern indicates the presence of the further information.

19. Decoder for at least partially decoding a data stream of a digital image representation, wherein the data stream comprises encoded values of groups of coefficients representing frequency components of the digital image representation, each group comprising at least two coefficients of frequency components, and a first predefined bit pattern and a second predefined bit pattern within the groups of coefficients,
wherein the decoder is configured to decode the encoded values and to extract additional information from the second predetermined bit pattern which is indicated by the first predefined bit pattern.

Even though the above described embodiments comprise varying specific features, the main components of the encoder and decoder of the embodiments may be mutually applicable to within all embodiments.

It is to be understood that in this specification, the signals on lines are sometimes named by the reference numerals for the lines or are sometimes indicated by the reference numerals themselves, which have been attributed to the lines. Therefore, the notation is such that a line having a certain signal is indicating the signal itself. A line can be a physical line in a hardwired implementation. In a computerized implementation, however, a physical line does not exist, but the signal represented by the line is transmitted from one calculation module to the other calculation module.

Although the present invention has been described in the context of block diagrams where the blocks represent actual or logical hardware components, the present invention can also be implemented by a computer-implemented method. In the latter case, the blocks represent corresponding method steps where these steps stand for the functionalities performed by corresponding logical or physical hardware blocks.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The inventive transmitted or encoded signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive method is, therefore, a data carrier (or a non-transitory storage medium such as a digital storage medium, or a computer-readable medium) comprising, recorded thereon, the computer program for performing one of the methods described herein. The data carrier, the digital storage medium or the recorded medium are typically tangible and/or non-transitory.

A further embodiment of the invention method is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] AMBROISE RENAUD ; BUYSSCHAERT CHARLES ; PELLEGRIN PASCAL ; ROUVROY GAEL, "Method and Device for Display Stream Compression", US9332258 BB

[2] AMBROISE RENAUD ; BUYSSCHAERT CHARLES ; PELLEGRIN PASCAL ; ROUVROY GAEL, "Method and Device for display stream compression", EP2773122 A1

[3] Jean-Baptiste Lorent, "TICO Lightweight Codec Used in IP Networked or in SDI Infrastructure", SMPTE RDD 35:2016

[4] Toshiaki Kojima, "LLVC - Low Latency Video Codec for Network Transfer", SMPTE RDD 34:2015

[5] J. Kim and C. M. Kyung, "A Lossless Embedded Compression Using Significant Bit Truncation for HD Video Coding", IEEE Transactions on Circuits and Systems for Video Technology, 2010

**Claims**

1. Encoder (40) for at least partially encoding a 2-dimensional digital image representation into a compressed data stream, the encoder (40) comprising:

   a rate control unit configured to determine a difference between a bit budget used for differential encoding groups of coefficients representing spatial components of the digital image representation and a maximum available bit budget to determine a remaining bit budget; and
   a processor configured to generate, by encoding, the compressed data stream comprising differentially encoded groups of coefficients representing spatial components of the digital image representation, wherein the processor is configured to encode the compressed data stream above a quantization factor used to compress the groups of coefficients and further to encode one or more remaining bits below the quantization factor according to the remaining bit budget and to reduce the remaining bit budget respectively.

2. Encoder (40) according to claim 1, wherein the rate control unit is configured to calculate the quantization factor using the maximum available bit budget, wherein the rate control unit is configured to calculate the quantization factor by choosing the smallest quantization factor to be applicable to the groups of coefficients such that encoding the groups of coefficients using the smallest quantization factor uses a bit budged for differential encoding within the maximum available bit budget.

**3.** Encoder (40) according to any of the preceding claims,
wherein the rate control unit is configured to calculate a bit budget used to at least partially encode a bit plane of a group of the groups of coefficients, wherein the bit plane refers to bits of the group below the quantization factor;
wherein the processor is configured to at least partially encode the bit plane and to determine whether the bit budget used to differentially encode the bit plane is smaller than the remaining bit budget and to include the encoded further bit plane to the encoded compressed data stream when the remaining bit budget after appending the encoded further bit plane remains positive.

**4.** Encoder (40) according to any of the preceding claims, wherein the processor is configured to encode a bit plane comprising bits below the quantization factor using a value and a sign bit if a respective group comprises a value of zero and omitting the sign bit and using only the value bit if the respective group comprises a value different from zero and further configured to include the value and the sign bit or only the value bit into the encoded compresses data stream.

**5.** Encoder (40) according to any of the preceding claims, wherein the processor is configured to omit encoding a sign bit and to increase the remaining bit budget by one bit if, after adding a bit plane, a respective group of coefficients remains zero.

**6.** Encoder (40) according to any of the preceding claims, wherein the processor is configured to determine, based on the bit budget used for differential encoding groups of coefficients, a difference between a size of a multiple of an encoding pattern and to include encoded remaining bits to reduce the difference.

**7.** Encoder (40) according to any of the preceding claims, wherein the processor is configured to perform the differential encoding by determining a deviation from a number of informative bit planes of a preceding group to a current group and to encode the deviation, wherein informative bit planes of the preceding group and informative bit planes the current group are encoded independently.

**8.** Encoder (40) according to any of the preceding claims, wherein the processor is configured to generate the data stream

using difference between a number of informative bit planes of a preceding group to a current group for all encoded groups of coefficients first, encoded informative bit planes of all encoded groups second, and unless the remaining bit budget is positive, remaining bits below the quantization factor third; or
using differences between a number of informative bit planes of a preceding group to a current group for all encoded groups of coefficients first, and unless the remaining bit budget is positive, alternating encoded informative bit planes of all encoded groups and the remaining bits below the quantization factor.

**9.** Decoder (60) for at least partially decoding a 2-dimensional digital image representation from a compressed data stream, comprising
a processor configured to generate, by decoding, the 2-dimensional digital image representation from the compressed data stream above a quantization factor used to compress the coefficients, the data stream comprising values representing differentially encoded groups of coefficients representing spatial components of a digital image representation; and
a bit budget determiner configured to determine a difference between a bit budget used for differential encoding and a maximum available bit budget to determine a remaining bit budget related to a bit budged used in the compressed data stream filled with encoded remaining bits below the quantization factor;
a value decoder (60) configured to decode, depending on the remaining bit budget, the encoded remaining bits below the quantization factor.

**10.** Decoder (60) according to claim 9, wherein the processor is configured to determine the quantization factor using the maximum available bit budget and a deviation of a number of informative bit planes of a preceding group to a current group.

**11.** Decoder (60) according to any of claims 9 or 10,
wherein the value decoder is configured to calculate a bit budget used to at least partially decode a bit plane of a group of the groups of coefficients, wherein the bit plane refers to bits of the group below the quantization factor; and wherein the value decoder is configured to differentially decode the bit plane if the bit budget used to at least partially decode the bit plane is smaller than the remaining bit budget.

**12.** Decoder (60) according to any of claims 9 to 11, wherein the value decoder (60) is configured to decode a bit plane comprising bits below the quantization factor using a value and a sign bit if a respective group comprises a value of zero and omitting decoding the sign bit and using only the value bit if the respective group comprises a value different from zero.

**13.** Decoder (60) according to any of claims 9 to 12, wherein the value decoder (60) is configured to omit decoding a sign bit and to increase the remaining bit budget by one bit if, after adding a bit plane, a respective group of coefficients remains zero.

**14.** Decoder (60) according to any of claims 9 to 13, wherein the processor is configured to perform the differential decoding by determining a deviation from a number of informative bit planes of a preceding group to a current group, wherein informative bit planes of the preceding group and informative bit planes of the current group are decoded independently.

**15.** Decoder (60) according to any of claims 9 to 14, wherein the decoder (60) is configured to decode the data stream

using differences between a number of informative bit planes of a preceding group to a current group for all encoded groups of coefficients first, encoded informative bit planes of all encoded groups second, and unless the remaining bit budget is positive, remaining bits below the quantization factor third; or
using differences between a number of informative bit planes of a preceding group to a current group for all encoded groups of coefficients first, and unless the remaining bit budget is positive, alternating encoded informative bit planes of all encoded groups and the remaining bits below the quantization factor.

**16.** Data stream comprising differentially encoded groups of coefficients representing spatial components of a digital image representation, the groups of coefficients being quantized using a quantization factor and wherein the differential encoding is represented by a difference between a number of informative bit planes of a preceding group to a current group and encoded informative bit planes of the preceding group and encoded informative bit planes of the current group encoded independently from the other group, wherein the informative bit planes represent bits of the coefficients above the quantization factor and wherein, for the current group, the difference indicates a number of informative bit planes different from the actual number of encoded informative bit planes of the consecutive group.

**17.** Method for at least partially encoding a 2-dimensional digital image representation into a compressed data stream, the method comprising:

determining a difference between a bit budget used for differential encoding groups of coefficients representing spatial components of the digital image representation and a maximum available bit budget to determine a remaining bit budget; and
generating, by encoding, the compressed data stream comprising differentially encoded groups of coefficients representing spatial components of the digital image representation, wherein the processor is configured to encode the compressed data stream above a quantization factor used to compress the groups of coefficients and further to encode one or more remaining bits below the quantization factor according to the remaining bit budget and to reduce the remaining bit budget respectively.

**18.** Method for at least partially decoding a 2-dimensional digital image representation from a compressed data stream, comprising
generating, by decoding, the 2-dimensional digital image representation from the compressed data stream above a quantization factor used to compress the coefficients, the data stream comprising values representing differentially encoded groups of coefficients representing spatial components of a digital image representation; and
determining a difference between a bit budget used for differential encoding and a maximum available bit budget to determine a remaining bit budget related to a bit budged used in the compressed data stream filled with encoded remaining bits below the quantization factor;
decoding, depending on the remaining bit budget, the encoded remaining bits below the quantization factor.

**19.** Computer program for performing, when running on a computer, the method according to claim 17 or 18.

Fig. 1

Fig. 2

EP 3 291 559 A1

26

4      4

| $f_{0,0}$ | $f_{0,1}$ | $f_{0,2}$ | $f_{0,3}$ |
|---|---|---|---|
| $f_{1,0}$ | $f_{1,1}$ | $f_{1,2}$ | $f_{1,3}$ |
| $f_{2,0}$ | $f_{2,1}$ | $f_{2,2}$ | $f_{2,3}$ |
| $f_{3,0}$ | $f_{3,1}$ | $f_{3,2}$ | $f_{3,3}$ |

Fig. 3

28

2

2a    2b

| $F_{0,0}$ | $F_{0,1}$ | $F_{0,2}$ | $F_{0,3}$ |
|---|---|---|---|
| $F_{1,0}$ | $F_{1,1}$ | $F_{1,2}$ | $F_{1,3}$ |
| $F_{2,0}$ | $F_{2,1}$ | $F_{2,2}$ | $F_{2,3}$ |
| $F_{3,0}$ | $F_{3,1}$ | $F_{3,2}$ | $F_{3,3}$ |

Fig. 4

30

28
28b
28a
2b
2a

| $F_{0,3}$ | $F_{0,2}$ | $F_{0,1}$ | $F_{0,0}$ |
| $F_{1,3}$ | $F_{1,2}$ | $F_{1,1}$ | $F_{1,0}$ |
| $F_{2,3}$ | $F_{2,2}$ | $F_{2,1}$ | $F_{2,0}$ |
| $F_{3,3}$ | $F_{3,2}$ | $F_{3,1}$ | $F_{3,0}$ |

block 1

| $F_{0,3}$ | $F_{0,2}$ | $F_{0,1}$ | $F_{0,0}$ |
| $F_{1,3}$ | $F_{1,2}$ | $F_{1,1}$ | $F_{1,0}$ |
| $F_{2,3}$ | $F_{2,2}$ | $F_{2,1}$ | $F_{2,0}$ |
| $F_{3,3}$ | $F_{3,2}$ | $F_{3,1}$ | $F_{3,0}$ |

block 0

workgroup

Fig. 5

Fig. 6

EP 3 291 559 A1

28a

2a  2b

| LL2 | LH2 | LH1 | LH1 |
| HL2 | HH2 | LH1 | LH1 |
| HL1 | HL1 | HH1 | HH1 |
| HL1 | HL1 | HH1 | HH1 |

Fig. 7

40

2-dimensional
digital image

66

spatial
transform
unit

2-dimensional digital
image representation

44

42

processor

data stream

46

50
(optional)

Fig. 8

Fig. 9

Fig. 10

Fig. 11

Fig. 12

60

62

data stream

64

processor

2-dimensional digital
image representation

spatial
transform
unit

2-dimensional
digital image

46

44

16

## Fig. 13

46

44

70

68

difference δ

encoded values

## Fig. 14

1500a

Generating the data stream (46) using differential encoding in accordance with a relevance order of the groups, wherein the processor (42) is configured to signal a stop of encoding if a predefined relevance threshold in the relevance order is reached.

~1502a

## Fig. 15a

1500b

Generating the data stream (46) using differential encoding, wherein the processor is configured to perform at least one differential encoding using groups from different rows and columns of the 2-dimensional array.

~1502b

## Fig. 15b

1600a

Decoding the encoded values (70) in accordance with a relevance order of the groups, wherein the decoder is configured apply zeros until a predetermined size of the encoded image representation (44) is reached if a stop signal is obtained from the data stream (46).

~1602a

## Fig. 16a

1600b

Decoding the encoded values (70), wherein at least one value is decoded using encoded values of groups from different rows and columns of the 2-dimensional array.

~1602b

## Fig. 16b

| $\delta$ | output bit |
|---|---|
| 0 | 0 |
| $\delta > 0$ | 1, $(\delta - 1)$ 0-bits, 1, 0 |
| $\delta < 0$ | 1, $(-\delta - 1)$ 0-bits, 1, 1 |

## Fig. 17

| value of $n_1$ | possible values of $\delta$ |
|---|---|
| 0 | $-\epsilon \leq \delta \leq n$ |
| 1 | $-1 - \epsilon \leq \delta \leq n - 1$ |
| 2 | $-2 - \epsilon \leq \delta \leq n - 2$ |
| ... | ... |
| $n - 1$ | $-n + 1 - \epsilon \leq \delta \leq 1$ |
| $n$ | $-n - \epsilon \leq \delta \leq 0$ |

## Fig. 18

## Fig. 19

2000

Processing groups of coefficients (4) representing spatial components of the digital image representation (44), wherein the processing comprises a differential encoding of consecutive groups (2) using an absolute difference (68) of bits representing the coefficients (4) of a first group of the consecutive groups (2) and a second group (2) of the consecutive groups, and a respective sign (6b) of the difference (68); ~2002

Forming the data stream (46) using the absolute difference (68) of bits and configured to use, depending on the bits representing the coefficients (4) of a first group of the consecutive groups [n₁] and the absolute difference (68), the sign of the difference (68) or to omit using the sign (6b) of the difference. ~2004

## Fig. 20

2100

Decoding the encoded values (70) and to obtain, depending on the number of bits [n₁] representing the coefficients (4) of a first group (2) of the consecutive groups and the absolute difference (68), a sign (6b) of the difference (68) from the data stream (46) or to calculate the sign (6b) of the difference (68) ~2102

## Fig. 21

| | | t_delta | | | | | | | | |
|---|---|---|---|---|---|---|---|---|---|---|
| | | 4 | 5 | 6 | 7 | 8 | 9 | 10 | 11 | 12 |
| n | 8 | 9 | 9 | 10 | 10 | 10 | 10 | 10 | 10 | 10 |
| | 9 | 9 | 10 | 10 | 11 | 11 | 11 | 11 | 11 | 11 |
| | 10 | 9 | 10 | 11 | 11 | 12 | 12 | 12 | 12 | 12 |
| | 11 | 9 | 10 | 11 | 12 | 12 | 13 | 13 | 13 | 13 |
| | 12 | 10 | 10 | 11 | 12 | 13 | 13 | 14 | 14 | 14 |
| | 13 | 10 | 11 | 11 | 12 | 13 | 14 | 14 | 15 | 15 |
| | 14 | 10 | 11 | 12 | 12 | 13 | 14 | 15 | 15 | 16 |
| | 15 | 10 | 11 | 12 | 13 | 13 | 14 | 15 | 16 | 16 |
| | 16 | 10 | 11 | 12 | 13 | 14 | 14 | 15 | 16 | 17 |
| | 17 | 10 | 11 | 12 | 13 | 14 | 15 | 15 | 16 | 17 |
| | 18 | 10 | 11 | 12 | 13 | 14 | 15 | 16 | 16 | 17 |
| | 19 | 10 | 11 | 12 | 13 | 14 | 15 | 16 | 17 | 17 |
| | 20 | 11 | 11 | 12 | 13 | 14 | 15 | 16 | 17 | 18 |

## Fig. 22

Fig. 23

Fig. 24

2500

Processing groups of coefficients (4) representing spatial components of the digital image representation, wherein the processing comprises a differential encoding of consecutive groups using an absolute difference of bit planes representing the number of informative bit planes of a coefficients (4) of a first group (2) to a second group (2) of the consecutive groups;

2502

Forming the data stream (46) using the processed groups of coefficients (4) using a first encoding algorithm if a value of a respective absolute difference is below a predetermined threshold value [$t_\delta$] and, if the value is above the predetermined threshold value, to perform a different encoding with a second encoding algorithm different from the first encoding algorithm to reduce the number of bits of a data word used to represent the absolute difference of the first group (2) and the second group.

2504

# Fig. 25

2600

Decoding the data stream (46) using a first decoding algorithm if a value of a respective absolute difference is below a predetermined threshold value [$t_\delta$] and, if the value is above the predetermined threshold value, to perform a different decoding with a second decoding algorithm different from the first encoding algorithm.

2602

# Fig. 26

| | 4a | 4b | | | | | | | |
|---|---|---|---|---|---|---|---|---|---|
| 120 — # remaining bit planes | 1 | 4 | 0 | 3 | 4 | 4 | 0 | 3 | 1 |
| 120' — # leading zero bit planes | 4 | 1 | 5 | 2 | 1 | 1 | 5 | 2 | 4 |
| 68 — $\delta_{rem}$ | 1 | 3 | -4 | 3 | 1 | 0 | -4 | 3 | -2 |
| 68' — $\delta_{zero}$ | -1 | -3 | 4 | -3 | -1 | 0 | 4 | -3 | 2 |
| 12 — encoded and decoded bit planes | 0 | 0 | 0 | 0 | 0 | 0 | 0 | 0 | 0 |
| | 0 | 1 | 0 | 0 | 1 | 1 | 0 | 0 | 0 |
| | 0 | 0 | 0 | 1 | 0 | 1 | 0 | 1 | 0 |
| | 0 | 1 | 0 | 0 | 0 | 0 | 0 | 0 | 0 |
| | 1 | 0 | 0 | 0 | 0 | 0 | 0 | 0 | 1 |
| 8 — eliminated by quantization | 0 | 0 | 0 | 0 | 0 | 0 | 1 | 0 | 0 |
| | 1 | 1 | 1 | 0 | 1 | 1 | 0 | 0 | 0 |

Fig. 27

EP 3 291 559 A1

2800

Processing groups of coefficients representing spatial components of the digital image representation, each group comprising at least two coefficients of spatial components, wherein the processing comprises quantizing the groups;

2802

Forming the data stream (46) using for at least one group a number of uncompressed bit planes different from the zero bit planes. And for each group a value indicating a number of leading zero bit planes $[n_x]$ and a quantization threshold $[n_{qx}]$

2804

## Fig. 28

2900

Decoding the encoded value the number of differentially encoded leading zero bit planes, and the encoded quantization threshold to obtain the digital image representation.

2902

## Fig. 29

40

76

quantization
factor

ratae
control

8

42

16

frequency
transform

44

coefficient
buffer

4

GCLI
coding

46a

bit
stuffing

46

50

78

80

82

Fig. 30

40

76

quantization
factor

ratae
control

bit budget

86

8

42

16

frequency
transform

44

coefficient
buffer

4

GCLI
coding

46a

bit
stuffing

46

50

78

80

84

number of
inserted bits

82

Fig. 31

60

76'

bit budget
recovery

86

number of
removed bits

84'

inverse
bit stuffing

GCLI
decoding

inverse
frequency
transform

46

82'

90

46a

44

16

84

80'

8

quantization
factor

marker
interpre-
tation

88

62

Fig. 32

3300

Generating the data stream (46) using the processed groups, and the second bit pattern to the data stream (46) to indicate additional information using the second bit pattern and wherein the encoder (40) is configured to reduce the available bit budget if the second bit pattern is included.

3302

## Fig. 33

3400

Determining a remaining bit budged available in the data stream (46) by omitting to count the second predefined bit pattern, and the replaced bit; and

decoding the encoded values and to extract additional information from the predefined bit pattern.

3402

## Fig. 34

Fig. 35

Fig. 36

EP 3 291 559 A1

3700

Determining a difference between a bit budget
used for differential encoding groups of coefficients
representing spatial components of the digital image
representation and a maximum available bit budget
to determine a remaining bit budget

3702

Generating, by encoding, the compressed data stream
comprising differentially encoded groups of
coefficients representing spatial components of the
digital image representation, wherein the processor
is configured to encode the compressed data stream
above a quantization factor used to compress the
groups of coefficients and further to encode one or
more remaining bits below the quantization factor
according to the remaining bit budget and to reduce
the remaining bit budget respectively

3704

Fig. 37

**3800**

| Generating, by encoding, the 2-dimensional digital image representation from the compressed data stream above a quantization factor used to compress the coefficients, the data stream comprising values representing differentially encoded groups of coefficients representing spatial components of a digital image representation; and | 3802 |

| Determining a difference between a bit budget used for differential encoding and a maximum available bit budget to determine a remaining bit budget related to a bit budged used in the compressed data stream filled with encoded remaining bits below the quantization factor | 3804 |

| Decoding, depending on the remaining bit budget, the encoded remaining bits below the quantization factor | 3806 |

## Fig. 38

Fig. 39

Fig. 40

EP 3 291 559 A1

Fig. 41

4200

Encoding groups of coefficients representing spatial
components of the digital image representation,
wherein the processor is configured to form the data
stream using the encoded groups of coefficients
wherein, if a coefficient is zero, the processor is
configured to omit a respective sign information from
encoding and to apply, for each omitted reference
sign, additional information to a different coefficient.

~4202

Fig. 42

4300

Decoding the encoded values representing a group of
coefficients, wherein the processor is configured to
determine, if any of the coefficients is zero, additional
information from the data stream for a different
coefficient and to omit decoding a sign bit for the zero
coefficient.

~4302

Fig. 43

**European Patent Office**

Europäisches Patentamt
European Patent Office
Office européen des brevets

## EUROPEAN SEARCH REPORT

Application Number

EP 16 19 3869

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/091930 A2 (ZORAN FRANCE [FR]; SHAND MARK [FR]) 19 August 2010 (2010-08-19) | 1-5, 8-13, 15-19 | INV. H04N19/593 H04N19/463 |
| Y | * paragraphs [0014] - [0029] * <br> * paragraphs [0055] - [0070] * <br> * figures 8,9,12 * | 6,7,14 | H04N19/132 H04N19/18 H04N19/645 H04N19/124 |
| A | US 2009/074052 A1 (FUKUHARA TAKAHIRO [JP] ET AL) 19 March 2009 (2009-03-19) * paragraphs [0162] - [0248] * * paragraphs [0442] - [0488] * * paragraph [0737] * * figures 44,46 * * paragraph [0361] * | 1-19 | H04N19/194 H04N19/146 H04N19/184 |
| Y | US 2008/101476 A1 (TIAN TAO [US] ET AL) 1 May 2008 (2008-05-01) * paragraph [0059] * | 6 | |
| Y,D | US 2014/247999 A1 (PELLEGRIN PASCAL [BE] ET AL) 4 September 2014 (2014-09-04) | 7,14 | |
| A | * paragraph [0004] * * paragraphs [0015] - [0033] * * paragraphs [0041] - [0044] * | 1-6, 8-13, 15-19 | **TECHNICAL FIELDS SEARCHED (IPC)** <br><br> H04N |
| A | EP 0 863 673 A2 (GEN INSTRUMENT CORP [US]) 9 September 1998 (1998-09-09) * page 3, lines 46-55 * * page 7, lines 17-38 * * figure 5 * | 1-19 | |
| A | US 5 867 602 A (ZANDI AHMAD [US] ET AL) 2 February 1999 (1999-02-02) * column 17, line 55 - column 18, line 55 * * column 35, lines 55-58 * * figure 10 * | 1-19 | |

-/--

The present search report has been drawn up for all claims

| Place of search | Date of completion of the search | Examiner |
|---|---|---|
| The Hague | 23 June 2017 | André, Thomas |

EPO FORM 1503 03.82 (P04C01)

page 1 of 2

Europäisches
Patentamt

European
Patent Office

Office européen
des brevets

## EUROPEAN SEARCH REPORT

Application Number

EP 16 19 3869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/036224 A1 (SRINIVASAN SRIDHAR [US] ET AL) 15 February 2007 (2007-02-15)<br>* paragraphs [0012] - [0019] *<br>----- | 1-19 | |
| A | US 2004/228537 A1 (YEUNG YICK MING [CN] ET AL) 18 November 2004 (2004-11-18)<br>* paragraph [0025] *<br>* paragraphs [0062] - [0077] *<br>----- | 1-19 | |
| A | US 2008/198918 A1 (VAN DER VLEUTEN RENATUS JOSEPH [NL]) 21 August 2008 (2008-08-21)<br>* paragraphs [0025] - [0029] *<br>----- | 1-19 | |

TECHNICAL FIELDS
SEARCHED      (IPC)

The present search report has been drawn up for all claims

| Place of search | Date of completion of the search | Examiner |
|---|---|---|
| The Hague | 23 June 2017 | André, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 16 19 3869

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | | Publication date | Patent family member(s) | | Publication date |
|---|---|---|---|---|---|
| WO 2010091930 | A2 | 19-08-2010 | US | 2011310974 A1 | 22-12-2011 |
| | | | WO | 2010091930 A2 | 19-08-2010 |
| US 2009074052 | A1 | 19-03-2009 | CN | 101133649 A | 27-02-2008 |
| | | | JP | WO2007066709 A1 | 21-05-2009 |
| | | | US | 2009074052 A1 | 19-03-2009 |
| | | | WO | 2007066709 A1 | 14-06-2007 |
| US 2008101476 | A1 | 01-05-2008 | AR | 060168 A1 | 28-05-2008 |
| | | | CN | 101529915 A | 09-09-2009 |
| | | | EP | 2080376 A1 | 22-07-2009 |
| | | | JP | 2010508769 A | 18-03-2010 |
| | | | KR | 20090073189 A | 02-07-2009 |
| | | | TW | 200822631 A | 16-05-2008 |
| | | | US | 2008101476 A1 | 01-05-2008 |
| | | | WO | 2008054841 A1 | 08-05-2008 |
| US 2014247999 | A1 | 04-09-2014 | NONE | | |
| EP 0863673 | A2 | 09-09-1998 | AU | 728469 B2 | 11-01-2001 |
| | | | BR | 9800852 A | 23-11-1999 |
| | | | CA | 2230422 A1 | 07-09-1998 |
| | | | CN | 1198639 A | 11-11-1998 |
| | | | EP | 0863673 A2 | 09-09-1998 |
| | | | JP | H10304364 A | 13-11-1998 |
| | | | NO | 980948 A | 08-09-1998 |
| | | | TW | 373408 B | 01-11-1999 |
| | | | US | 5974184 A | 26-10-1999 |
| US 5867602 | A | 02-02-1999 | CN | 1154043 A | 09-07-1997 |
| | | | CN | 1390044 A | 08-01-2003 |
| | | | CN | 1620142 A | 25-05-2005 |
| | | | CN | 1917561 A | 21-02-2007 |
| | | | DE | 19626600 A1 | 09-01-1997 |
| | | | GB | 2303031 A | 05-02-1997 |
| | | | HK | 1050602 A1 | 27-05-2005 |
| | | | JP | 3792789 B2 | 05-07-2006 |
| | | | JP | 3800551 B2 | 26-07-2006 |
| | | | JP | 4025847 B2 | 26-12-2007 |
| | | | JP | H0927912 A | 28-01-1997 |
| | | | JP | 2003283842 A | 03-10-2003 |
| | | | JP | 2005260980 A | 22-09-2005 |
| | | | JP | 2005278184 A | 06-10-2005 |
| | | | JP | 2005295540 A | 20-10-2005 |
| | | | US | 5867602 A | 02-02-1999 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 19 3869

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | | Publication date | Patent family member(s) | | Publication date |
|---|---|---|---|---|---|
| US 2007036224 | A1 | 15-02-2007 | AU | 2006280178 A1 | 22-02-2007 |
| | | | BR | PI0614766 A2 | 12-04-2011 |
| | | | CA | 2617632 A1 | 22-02-2007 |
| | | | CN | 101243685 A | 13-08-2008 |
| | | | EP | 1922874 A2 | 21-05-2008 |
| | | | JP | 5065272 B2 | 31-10-2012 |
| | | | JP | 2009505496 A | 05-02-2009 |
| | | | KR | 20080042816 A | 15-05-2008 |
| | | | MY | 145286 A | 13-01-2012 |
| | | | NZ | 565593 A | 30-04-2010 |
| | | | TW | I412265 B | 11-10-2013 |
| | | | US | 2007036224 A1 | 15-02-2007 |
| | | | WO | 2007021613 A2 | 22-02-2007 |
| US 2004228537 | A1 | 18-11-2004 | US | 2004228537 A1 | 18-11-2004 |
| | | | US | 2010150463 A1 | 17-06-2010 |
| US 2008198918 | A1 | 21-08-2008 | CN | 101180886 A | 14-05-2008 |
| | | | EP | 1889486 A2 | 20-02-2008 |
| | | | JP | 2008543150 A | 27-11-2008 |
| | | | KR | 20080016881 A | 22-02-2008 |
| | | | US | 2008198918 A1 | 21-08-2008 |
| | | | WO | 2006126121 A2 | 30-11-2006 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9332258 BB

- EP 2773122 A1

**Non-patent literature cited in the description**

- **JEAN-BAPTISTE LORENT.** TICO Lightweight Codec Used in IP Networked or in SDI Infrastructure. *SMPTE RDD,* vol. 35, 2016
- **TOSHIAKI KOJIMA.** LLVC - Low Latency Video Codec for Network Transfer. *SMPTE RDD,* vol. 34, 2015

- **J. KIM ; C. M. KYUNG.** A Lossless Embedded Compression Using Significant Bit Truncation for HD Video Coding. *IEEE Transactions on Circuits and Systems for Video Technology,* 2010